(19) Europäisches Patentamt
European Patent Office
Office européen des brevets

(11) EP 0 883 298 A2

(12) EUROPEAN PATENT APPLICATION

(43) Date of publication:
09.12.1998 Bulletin 1998/50

(51) Int. Cl.[6]: H04N 7/01

(21) Application number: 98110021.7

(22) Date of filing: 02.06.1998

(84) Designated Contracting States:
AT BE CH CY DE DK ES FI FR GB GR IE IT LI LU MC NL PT SE
Designated Extension States:
AL LT LV MK RO SI

(30) Priority: 04.06.1997 JP 146205/97
07.10.1997 JP 290385/97

(71) Applicant: Hitachi, Ltd.
Chiyoda-ku, Tokyo 101-8010 (JP)

(72) Inventors:
- Hirano, Yasuhiro
Hachioji-shi (JP)
- Ishikura, Kazuo
Yokohama-shi (JP)
- Sugiyama, Masato
Yokohama-shi (JP)
- Nakajima, Mitsuo
Yokohama-shi (JP)
- Kurita, Toshiyuki
Yokohama-shi (JP)
- Takata, Haruki
Yokohama-shi (JP)
- Kimura, Shoji
Kawasaki-shi (JP)
- Tsuru, Yasutaka
Yokohama-shi (JP)
- Kanehachi, Takashi
Cardiff, CF 1922S, Wales (GB)
- Matono, Takaaki
Yokohama-shi (JP)

(74) Representative:
Strehl Schübel-Hopf & Partner
Maximilianstrasse 54
80538 München (DE)

# (54) Conversion apparatus for image signals and TV receiver

(57) A system conversion apparatus and method for image signals are disclosed, in which an interlaced scanning image signal S1 is converted into a progressive scanning image signal S2 by an IP converter (1), a block-based motion vector is searched for based on the progressive scanning image signal S2 by a block-based motion vector search unit (5), a motion vector with minimum motion estimation error determined for each mini-block using the block-based motion vector is assigned as a pixel-based motion vector in a mini-block by a pixel-based motion vector generator (6), and an interpolated frame of the image signal is generated using the pixel-based motion vector and a progressive scanning image signal sequence S4 higher in frame frequency is output by a motion compensative interpolated frame generator (7).

FIG. 1

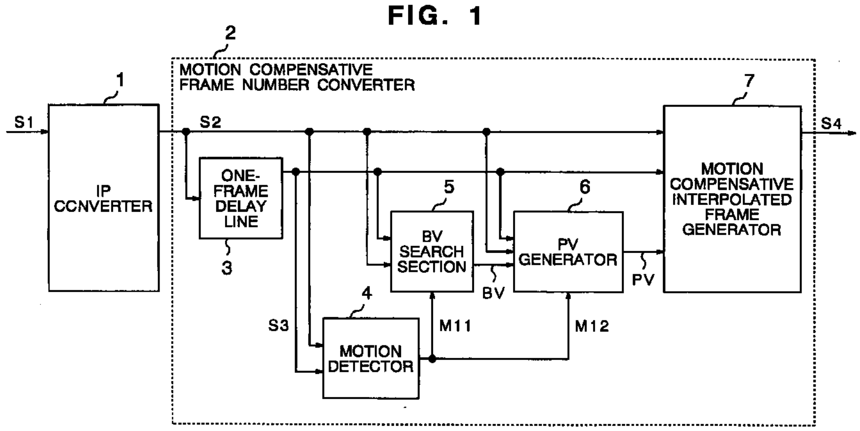


EP 0 883 298 A2

## Description

### BACKGROUND OF THE INVENTION

The present invention relates to a system conversion apparatus for image signals and a television receiver, or more in particular to a system conversion apparatus for image signals and a TV receiver suitable for generating interpolated frames by processing signals for motion compensation and changing the number of frames of the image signal.

The system conversion which is for converting signals between different television systems finds wide applications in program exchange for broadcasting. The system conversion generally requires the conversion of the number of scanning lines and the field frequency, and therefore the resolution is deteriorated. Also, the image quality is deteriorated by motion judder or the like adversely affecting the smoothness of motion image.

In order to prevent these deteriorations, signal processing techniques have been invented such as the adaptive scanning line number/progressive scanning conversion method for converting the number of scanning lines or the motion compensated frame number conversion method for changing the number of frames.

Among these methods, the motion compensated frame number conversion method is to generate an interpolated frame signal by moving the image positions of the preceding and succeeding frames with a motion vector. This method is very effective for removing the motion judder of the moving picture. For this reason, most system conversion apparatuses in the broadcasting world use this method.

A method of motion prediction of the television image, on the other hand, is disclosed in JP-A-7-170496 laid open July 4, 1995 (unexamined Japanese patent publication based on French Patent Publication No.93402188.2 filed September 8, 1993, and German Patent Application No.93117661.4 filed November 2, 1993). In this method, the motion vector of a pixel is calculated using the motion vectors of an intended block and three adjacent blocks. As a result, an apparatus is proposed which has the advantage of reliability of a large block and the motion vector performance permitting more local positioning at the same time.

The signal processing for frame number conversion for motion compensation used in the system conversion apparatus in the broadcasting world, however, requires a vast amount of calculation for signal processing in motion vector search. Employing this method directly in the television receiver is difficult from the viewpoint of circuit scale and cost. Also, the above-mentioned method of motion prediction for television image poses such a problem of accuracy of a pixel-based motion vector that an accurate motion vector cannot be obtained, often deteriorating the image quality.

### SUMMARY OF THE INVENTION

Accordingly, an object of the present invention is to provide a system conversion apparatus for image signals high in image quality and small in circuit size.

Another object of the invention is to provide a television receiver high in image quality and low in cost meeting the multi-source requirements.

According to a first aspect of the invention, there is provided a system conversion apparatus for image signals in which a block-based motion vector is searched for based on an image signal, and a motion vector with a predetermined motion correction error determined for each mini-block using the searched motion vectors of the prevailing block and adjacent blocks is assigned as a pixel-based motion vector in the mini-block. Then, an interpolated frame of the image signal is generated using this pixel-based motion vector thereby to convert the number of frames of the image signal.

According to a second aspect of the invention, there is provided a system conversion apparatus for image signals, in which an interlace scanning image signal is converted to a progressive scanning image signal by motion adaptive scanning line interpolation. Then, the progressive scanning image signal is processed for converting the number of frames for motion compensation. As a result, as compared with the interlace scanning signal, the motion vector can be detected more accurately as required for motion compensation. Further, in order to greatly reduce the amount of calculations required for searching and generating the motion vector, the signals are processed at least in two stages of block-based motion vector search and generation of a pixel-based motion vector with the block-based motion vector as a reference vector.

The introduction of this signal processing technique can remarkably reduce the amount of calculations required for search and generation of a pixel-based motion vector required for motion compensation. Also, since a motion vector with minimum motion error compensation is assigned to the pixel-based motion vector in a mini-block, the image quality deterioration attributable to the inaccuracy of the motion vector, i.e. an isolated deterioration in which a part of the image is replaced by an improper image can be prevented considerably.

According to a third aspect of the invention, there is provided a system conversion apparatus for image signals, in which the frame interpolation for motion compensation is effected only for a motion of such a speed as to exhibit the motion judder adversely affecting the motion smoothness or a special motion such as vertical or horizontal panning or text scroll. In the scene change, on the other hand, the motion vector search frame and frame interpolation for motion compensation are suspended.

As a result, the image quality deterioration such as the flickering of the edge of the moving object or an apparently unnatural motion unique to the motion compensation can be prevented. Also, the vast amount of calculations which otherwise might be required for scene change can be eliminated.

According to a fourth aspect of the invention, there is provided a television receiver comprising an input section for inputting a plurality of image signals of different systems, a plurality of image format converters for searching for a block-based motion vector according to the image signal supplied from the input section, generating a pixel-based motion vector using the block-based motion vector and generating an interpolated frame of the image signal using the pixel-based motion vector thereby to convert the number of frames of the image signal, a multiplexer for multiplexing the output signal from each image format converter, and a display unit for displaying an image based on the output signal from the multiplexer.

As a result, various frame rate conversion apparatuses can be realized at a very low cost, such as TV system conversion between PAL and NTSC, conversion between PAL 50 Hz and PAL 60 Hz, conversion between film image of frame frequency of 24 Hz and progressive scanning of frame frequency of 60 Hz, and image signal conversion between TV signal and PC (personal computer). Also, the use of this system conversion apparatus makes it possible to produce an inexpensive TV receiver of high image quality meeting the multi-source requirements.

According to a fifth aspect of the invention, there is provided a system conversion apparatus comprising a motion information detector for detecting the image motion information from an image signal generator for generating a first image signal such as the TV signal of PAL system or the PC image, and a motion correction processing section for performing frame number conversion by motion compensated frame interpolation using the motion vector in the motion information, wherein a first image signal is converted into a second image signal having a larger number of frames than the first image signal, wherein the motion information detector includes a motion detector for detecting the presence or absence of the motion for each pixel from the inter-frame difference signal component of the first image signal, and a motion vector detector for dividing the first image signal into blocks and detecting the motion vectors of the blocks by block matching, as far as the blocks contain pixels for which the motion is detected, while no motion vector is detected for the blocks containing only the pixels for which no motion is detected.

Preferably, the motion vector detector includes a vector corrector for detecting the correlation of motion between the block to be processed (called "the prevailing block") and a plurality of adjacent blocks using the signal of the motion detector and generating a corrected motion vector with the motion vectors of the adjacent blocks highly correlated with the motion of the prevailing block. The vector corrector corrects the vector either by block or includes a calculation section for dividing the block for which the motion has been detected into a plurality of mini-blocks and calculating, for each mini-block, the correction error based on the motion vectors of a plurality of adjacent blocks, so that the motion vector is corrected for each pixel or mini-block to which the minimum value of the estimation error is assigned as a motion vector of the pixels in the mini-block.

The motion compensated processing section for frame number conversion by motion compensative frame interpolation is operated in the following manner:

(1) Only the pixels for which the motion has been detected are subjected to motion compensation based on the signal from the motion detector. Even for the blocks for which the motion vector is determined, the pixels of which no motion is detected by the motion detector are processed with the motion vector as "0" in the pixel-based processing of motion compensation in frame number conversion.
(2) Specific motion vectors are detected for special motions such as the vertical or horizontal panning or text scroll or a speed liable to exhibit a motion judder adversely affecting the smooth motion, and only the signals for the specific motion are processed for each pixel for compensative frame interpolation.

As described above, the block matching operation involving a large amount of calculations is effected only for the blocks containing the pixels for which the motion is detected by the motion detector. The memories, arithmetic circuits, etc. required for this operation, therefore, can be reduced in size. Also, the decreased requirement for block matching permits the provision of a vector corrector for generating a corrected motion vector with the motion vectors of adjacent blocks highly correlated in motion with the prevailing block. Thus the high-accuracy detection of a motion vector is realized with a simple signal processing. Further, the corrective frame interpolation can use the signal of the motion detector as to the presence or absence of the motion, and therefore each pixel associated with the motion can be processed independently. In this way, the high image quality can be maintained, and the amount of arithmetic operations required for signal processing and hence the size of the circuit configuration can be considerably reduced.

## BRIEF DESCRIPTION OF THE DRAWINGS

Fig. 1 is a block diagram showing a configuration of a system conversion apparatus according to a first embodiment of the invention.

Fig. 2 is a diagram showing an example configuration of the motion detector.

Fig. 3 is a diagram showing an example configuration of the block-based motion vector search section.

Fig. 4 is a diagram showing a first example configuration of the pixel-based motion vector generator.

Fig. 5 is a diagram showing a second example configuration of the pixel-based motion vector generator.

Fig. 6 is a diagram showing a third example configuration of the pixel-based motion vector generator.

Fig. 7 is a diagram showing a fourth example configuration of the pixel-based motion vector generator.

Fig. 8 is a diagram showing a first example configuration of the motion compensative interpolated frame generator.

Figs. 9a to 9c are diagrams schematically showing the operation of the frame sequence controller and the motion compensated signal generator, respectively.

Fig. 10 is a diagram showing a second example configuration of the motion compensative interpolated frame generator.

Fig. 11 is a block diagram showing a configuration of a system conversion apparatus according to a second embodiment of the invention.

Fig. 12 is a diagram showing an example configuration of the scene change detector.

Fig. 13 is a block diagram showing a configuration of a system conversion apparatus according to a third embodiment of the invention.

Fig. 14 is a block diagram showing a configuration of a system conversion apparatus according to a fourth embodiment of the invention.

Fig. 15 is a block diagram showing a configuration of a system conversion apparatus according to a fifth embodiment of the invention.

Fig. 16 is a block diagram showing a configuration of a system conversion apparatus according to a sixth embodiment of the invention.

Fig. 17 is a flowchart for the block-based motion vector search.

Figs. 18a to 18b are diagrams schematically showing the operation of block-based vector search, respectively.

Fig. 19 is a diagram schematically showing a first method of generating a pixel-based motion vector.

Fig. 20 is a diagram schematically showing the operation of generating a pixel-based motion vector.

Figs. 21a to 21b are diagrams schematically showing a second method of generating a pixel-based motion vector.

Fig. 22 is a diagram schematically showing a third method of generating a pixel-based motion vector.

Figs. 23a to 23b are diagrams schematically showing a fourth method of generating a pixel-based motion vector.

Fig. 24 is a block diagram showing a general configuration of a TV receiver according to an embodiment of the invention.

Fig. 25 is a block diagram showing a general configuration of a TV receiver according to another embodiment of the invention.

Fig. 26 is a block diagram showing a general configuration of a TV receiver according to still another embodiment of the invention.

Fig. 27 is a block diagram showing a general configuration of a TV receiver according to a further embodiment of the invention.

Fig. 28 is a block diagram showing a configuration of a motion compensative image signal converter according to another embodiment of the invention.

Fig. 29 is a diagram schematically showing the signal processing in the vertical 6-5 converter 2 of Fig. 28.

Fig. 30 is a block diagram showing an example configuration of the motion detector 4 of Fig. 28.

Fig. 31 is a block diagram showing a first example configuration of a motion vector detector 5 of Fig. 28.

Fig. 32 is a block diagram showing a second example configuration of the motion vector detector 5 of Fig. 28.

Figs. 33a to 33b are schematic diagrams for explaining the operation of an adjacent motion information detector 13 of Fig. 32.

Fig. 34 is a block diagram showing a third example configuration of the motion vector detector 5 of Fig. 28.

Fig. 35 is a block diagram showing a first example configuration of the pixel motion vector calculator 12' of Fig. 34.

Fig. 36 is a diagram showing a partial image for explaining the operation of the pixel motion vector calculator.

Fig. 37 is a block diagram showing a second example configuration of the pixel motion vector calculator 12' of Fig. 34.

Fig. 38 is a block diagram showing a first example configuration of the motion compensation processing section 6 of Fig. 28.

Fig. 39 is a block diagram showing a second example configuration of the motion compensation processing section 6 of Fig. 28.

Figs. 40a to 40b are schematic diagrams for explaining the operation of frame interpolation by motion compensation.

Fig. 41 is a block diagram showing a configuration of the converter of motion compensative image signals according to another embodiment of the invention.

Fig. 42 is a block diagram showing a configuration of the converter of motion compensative image signals according to still another embodiment of the invention.

Fig. 43 is a block diagram showing a first example configuration of a simplified motion vector detector 24 of Fig. 42.

Fig. 44 is a block diagram showing a second example configuration of a simplified motion vector detector 24 of Fig. 42.

Fig. 45 is a block diagram showing a third example configuration of a simplified motion vector detector 24 of Fig. 42.

Fig. 46 is a block diagram showing a configuration of a converter of motion compensative image signals according to another embodiment of the invention.

Fig. 47 is a block diagram showing a configuration of a converter of motion compensative image signals according to still another embodiment of the invention.

Fig. 48 is a block diagram showing a configuration of a converter of motion compensative image signals according to a further embodiment of the invention.

Fig. 49 is a block diagram showing a configuration of a converter of motion compensative image signals according to a still further embodiment of the invention.

Fig. 50 is a block diagram showing a configuration of a converter of motion compensative image signals according to a yet further embodiment of the invention.

Figs. 51a to 51b are block diagrams showing a configuration of a converter of motion compensative image signals according to still another embodiment of the invention.

DESCRIPTION OF THE PREFERRED EMBODIMENTS

A first embodiment of the invention will be explained with reference to Figs. 1 to 10. According to this embodiment, a system conversion apparatus for converting an input image signal for interlaced scanning into a image signal sequence S4 for progressive scanning having a higher frame frequency.

Fig. 1 is a block diagram showing a configuration of the embodiment. In Fig. 1, an IP converter 1 is supplied with an interlaced scanning input image signal S1 (the luminance signal component and the color difference signal components) for conversion from interlace to progressive scanning and produces a signal sequence S2 for progressive scanning (the luminance signal component and the color difference signal components). The conversion from interlace to progressive scanning is performed by motion adaptive interpolation for the luminance signal component and by generating interpolated scanning lines between lines for the color difference signals. In the case where the input image signal is a telecine image signal (the signal of a film image such as a motion picture as converted into a TV signal format by the 2-3 pull-down), a signal sequence for progressive scanning in the form of film image is generated by the film-mode interpolation (i.e. the interpolated scanning line signals are generated from an interlace scanning signal associated with the same film frame).

A motion compensated frame number converter 2 generates a signal sequence of interpolated frames by motion compensation. In this way, a progressive scanning signal sequence S2 produced from the IP converter 1 is converted into and output as a progressive scanning image signal sequence S4 (the luminance signal component and the color difference signal components) having a higher frame frequency. The motion compensated frame number converter 2 includes a one-frame delay line 3, a motion detector 4, a block-based motion vector search section 5, a pixel-based motion vector generator 6 and a motion compensative interpolated frame generator 7.

The one-frame delay line 3 is for outputting by delaying an input signal sequence by one frame.

The motion detector 4 subtracts the luminance signal component of the signal sequence S3 of the previous frame produced by the one-frame delay line 3 from the luminance signal component of the signal sequence S2 of the current frame thereby to extract a difference signal of one frame. This difference signal is quantized into binary digits thereby to produce motion detection signals MI1, MI2. This configuration will be described later.

The block-based motion vector search section 5 detects a motion vector BV by block (16 pixels by 16 lines or 8 pixels by 8 lines, for example) in the manner described below. First, a block for which the motion detection signals MI1 are all 0 is judged to be a still block, and a 0 is output as a block-based motion vector VB. A block for which MI1 contains 1, on the other hand, is judged as an moving block, and a block pair associated with a minimum error is searched for by block matching of the luminance signal components of the signals S2 and S3 thereby to detect the block-based motion vector BV. The operation of the block-based motion vector search section 5 will be explained before the configuration thereof which will be described later.

The block-based motion vector search section 5 searches for a block-based motion vector BV in accordance with the signal processing flowchart shown in Fig. 17.

(1) In step 1, the blocks are divided into those for which motion is not detected by the frame difference signal (still blocks), and those for which motion is detected (moving blocks).

(2) In step 2, still blocks are not searched for a motion vector and the motion vector BV is assigned 0. For moving blocks, on the other hand, first, as shown in Fig. 18a, a motion compensated error is calculated for a plurality of preset representative motion vectors (BVa, BVb, BVc, BVd,..., BVn). Specifically, the absolute value of the difference between a signal fct(x,y) of a pixel in the prevailing block and a signal fpr(x+BVx,y+BVy) obtained by moving the pixel of the previous frame by the x component BVx and the y component BVy of the representative motion vector is accumulated, and a representative motion vector BV1 associated with a minimum accumulation is determined.

(3) In step 3, as shown in Fig. 18b, the motion vectors in the area of ±DX in horizontal direction and ±DY in vertical direction with the representative vector BV1 as an origin are searched by block matching, and a motion vector with minimum motion estimation error is detected as a block-based motion vector BV. The block-based motion vector search section 5 operates in the above-described manner.

The pixel-based motion vector generator 6 generates a pixel-based motion vector PV in the following-described manner. First, PV is assigned "0" for a pixel with the motion detection signal MI2 of "0". For a pixel with MI2 of 1, on the other hand, a motion vector associated with a minimum motion estimation error is calculated for each mini-block (2 pixels by 2 lines, for example) using motion vectors in the prevailing block and upper, lower and right and left adjacent blocks. The resulting motion vector is assigned to the pixels in the mini-block. This configuration will also be described later. For the time being, the operation will be explained.

The pixel-based motion vector generator 6 generates a pixel-based motion vector PV by one of the four methods shown in the signal processing flowcharts of Figs. 19 to 23.

First, the first signal processing method will be explained with reference to Figs. 19 and 20.

(1) In step 1, a motion estimation error for the prevailing block is calculated by the block-based motion vector BV and compared in magnitude with a threshold level TH.

(2) In step 2, in the case where the motion estimation error is less than the threshold level TH, the motion vector BV is judged accurate and this motion vector BV is assigned to all the pixels in the block. In the case where the motion estimation error is not less than the threshold level TH, on the other hand, as shown in Fig. 20, a motion vector associated with a minimum estimation error in the calculation area of MX+2 in horizontal direction and MY+2 in vertical direction enveloping each mini-block (MX horizontal pixels by MY vertical lines, for example) using the motion vectors of the prevailing block and reference blocks adjacent thereto. Specifically, the absolute value of the difference between the signal fct(x,y) of the pixels in the mini-block and the signal fpr(x+BVx,y+BVy) obtained by moving the pixels of the previous frame by the x component BVx and the y component BVy of the motion vector is accumulated, and a motion vector associated with a minimum accumulated value is determined as PV. The pixels in the mini-block are assigned this motion vector PV.

(3) In step 3, a motion vector "0" is assigned to the pixels for which the motion detection signal MI2 is "0".

The second to fourth signal processing methods described below are different from the first signal processing method for the case in which the motion estimation error is not less than the threshold level TH in the second step.

Reference is made to the second signal processing method shown in Figs. 21a, 21b. In the case where the motion estimation error is not less than the threshold level TH, a motion vector PV1 for each sub-block SB1 (with block size one half in both horizontal and vertical directions) is researched for in the block matching process with the motion vector BV of the prevailing block as a reference vector. Then, with this PV1 as a reference vector, a motion vector PV2 for each sub-block SB2 (one half as large as SB1 in both horizontal and vertical directions) is re-searched for. This motion vector re-search process is repeated up to the size of the mini-block thereby to generate a motion vector PV of the mini-block. This motion vector PV is assigned to the pixels in the mini-block.

In the third signal processing method shown in Fig. 22, on the other hand, assume that the motion estimation error is not less than the threshold level TH. The motion vector PV1 is re-searched for each sub-block SB1 (one half as large in both horizontal and vertical directions) by block matching with the motion vector BV of the prevailing block as a reference vector. Then, a motion vector PV associated with a minimum motion estimation error is determined in the calculation area of MX+2 in horizontal direction and MY+2 in vertical direction enveloping each mini-block (MX pixels in horizontal direction by MY lines in vertical direction, for example) using the motion vector PV1 obtained by re-search and the motion vectors of the reference blocks adjacent to the prevailing block shown in Fig. 20. This motion vector PV is assigned to the pixels in the mini-block.

In the fourth signal processing method shown in Figs. 23a, 23b, a sub-block SB1 (one half as large in both horizontal and vertical directions), a sub-block SB2 (one half as large as SB1 in both horizontal and vertical directions) and a sub-block SBn as large as a mini-block are subjected to block matching with BV as a reference vector. Thus motion vectors PV1, PV2,...., PVn of sub-blocks are researched. Then, one of PV1, PV2,....,PVn associated with minimum motion estimation error is calculated for each mini-block, and assigned as the motion vector of the pixels in the mini-block. The pixel-based motion vector generator 6 operates as described above.

The motion compensative interpolated frame generator 7 produces an interpolated motion vector using the pixel-based motion vector PV, and an interpolated frame signal is produced from a signal obtained by moving the image position of the signal S2 of the current frame and the signal S3 of the previous frame on the basis of the interpolated motion vector. Then, this output is subjected to the frame number change thereby to produce a progressive scanning image signal S4 with an increased frequency. A specific configuration of the motion compensative interpolated frame generator 7 will be described later.

Now, main blocks of the embodiment will be explained.

Fig. 2 is a diagram showing an example configuration of the motion detector 4. A subtracter 8 calculates the difference between the luminance signal components of the signal S2 of the current frame and the signal S3 of the previous frame, and extracts a difference signal component FD for one frame period. A binary quantizer 9-1 judges the frame as a still area and outputs a "0" in the case where the signal level of the difference signal component FD is less than a setting ±Tha, and judges the frame as a moving area and outputs a motion detection signal MI1 of "1" in the case where the signal level of the difference signal component FD exceeds ±Tha. The binary quantizer 9-2 judges the frame as a still area and outputs "0" in the case where the signal level of the difference signal component FD is "0", and judges the frame as a moving area and outputs a motion detection signal MI2 of "1" in the remaining cases.

Fig. 3 is a diagram showing an example configuration of the block-based motion vector search section 5. A still-moving block judging section 10 detects the presence or absence of the motion detection signal MI1 of "1" for each block (16 pixels by 16 lines or 8 pixels by 8 lines, for example). In the case where all the signals MI1 are "0", a still block is judged and a signal BM of "0" is output, while a moving block is judged and a signal BM of "1" is output in the remaining cases.

The controller 11 controls the operation of a first block matching section 12 and a second block matching section 13 in accordance with the signal BM. Specifically, the motion vector search operation is not performed but "0" is output as the block-based motion vector BV for the still blocks with the signal BM of "0". The vector search operation described below is performed only for the moving blocks associated with the signal BM of "1".

The first block matching section 12 searches the motion vectors in step 2 of Fig. 17. Specifically, a motion estimation error is calculated by block matching of a plurality of preset representative motion vectors (BVa, BVb,....,BVn shown in Fig. 18) using the luminance signal components of the current frame signal S2 and the previous frame signal S3, and a vector with minimum motion estimation error is output as a representative motion vector BV1. A plurality of the representative motion vectors can include the motion vectors of the immediately preceding blocks for which search has been completed.

The second block matching section 13 searches the motion vectors in step 3 of Fig. 17. Specifically, a motion estimation error is calculated by block matching of the motion vectors defined in the range of ±DX as an x component and ±DY as a y component with the representative motion vector BV1 as an origin using the luminance signal components of the current frame signal S2 and the previous frame signal S3, and a motion vector with minimum motion estimation error is output as a block-based motion vector BV.

As a result, the search of the block-based motion vectors can be confined to moving blocks, and a partial search is possible by representative motion vectors. The amount of signal processing calculations required for search, therefore, is greatly reduced.

Fig. 4 is a diagram showing a first example configuration of the pixel-based motion vector generator 6. This configuration is suitable for the signal processing shown in Figs. 19 and 20.

An estimation error calculator 14 executes step 1 of Fig. 19. Specifically, a motion estimation error based on the block-based motion vector BV is calculated for the luminance signal components of the current frame signal S2 and the previous frame signal S3. The signal SM of "0" is output in the case where the value of the motion estimation error is less than the threshold level TH, and the signal SM of "1" is output in the case where the motion estimation error is not less than the threshold level TH.

The controller 15 generates control signals PC1, PC2 required for the signal processing of steps 2 and 3 of Fig. 19 based on the signal PM and the motion detection signal MI2.

Estimation error calculators 17-1,...,17-N process signals in the case where the control signal PC1 is not lower than the threshold level of the second step of Fig. 19. Specifically, when the control signal PC1 is not lower than the threshold level, motion estimation errors ER0, ER1,...., ERN are calculated in the calculation area of each mini-block (defined by MX = 2 in horizontal direction and MY = 2 pixels by 2 lines in vertical direction, for example) defined by 4(MX+2) pixels in horizontal direction and 4(MY+2) lines in vertical direction. This calculation of the motion estimation error is realized by equation (1) below for the luminance signal components of the current frame signal S2 and the previous frame signal S3 or the luminance signal component and the color difference signal component.

$$ER0 = \Sigma abs\{S2(x,y)-S3(V0)\} = \Sigma abs\{S2(x,y)-S3(x+V0x,y+V0y)\} \qquad (1)$$

$$ER1 = \Sigma abs\{S2(x,y)-S3(V1)\} = \Sigma abs\{S2(x,y)-S3(x+V1x,y+V1y)\}$$

$$ER2 = \Sigma abs\{S2(x,y)-S3(V2)\} = \Sigma abs\{S2(x,y)-S3(x+V2x,y+V2y)\}$$

$$\ldots\ldots\ldots\ldots\ldots$$

$$ERN = \Sigma abs\{S2(x,y)-S3(VN)\} = \Sigma abs\{S2(x,y)-S3(x+VNx,y+VNy)\}$$

In equation (1), S2(x,y) is a signal of the pixels in the current frame within the calculation area, S3(VN) a signal of the pixels in the previous frame relocated by the motion vector VN, abs{ } the absolute value, Σ the total sum of the pixels within the calculation area, VNx the x component of the motion vector VN, and VNy the y component thereof.

The pixel motion vector setting section 18 executes the signal processing for the control signal lower than the threshold level in step 2 and the signal processing in step 3 of Fig. 19. Specifically, in the case where the control signal PC2 is lower than the threshold level, the motion vector V0 of the current block is output as a pixel-based motion vector PV. In the case where the control signal PC2 is not less than the threshold level, on the other hand, the motion vector associated with the minimum one of the motion estimation errors ER0, ER1,....,ERN is output as a motion vector PV of the pixels in each mini-block.

In the case where the motion detection signal MI2 represents a pixel of "0", in contrast, the control signal PC2 forcibly outputs a "0" as a pixel-based motion vector PV.

Fig. 5 is a diagram showing a second example configuration of the pixel-based motion vector generator. A pixel-based motion vector is generated by the signal processing shown in Figs. 21a, 21b. The estimation error calculator 14, which is similar to the corresponding calculator of Fig. 4, executes step 1 of Fig. 21a, and in the case where the value of the block-based motion estimation error is less than the threshold level TH, produces a signal PM of "0" and otherwise produces a signal PM of "1".

The controller 15 generates control signals PC3, PC2 required for the signal processing of steps 2 and 3 of Fig. 21a based on the signal PM and the motion detection signal MI2.

A first re-search processing section 19, a second re-search processing section 20 and a third re-search processing section 21 process signals as in step 2 of Fig. 21a. Specifically, in the case where the control signal PC3 is not lower than the threshold level, the motion vectors are re-searched. A first re-search processing section 19, as shown in Fig. 21b, performs the block matching with the motion vector BV as a reference vector for each sub-block SB1 reduced in size by one half in both horizontal and vertical directions, and produces a motion vector PV1 for the researched sub-block SB1. A second re-search processing section 20 performs the block matching with the motion vector PV1 as a reference vector for each sub-block SB2 compressed to one half in both horizontal and vertical directions from the sub-block SB1, and outputs a motion vector PV2 for SB2 thus searched. A third re-search processing section 21 performs the block matching with the motion vector PV2 as a reference vector for each mini-sized sub-block SBN compressed to 1/n of the sub-block SB2 in both horizontal and vertical directions, and outputs a motion vector for each SBN thus re-searched, i.e. a motion vector PV3 for each mini-block. In the case where the control signal PC3 is lower than the threshold level, on the other hand, the first re-search processing section 19, the second re-search processing section 20 and the third re-search processing section 21 suspend the re-search operation, and the motion vector BV of the current block is output as the motion vector PV3.

A pixel motion vector setting section 22 performs the signal processing of step 3 of Fig. 21a. Specifically, in the case where the motion detection signal MI2 represents a pixel of "0", the control signal PC2 forcibly causes a "0" to be output as the pixel-based motion vector PV. In the case where the motion detection signal MI2 represents a pixel of "1", on the other hand, the control signal PC2 causes a PV3 to be output as a pixel-based motion vector PV.

Fig. 6 is a diagram showing a third example configuration of the pixel-based motion vector generator. This configuration is suitable for the signal processing of Fig. 22 and is realized by adding the re-search processing section 23 to the configuration of Fig. 4.

In the case where the control signal PC4 is not less than the threshold level, the re-search processing section 23 performs the block matching with the motion vector BV of the current block as a reference vector for each sub-block SB1 compressed one half as large in both horizontal and vertical directions, and outputs the motion vector PV1 for each SB1 re-searched. In the case where the control signal PC4 is less than the threshold level, on the other hand, the re-search operation is suspended and the motion vector BV for the current block is output. Then, the motion vector PV1 for each sub-block SB1 used as a reference vector is generated in the signal processing in response to the control signal not less than the threshold level as in step 2 of Fig. 22.

Subsequent operations are similar to the corresponding operations shown in Fig. 4 and will not be described any further.

Fig. 7 is a diagram showing a fourth example configuration of the pixel-based motion vector generator for generating a pixel-based motion vector by the signal processing shown in Figs. 23a, 23b.

The estimation error calculator 14, which is similar to the corresponding one shown in Fig. 4, executes step 1 of Fig. 23A and produces a signal PM of "0" in the case where the value of the block-based motion estimation error is less than the threshold level and an output of "1" in the case where the motion estimation error is not less than the threshold level.

The controller 15 generates control signals PC5, PC2 required for the signal processing of steps 2 and 3 shown in Fig. 23a based on the signal PM and the motion detection signal MI2.

A first re-search processing section 24, a second re-search processing section 25 and a third re-search processing section 26 perform the signal processing of step 2 of Fig. 23a. Specifically, in the case where the control signal PC5 represents a value not less than the threshold level, the motion vector is re-searched. First, the first re-search processing section 24, as shown in Fig. 23b, performs the block matching with the motion vector BV as a reference vector for each sub-block SB1 compressed to a half size in both horizontal and vertical directions, and outputs a motion vector PV1 for each SB1 re-searched. Then, the second re-search processing section 25 performs the block matching with the motion vector BV as a reference vector for each sub-block SB2 compressed to one fourth in size in both horizontal and vertical directions, and outputs the motion vector PV2 for each SB2 re-searched. Further, the third re-search processing section 26 performs the block matching with the motion vector BV as a reference vector for each mini-sized sub-block SBN compressed to 1/n in both horizontal and vertical directions, and outputs the motion vector for each SBN re-searched, i.e. the motion vector PV3 for each mini-block. In the case where the control signal PC5 is less than the threshold level, on the other hand, the first re-search processing section 24, the second re-search processing section 25 and the third re-search processing section 26 suspend the re-search operation and output the motion vector BV of the current block as PV1, PV2, PV3.

The pixel motion vector setting section 27 performs the signal processing for the control signal less than the threshold level in step 2 and the signal processing in step 3 shown in Fig. 23a. Specifically, in the case where the control signal PC2 is less than the threshold level, the motion vector PV1 of the current block is output as a pixel-based motion vector PV. In the case where the control signal PC2 is not less than the threshold level, on the other hand, the motion vector associated with a minimum motion estimation error among the vectors PV1, PV2, PV3 is output as a motion vector of the pixels in each mini-block.

Also, in the case where the motion detection signal MI2 represents a pixel of "0", the control signal PC2 forces the pixel-based motion vector PV to output a "0".

Fig. 8 is a diagram showing a first example configuration of the motion compensative interpolated frame generator 7, and Figs. 9a to 9c diagrams for explaining the operation thereof.

A frame sequence controller 28 generates interpolated motion vectors Vct and Vpr required for motion compensation from the pixel-based motion vector PV. This operation is schematically shown in Figs. 9a, 9b referring to the case in which a signal with a frame frequency of 50 Hz is converted into a signal with a frame frequency of 60 Hz. An interpolated frame is generated by the motion compensative signal processing based on the motion vector PV from the progressive scanning signal of frames 1 to 5 with a frame frequency of 50 Hz, which signal is converted into a progressive scanning signal of frames 1 to 6 with a frame frequency of 60 Hz. In the process, the interpolated motion vector is required to coincide with the position of the interpolated frame. As shown in Figs. 9a, 9b, therefore, coefficient values ka, kb for weighting the motion vector signal PV are changed to generate the interpolated motion vectors Vpr, Vct by the calculations of equation (2) below.

$$Vpr = PV*ka/(ka + kb) \qquad (2)$$

$$Vct = -PV*kb/(ka + kb)$$

In other words, the coefficient values ka, kb are generated in such a manner that Vpr = PV*5/6 , Vct = -PV*1/6 (ka = 5, kb = 1) for the interpolated frame 2 in frame sequence, Vpr = PV*4/6 , Vct = -PV*2/6 (ka = 4, kb = 2) for the interpolated frame 3 in frame sequence, and so forth, thereby generating an interpolated vector free of temporal displacement. As a result, a frame number change is realized free of temporal fluctuations.

A motion compensative signal generator 29 generates a motion compensative signal Sct in response to the signal S2 for the current frame and an interpolated motion vector Vct. A motion compensative signal generator 30 generates a compensative signal Spr from the signal S3 for the previous frame and the interpolated motion vector Vpr. This operation is briefly shown in Fig. 9c. The signal for the point A(x,y) of the interpolated frame corresponds to the signal S3 for the previous frame at a point A'(x1,y1) = (x+Vprx,y+Vpry) moved from point A(x,y) with the interpolated motion vector Vpr (horizontal component Vprx, vertical component Vpry), and corresponds to the signal S2 of the current frame at a point A"(x2,y2) = (x-Vctx,y-Vcty) moved from point A(x,y) by the interpolated motion vector Vct (horizontal component Vctx, vertical component Vcty). Consequently, the motion compensative signals Spr, Sct are generated by equation (3) below.

$$Spr = S3(x+Vprx,y+Vpry) \tag{3}$$

$$Sct = S2(x-Vctx,y-Vcty)$$

This signal processing can be realized by controlling the read operation of the memory circuit built in the motion compensative signal generator. Specifically, a read address displaced by the positions of the interpolated vectors Vpr, Vct is generated, and signals of the pixels corresponding to the points A', A" are read at this address.

An adder 31 calculates a weighted mean of the motion compensative signals Spr and Sct, and produces a progressive scanning image signal S4 with the frame frequency increased by the frame number change for motion compensation.

Fig. 10 is a diagram showing a second example configuration of the motion compensative interpolated frame generator. This motion compensative interpolated frame generator performs frame interpolation for motion compensation only of such a special motion of a speed in which a motion judder is likely to become apparent or a horizontal panning, a vertical panning or a text scroll.

In Fig. 10, the frame sequence controller 28, the motion compensative signal generators 29, 30 and the adder 31 operate the same way as the corresponding components in Fig. 8 to produce a signal Smc as an output of the adder 31 subjected to frame interpolation for motion compensation.

A motion speed detector 32 detects a special motion of a speed at which a motion judder becomes apparent, such as a horizontal or vertical panning or text scroll, based on the pixel-based motion vector PV.

The motion judder, for example, is known to have the property that it becomes conspicuous especially in the case of a motion of a speed up to and including about one second per screen width or one second per screen height that can be followed by the eye. The motion speed detector, therefore, judges the speed component of the motion vector PV with a speed corresponding to one second per screen width and one second per screen height as a threshold level. Thus, the motion judder can be detected by a first operation in which a signal SL representing an output of "1" is produced for the speed less than the threshold level, and an output of "0" for the speed not lower than the threshold level.

Also, the whole screen moves at a uniform speed in the horizontal or vertical panning. Thus, the horizontal or vertical panning can be detected by a second operation in which the motion speed detector measures the magnitude and direction of the pixel-based motion vector PV not zero over the whole screen area, and only in the case where this value is substantially the same over the entire screen area, outputs a signal SL of "1".

In the text scroll or the like, on the other hand, the motion area is strip-shaped and the motion vectors in this area assume substantially the same value. The motion speed detector, therefore, can detect the text scroll or the like by a third operation in which a strip-shaped area where the magnitude and direction of the pixel-based motion vectors PV other than zero are substantially the same is detected, and a signal SL of "1" is output only for this area.

The motion speed detector can be realized in various forms of operation including one of the first, second and third operations or any combination thereof.

A switch 33 selects the signal S2 for the current frame when the signal SL is "1", and a signal Smc when the signal SL is "0". This output is produced as a progressive scanning image signal S4 subjected to frame interpolation for motion compensation only in the area of special motion such as horizontal or vertical panning and text scroll or a motion of such a speed as to make the motion judder conspicuous.

As described above, according to this embodiment, a system conversion apparatus that can produce an image signal of high image quality is realized with a fewer amount of calculations required for search and generation of a motion vector. In addition, a conspicuous effect is produced for reducing the cost.

Now, a second embodiment of the invention will be explained with reference to the block configuration diagram of Fig. 11. This embodiment is suitable for the operation in which the signal processing for motion compensation is suspended in the area of scene change.

The IP converter 1, the one-frame delay line 3, the motion detector 4, the block-based motion vector search section 5 and the pixel-based motion vector generator 6 in Fig. 11 are identical to the corresponding components shown in Fig. 1, respectively.

The scene change detector 34 detects an area where a scene change has occurred based on the manner in which an inter-frame difference signal component is generated during a one-frame period. An example configuration is shown in Fig. 12. A subtracter 8 detects the difference between the luminance signal components of the signal S2 of the current frame and the signal S3 of the previous frame and thus extracts a difference component FD for one frame period. Generally, in the scene change area, the image changes in content, and therefore the signal level of the difference component assumes a comparatively large value. A binary quantizer 36, therefore, quantizes in binary fashion the signal FD for each pixel at a comparatively high threshold level ±Thb. For pixels with the signal FD less than ±Thb, a signal QS of "0" is output, and for those pixels with the FD signal exceeding the threshold level, a signal QS of "1" is output. A one-frame accumulator 37 counts the number of pixels associated with the signal QS of "1" and outputs an accumulated value AQ for the one-frame period. In order to avoid the erroneous detection of the motion of horizontal or vertical panning with the whole screen moving at a uniform rate as a scene change, a judging section 38 judges as a scene change the case in which the accumulated value AQ is not less than one half of the number of pixels for the whole screen and in which such a number occurs only during a one-frame period, in which case a signal of "1" is produced over the one-frame period. Otherwise, a signal of "0" is output.

The block-based motion vector search section 5 and the pixel-based motion vector generator 6 suspend the operation of motion vector search and generation in priority only during the period when the signal SC is "1". In the case where the signal is "0", the same operation is performed as in Fig. 1.

A motion compensative interpolated frame generator 35, on the other hand, selects the signal S2 for the current frame and outputs it as S4 in priority during the period when the signal SC is "1". Also, in the case where the signal SC is "0", the same operation is performed as the motion compensative interpolated frame generator 7 of Fig. 1.

As described above, according to this embodiment, a vast amount of calculations which otherwise might be required for search and generation of motion vectors in the scene change area can be avoided. Thus, a system conversion apparatus for image signals higher in image quality can be realized with conspicuous effects of a fewer amount of calculations and a lower cost.

A third embodiment of the invention will be explained with reference to the block configuration diagram of Fig. 13. This embodiment is suitably used for the case in which the frame rate conversion for motion compensation and the compression of the number of scanning lines of the image signal are carried out at the same time.

An interlaced scanning input image signal S1 (the luminance signal component and the color difference signal components) is applied to the IP converter 1 for conversion to progressive scanning. Interpolated scanning lines are generated, for example, by motion-adaptive interpolation for the luminance signal component and by inter-line interpolation for the color difference signals. Thus a signal sequence S2 for progressive scanning (the luminance signal component and the color difference signal components) is obtained as an output. In the case where the input image signal is a telecine image signal (a film image signal such as for a movie converted into the TV signal format by the 2-3 pull-down), a signal sequence for progressive scanning in the form of film image is generated by film-mode interpolation (a signal of interpolated scanning lines is generated by an interlaced scanning signal associated with the same film frame).

A scaling processing section 39 compresses the number of scanning lines by a factor of N/M by vertical compression according to the vertical M-N conversion (M > N) of the linear interpolation characteristic. For example, the 625 scanning lines of PAL system is converted into the 525 scanning lines of NTSC system. Thus, a progressive scanning image signal S10 with a reduced number of scanning lines is output. This configuration can be easily realized by the conventional technology and therefore will not be specifically explained.

The motion compensative frame number converter 2 is exactly identical in configuration and operation to the corresponding one shown in Fig. 1. The signal is processed by frame interpolation for motion compensation using the signal S10 of the current frame and the signal S11 of the previous frame delayed one frame in the one-frame delay line 3, and a progressive scanning image signal S4 is produced as an output subjected to frame rate conversion and reduction in the number of scanning lines.

As described above, according to this embodiment, a system conversion apparatus for image signals which converts the frame rate for motion compensation and reduces the number of scanning lines at the same time, i.e. an apparatus for converting the TV signal of PAL system into the progressive scanning image signal of NTSC system, for example, can be realized at a very low cost.

Now, a fourth embodiment of the invention will be explained with reference to the block configuration diagram of Fig. 14. This embodiment is also suitable for execution of frame rate conversion for motion compensation and reduction in the number of scanning lines of the image signal at the same time. According to this embodiment, as in the embodiment shown in Fig. 13, the IP converter 1 converts the interlaced scanning to progressive scanning, and the scaling processing section 39 reduces the number of scanning lines by a factor of N/M by vertical compression.

The motion compensative frame number converter 2 is exactly identical in both configuration and operation to the corresponding one shown in Fig. 11. The signal is processed for frame interpolation for motion compensation using the signal S10 of the current frame and the signal S11 of the previous frame delayed one frame in the one-frame delay line 3, so that a progressive scanning image signal S4 is produced as an output converted in frame rate and reduced in the number of scanning lines.

As described above, according to this embodiment, a system conversion apparatus for image signals which converts the frame rate for motion compensation and reduces the number of scanning lines of the image signal at the same time, or an apparatus for converting the TV signal of PAL system into a progressive scanning image signal of NTSC system, for example, can be realized at a very low cost.

Now, a fifth embodiment of the invention will be explained with reference to the block configuration diagram of Fig. 15. This embodiment is suitably used for converting the frame rate for motion compensation and increasing the number of scanning lines for image signals at the same time. In Fig. 15, the IP converter 1 and the motion compensative frame number converter 2 have exactly the same configuration and operate exactly the same way as the corresponding ones shown in Fig. 1.

The progressive scanning image signal S4 converted in the number of frames for motion compensation is applied to the scaling processing section 39 for increasing the number of scanning lines by a factor of N/M by signal processing for a vertical upward M-N conversion (M < N) of the linear interpolation characteristic. For example, the signal of 525 scanning lines of NTSC system is converted into the signal of 720 scanning lines corresponding to SVGA of the personal computer. A progressive scanning image signal S5 with an increased number of scanning lines is thus produced. This configuration can be realized easily by the prior art and therefore will not be specifically explained.

As described above, according to this embodiment, it is possible to realize at a very low-cost system conversion apparatus for image signals which converts the frame rate for motion compensation and increases the number of scanning lines of the image signal at the same time, or for example, an apparatus for converting the TV signal of NTSC system into a progressive scanning image signal corresponding to the SVGA of the personal computer.

Now, a sixth embodiment of the invention will be explained with the block configuration diagram of Fig. 16. This embodiment is also suitable for converting the frame rate for motion compensation and increasing the number of scanning lines of the image signal at the same time.

In Fig. 16, the IP converter 1 and the motion compensative frame number converter 2 have exactly the same configuration and operate exactly the same way as the corresponding ones shown in Fig. 11.

The progressive scanning image signal S4 of which the number of frames is converted for motion compensation is applied to the scaling processing section 39 for increasing the number of scanning lines by a factor of N/M by the vertical M-N conversion (M < N) according to the linear interpolation characteristic. For example, the signal having 525 scanning lines of NTSC system is converted into the signal of 720 scanning lines corresponding to SVGA of the personal computer. Thus a progressive scanning image signal S5 with an increased number of scanning lines is output. This configuration can be easily realized by the prior art and therefore will not be specifically explained.

The above-mentioned technical means according to the invention can realize the conversion of the number of frames for motion compensation of high image quality and low cost with a small circuit scale that can be built in the TV receiver, thus making it possible to produce a TV receiver meeting the multi-source, multi-display and multi-window display requirements.

Fig. 24 is a block diagram showing a general configuration of a TV receiver according to another embodiment of the invention. This embodiment is suitable for use with a CRT, a PDP or a LCD comprising a progressive scanning display unit having 625 scanning lines and a frame frequency of 60 Hz or an interlaced scanning display unit having 1080 (1125) scanning lines and a field frequency of 60 Hz.

Broadcasting signals TV1, TV2,...., TVN (such as the NTSC signal or PAL signal of the current TV systems) are demodulated in predetermined way in TV demodulators 51-1,..., 51-N, respectively, into a luminance signal component and a color difference signal components.

A digital broadcasting signal TVD is digitally demodulated and decoded in a predetermined way by an IRD 52 into the luminance signal component and the color signal components of SD (a signal of the same image format as the current TV systems) or HD (a signal of an image format equivalent to HDTV).

The image signals of the personal computer (such as three RGB primary color signals) are processed for color space conversion by a color converter 53 into the luminance signal component and the color difference signal components.

The above-mentioned signals of the input system are applied through a signal bus 59 to image format converters 60-1,...., 60-M. The IP converter 1 converts the interlaced scanning signal into the progressive scanning signal by motion-adaptive scanning line interpolation. The motion compensative frame number converter 2 converts a signal less than 60 Hz in frame frequency (such as the 50-Hz signal of PAL system or the 24-Hz signal of film image) into a signal having a frame frequency of 60 Hz by frame interpolation for motion compensation. Also, the scaling processing section 39 converts the number of scanning lines (for example, 5-6 conversion of the NTSC signal of 525 scanning lines into a signal of 625 scanning lines, in the case where the display unit has the capacity of 625 scanning lines) and enlarges or compresses the image size in accordance with various display modes such as multi-window, double-window, PIP (picture in picture) or POP (picture out picture).

An image quality improvement sections 61-1 to 61-M performs the signal processing for correcting the luminance tone, the color space conversion coincident with the color space characteristic of the display or inverted gamma correction (for the display having the linear characteristic such as PDP or LCD).

A MPX section 62 is a signal multiplexer for integrating or synthesizing the output signals of the image quality improvement sections and thus generating an image signal of a predetermined display mode. An image is reproduced on the display unit 55.

The information on the display mode selectively designated by the viewer is applied through a remote controller 56 and a control signal receiver 57 to a controller 58. In accordance with this information, the controller 58 generates control signals required for various operations and applies them to a controlled section 54.

In the configuration shown in this block diagram, the image format converters 60-1 to 60-M constituting the gist of the present invention each include the IP converter 1, the motion compensative frame number converter 2 and the scaling processing section 39. These component parts can be similar to the corresponding component parts respectively used in the above-mentioned embodiments. Each block other than these component parts can be easily configured by the prior art and therefore will not be described.

According to this embodiment, the amount of calculations required for search and generation of a motion vector necessary for frame rate conversion for motion compensation can be reduced by a factor of several tens and the circuit size can also be considerably reduced as compared with the conventional methods. As a result, a TV receiver having built therein the frame rate conversion function for motion compensation can be realized at a comparatively low cost. This embodiment thus significantly contributes to a higher image quality and enhanced functions.

Now, a TV receiver according to another embodiment of the invention will be explained with reference to the general configuration shown in the block diagram of Fig. 25. In this embodiment, the display unit has 525 scanning lines and a frame frequency of 60 Hz, and is suitable for application to the CRT, PDP or LCD of progressive scanning type. The difference of this embodiment from the one shown in Fig. 24 is that the order of signal processing for scaling and motion compensative frame number conversion in the image format converter is reversed. For the present, therefore, the motion compensative frame number conversion will be described below.

In each of the image format converters 62-1,...., 62-M, the IP converter 1 first converts an interlaced scanning signal into a progressive scanning signal. Specifically, scanning line signals for interpolation are generated by the motion adaptive interpolation for the luminance signal component and by the inter-line interpolation for the color difference signal components of the interlaced scanning image signal (the luminance signal component and the color difference signal components), thereby converting an interlaced scanning signal into a progressive scanning signal (the luminance signal component and the color difference signal components). Also, in the case where the input image signal is a telecine image signal (the signal converted into the format of the TV signal by the 2-3 pull-down of the film image such as the movie), a progressive scanning signal sequence is generated in the form of film image by film-mode interpolation (generating a scanning line signals for interpolation from the interlaced scanning signals associated with the same film frame).

Then, the scaling processing section 39 decreases the number of scanning lines and enlarges or compresses the image size. The signal of PAL system having 625 scanning lines, for example, is converted into a signal of NTSC system having 525 scanning lines by the 6-5 conversion of the number of scanning lines. Further, the image is enlarged or compressed in accordance with the various display modes including multi-window, double-window, PIP (picture in picture) and POP (picture out picture).

The motion compensative frame number converter 2 a signal having a frame frequency of less than 60 Hz (such as a 50-Hz signal of PAL system or 24-Hz signal of film image) into a signal having a frame frequency of 60 Hz by frame interpolation for motion compensation. In the process, the scaling step in the front stage converts the signal of PAL system having 625 scanning lines into a signal having 525 scanning lines reduced by a factor of 5/6. Consequently, the amount of calculations for motion vector search required for conversion of the number of frames for motion compensation can be reduced to 5/6 of the amount for the case involving 625 scanning lines. A specific configuration of the motion compensative frame number converter 2 is similar to the one included in the above-mentioned embodiments and will not be described.

As explained above, according to the present embodiment, the amount of calculations for motion vector search and generation required for frame rate conversion for motion compensation can be reduced by a factor of several tens and the circuit size can also be reduced considerably as compared with the conventional methods. As a result, a TV receiver having built therein the frame rate conversion function for motion compensation can be realized at a comparatively low cost. In addition, the significant effects of high image quality and high functions of the television image can be attained.

Now, a television receiver according to still another embodiment of the invention will be explained with reference to the general configuration shown in the block diagram of Fig. 26. This embodiment is equivalent to the embodiment of Fig. 24 to which MIX sections constituting signal mixers 63-1 to 63-N are added so that the image format converters 60-1 to 60-N can be reduced in number, thereby further reducing the cost.

The MIX sections 63-1 to 63-K are supplied with two-channel TV signals of the same system among the image signals demodulated by the TV demodulators 51-1 to 51-N. In the case where the display mode is the double-window or PIP using the TV signal of the same system, the two-channel TV signals are synthesized. With the double-window, for example, the signals are processed and output for the operation of arranging the signal of one channel in the left half portion of the screen and the signal of the other channel in the right half portion of the screen. With PIP, on the other hand, the signals are so processed and output that the signal of one channel is arranged in the main screen and the signal of the other channel in the child screen. In other than the above-mentioned display modes, the signal of either of the two channels in each of the above-described cases is output for display.

The image format converters 60-1 to 60-M' perform the same processing as the corresponding component parts in Fig. 24. In the display mode of double-window or PIP with the TV signal of the same system, however, the conversion to the required signal format has already been completed by the output of the MIX sections 63-1 to 63-N, and therefore the signal is not processed for enlargement or compression in the scaling processing section.

As described above, according to this embodiment, the conversion process is performed by the MIX sections arranged in the stage before the image format converter in the display mode of double-window or PIP. As a result, it is possible to reduce the number of the image format converters, thereby contributing to the realization of a TV receiver at a still lower cost.

Now, a TV receiver according to a further embodiment of the invention will be explained with reference to the general configuration shown in the block diagram of Fig. 27. This embodiment is equivalent to the embodiment of Fig. 25 to which MIX sections 63-1 to 63-K are added to reduce the number of the image format converters 62-1 to 62-M' for attaining a further lower cost. The operation of the MIX sections 63-1 to 63-K is identical to that of the corresponding component parts shown in Fig. 26. The configuration and operation of the remaining parts are identical to those of Fig. 25 and therefore will not be explained.

As described above, the above-mentioned embodiments have a significant effect of improving the image quality and functions of the TV image, and can considerably reduce the amount of calculations required for motion vector search and generation in the signal processing for motion compensation while at the same time remarkably reducing the circuit size as compared with the prior art. As a result, it is possible to realize a low-cost TV receiver of a high image quality having the functions meeting the requirements of multi-source, multi-display and multi-window display.

Now, let us determine the reduction rate of the calculation amount required for motion vector search and generation in the signal processing for motion compensation.

First, the reduction rate of the calculation amount for motion vector search by block can be determined as follows:

Assuming that the search area covers ü}DX pixels in the horizontal direction and ü}DY lines in the vertical direction, the full-search method requires the block matching processes in the number of $(2DX+1)(2DY+1)$ per block. The required block matching processes per moving block, on the other hand, are in the number of $(DX/2+1)(DY/2+1)$ in the second step and $(DX/4+1)(DY/4+1)$ in the third step. Also, assuming that the probability of moving block occurrence is Mb ($0 \leq Mb \leq 1$), $DX = 16$, $DY = 16$ and that the reduction rate of the calculation amount for block search is Kb, the value Kb can be given by equation (4).

$$Kb = Mb\{(DX/2+1)(DY/2+1) + (DX/4+1)(DY/4+1)/\{(2DX+1)(2DY+1)\} = Mb/10 \quad (4)$$

Thus, for the block-based search, even in the worst case in which the whole screen is occupied by moving blocks ($Mb = 1$), the search is possible with the amount of calculation as small as about 10% of the figure for the full-search method.

Then, the reduction rate of the calculation amount for the pixel-based motion vector search can be determined as follows:

Generally, with the motion vector BV for the current block as a reference vector, pixels are re-searched in a compressed range of about $\pm DX/4$ pixels in horizontal direction and $\pm DY/4$ lines in vertical direction thereby to generate a final motion vector. Assuming the block size of BX pixels in horizontal direction and BY lines in vertical direction, the re-search processes required are in the number of $(DX/2+1)(DY/2+1) \cdot BX \cdot BY$. The blocks not less than the threshold level TH, on the other hand, are re-searched a number of times equal to (9 reference vectors) • (3 types including one luminance system and two color difference systems) • (BX/2) • (BY/2). Assuming that the occurrence probability of blocks not less than the threshold level TH is Mp ($0 \leq Mp \leq 1$), $DX = DY = 16$, $BX = BY = 16$ and Kp is the reduction rate of the calculation amount for pixel search, then Kp is given by equation (5).

$$Kp = Mp\{9 \cdot 3 \cdot (BX/2)(DY/2+1)\}/\{(DX/2+1))DY/2+1) \cdot BX \cdot BY\} = Mp/12 \quad (5)$$

Thus, even in the worst case in which the entire screen is occupied by moving blocks ($Mp = 1$), search is possible with the calculation amount about 8% of the figure for the all-pixel search method.

The motion vector is generated in two stages of block-based search and pixel-based search. Generally, therefore, the calculation amount reduction rate Kmv can be expressed by equation (6)

$$Kmv = Kb \cdot Kp = 0.008 \cdot Mb \cdot Mp \quad (6)$$

Even in the worst case ($Mb = Mp = 1$), therefore, the calculation amount required for search and generation of the motion vector can be reduced by an amount in the order to two digits as a whole. Consequently, the size of the signal processing circuit for motion compensation can be greatly reduced.

According to this embodiment, a system conversion apparatus for image signals is provided which is high in image quality and small in circuit size. Also, the use of this system conversion apparatus can realize an inexpensive TV receiver of high image quality meeting the multi-source requirements.

Fig. 28 is a block diagram showing a configuration of a conversion apparatus for image signals of motion compensation type according to still another embodiment of the invention. This embodiment is intended to convert the TV signal of PAL system into the TV signal of NTSC system for progressive scanning.

A demodulation signal S71 (the luminance signal component and the color difference signal components) for the TV signal of PAL system is applied to an IP converter 71 for converting an interlaced scanning signal into a progressive scanning signal (hereinafter referred to as the interlaced-progressive scanning conversion). Specifically, signals of interpolation scanning lines are generated by motion adaptive interpolation for the luminance signal component, and by inter-line interpolation for the color difference signals. A progressive scanning signal sequence S2 having a frame frequency of 50 Hz is thus produced as an output.

A vertical 6-5 converter 72 converts the number of scanning lines in 6-5 ratio and generates a signal sequence S73 (with a frame frequency of 50 Hz) having the number of scanning lines equivalent to the TV signal of NTSC system. Specifically, as shown in Fig. 29, each set of six scanning lines a, b, c, d, e, f is processed with the input-output characteristic of two-point linear interpolation thereby to produce five scanning lines v, w, x, y, z. The IP converter 71 and the vertical 6-5 converter 72 make up an image signal generator for generating image signals with the frame frequency thereof converted. The image signal generator can be produced using a well-known technology.

The signal S73 and a signal S74 (hereinafter referred to as the previous frame signal) delayed one frame period by a frame memory 73 are applied to a motion detector 74, a motion vector detector 75 and a motion compensative processing section 76.

The motion detector 74 extracts, for each pixel, the difference signal component for one frame period by subtraction between the luminance signal components of the signals S73, S74, which difference signal component is binarized and smoothed thereby to produce a motion detection signal FD (a binary signal of "0" for no motion and "1" for motion). A specific configuration of the motion detector 74 will be described later.

The motion vector detector 75 detects a motion vector for each block (16 pixels by 16 lines or 8 pixels by 8 lines, for example) by block matching. Specifically, a block in which the motion detection signals FD for all the pixels are "0" is judged as a still block and "0" is output as a motion vector signal. A block in which the motion detection signal FD contains a pixel of "1", on the other hand, is judged as a moving block, and the luminance signal components of the signals S73, S74 are searched for a block pair minimizing the error by block matching, and the result is produced as a motion vector signal V. A specific configuration of the motion vector detector 75 is also described later.

The motion compensative processing section 76 performs the motion compensative signal processing for the pixels for which the motion detection signal FD is "1". Specifically, an interpolation motion vector is produced from the motion vector V, and an interpolation frame signal is generated from the signal S73 for the current frame and the signal S74 for the previous frame relocated by the interpolation motion vector. For the pixel for which the motion detection signal FD is "0", on the other hand, an interpolation frame signal is generated by the mean value between the signals for the current frame and the previous frame, or by the signal for the current frame alone. As a result, a progressive scanning signal S75 of NTSC system with a frame frequency of 60 Hz subjected to frame number conversion for motion compensation is produced as an interpolation frame signal. A configuration of the motion compensative processing section 76 will be explained later.

Now, the configuration and operation of the main blocks according to the present embodiment will be explained. Fig. 30 is a diagram showing an example configuration of the motion detector 74. A subtracter 77 subtracts between the luminance signal components of the progressive scanning signal S73 for the current frame and the signal S74 for the previous frame thereby to produce a difference signal component for one frame period for each pixel. A binarizer 78 judges a still area in the case where the signal level of the difference signal component is less than a setting ±Th and produces a "0", and in the case where it is not less than ±Th, produces a "1" as a binary signal. A smoother 79 performs the smoothing operation such as integration for the horizontal and vertical spatial areas, and produces a motion detection signal FD for which an isolated point is eliminated and a discontinuous point is filled.

Fig. 31 is a diagram showing a first example configuration of the motion vector detector 75.

A still block detector 81 detects the presence or absence of the motion detection signal FD of "1" for each block (16 pixels by 16 lines or 8 pixels by 8 lines, for example). Only in the case where the signal FD is "0" for all the pixels in the block, a signal BM of "0" is output. Otherwise, a signal BM of "1" is output. A block matching section 80 searches for a block pair associated with a minimum error by block matching using the luminance signal components of the signal S73 for the current frame and the signal S74 for the previous frame for progressive scanning, and produces a motion vector Va for the block pair thus obtained. As a result, only in the case where the signal BM is "1", the motion vector Va is searched. Therefore, the motion vector search by block matching can be confined to the moving blocks, thereby greatly reducing the amount of calculation for signal processing required for the search. A selector 82 outputs a motion vector signal V which is "0" for a still block associated with the signal BM of "0" and Va detected by the block matching section 80 for a moving block associated with a signal BM of "1".

Fig. 32 is a diagram showing a second example configuration of the motion vector detector 75. This example configuration further comprises an adjacent motion information detector 83 and a motion vector corrector 84 added to the configuration of Fig. 31 for assuring motion vector detection of a still higher accuracy. The adjacent motion information detector 83 processes signals for detecting the correlation of motion with adjacent blocks, and the operation thereof is briefly described with reference to Figs. 33a, 33b. As shown in Fig. 33a, the adjacent motion information detector 83 detects the motion correlationship from the state of the motion detection signal FD at the boundary areas 1u, 1r, 1d, 1l with the upper, lower, right and left adjacent blocks contiguous with the current block, and outputs adjacent block motion information signals ABM (1 to 9) shown in Fig. 33b. In the case where only the boundary area 1u is in the state where a plurality (4 or more, for example) of the motion detection signals FD are "1" ($1u \neq 0$, $1r = 1d = 1l = 0$), for example, a motion correlationship with the upper block is judged to exist, and a signal AMB of "1" is output. In similar fashion, in the case where only the boundary area 1r, 1d or 1l is in the state where a plurality (say, 4 or more) of motion detection signals FD are "1", a motion correlationship is judged to exist with the right, lower or left block, respectively, and the corresponding one of the signals ABM 2 to 4 is output.

In the case where a plurality (say, 4 or more) of motion detection signals FD are "1" in two contiguous areas, on the other hand, a correlationship of motion with a plurality of corresponding adjacent blocks is judged to exist and the corresponding ones of the signals ABM 5 to 8 are output. In the case where a plurality (4 or more, for example) of motion detection signals FD are "1" in the boundary areas 1u and 1r, for example, the ABM 5 is output indicating the motion correlationship with the upper and right blocks. In the case where a plurality (say, 4 or more) of motion detection signals FD are "1" in other manners than described above, the possibility of detecting a motion vector with high accuracy only by the current block is judged to exist, and the signal ABM 9 is output.

The motion vector corrector 84 generates and outputs a corrected motion vector by averaging the motion vectors of the current block and corresponding adjacent blocks in accordance with the adjacent block motion information signals ABM, as shown in Fig. 33b. In the case where the signal ABM is "1", for example, a corrected motion vector $(Vo + Vu)/2$ is output which is generated by averaging the motion vector Vo for the current block and the motion vector Vu for the upper block. In the case where the signal ABM is 5, on the other hand, a corrected motion vector $(Vo + Vu + Vr)/3$ is output which is generated by averaging the motion vector Vo of the current block, the motion vector Vu of the upper block and the motion vector Vr of the right block. In the case where the signal ABM is 9, the motion vector Vo of the current block is output as it is. A motion vector detection of still higher accuracy is possible by the abovementioned simple correction process.

Fig. 34 is a diagram showing a third example configuration of the motion vector detector 75. In Fig. 34, a still block detector 81 and a block matching section 80 are substantially identical to the corresponding component parts designated by the same reference numerals, respectively, in Fig. 31. A controller 83' generates a control signal CT required for the operation of a pixel motion vector calculator 82' and the block matching section 80 in accordance with the block-based signal BM from the still block detector 81. The pixel motion vector calculator 82' calculates a pixel motion vector signal V from a block-based motion vector Va.

Fig. 35 is a diagram showing a first example configuration of the pixel motion vector calculator 82'. The calculator 82', as explained later with reference to Fig. 36, assigns a motion vector associated with a minimum motion estimation error in each mini-block (2 pixels by 2 lines, for example) to the motion vectors of the pixels in the particular mini-block using the motion vectors of the current block and the upper, lower, right and left adjacent blocks, and outputs a motion vector signal V. An adjacent block motion vector arranging section 84' outputs motion vectors Vo, Vu, Vr, Vd, Vl of the current block and the adjacent blocks corresponding to the mini-block from the block-based motion vector Va in accordance with the control signal CT.

Error calculators 85-1 to 85-6 calculate motion estimation error signals ER, ERo to ER1, respectively, between the signal S73 of the current frame and the signal S74 of the previous frame for each mini-block according to equation (7) below.

$$ER = \Sigma abs\{S3(x,y)-S4)(x,y)\} \qquad (7)$$

$$ERo = \Sigma abs\{S3(x,y)-S4(Vo)\} = \Sigma abs\{S3(x,y)-S4(x+Vox,y+Voy)\}$$

$$ERu = \Sigma abs\{S3(x,y)-S4(Vu)\} = \Sigma abs\{S3(x,y)-S4(x+Vux,y+Vuy)\}$$

$$ERr = \Sigma abs\{S3(x,y)-S4(Vr)\} = \Sigma abs\{S3(x,y)-S4(x+Vrx,y+Vry)\}$$

$$ERd = \Sigma abs\{S3(x,y)-S4(Vd)\} = \Sigma abs\{S3(x,y)-S4(x+Vdx,y+Vdy)\}$$

$$ER1 = \Sigma abs\{S3(x,y)-S4(V1)\} = \Sigma abs\{S3(x,y)-S4(x+V1x,y+V1y)\}$$

where abs{ } is an absolute value, Vix, Viy (i = o, u, r, d or 1 ) is the x and y components of the motion vector Vi, respectively, and $\Sigma$ is the total sum of all the pixels in a mini-block.

A judging section 86 detects a minimum value of the motion estimation error signals ER, ERo to ER1, and outputs a motion vector Vmb corresponding to the minimum value as a motion vector for the pixels in the mini-block. A selector 87 outputs a pixel motion vector signal V by selecting a motion vector Vo (Vo = 0) for the current block when the control signal CT indicates a still block and by selecting a motion vector Vmb when the control signal CT indicates a moving block.

Fig. 36 is a diagram for explaining an outline and the effect of motion vector calculation for each pixel, and shows a part of a moving picture. The current block in Fig. 36 contains a mixture of moving objects p the dotted area and moving objects q in the hatched area which are moving differently from each other. Consequently, the motion vector Vo for the current block is different from either one of the motion vectors of the moving objects p and q, thereby making the motion vector detection inaccurate. The motion vectors Vu, Vl detected in the upper and left adjacent blocks, on the other hand, substantially coincide with the motion of the moving object p. Also, the motion vectors Vr, Vd detected in the right and lower blocks, respectively, substantially coincide with the motion of the moving object q.

A mini-block A is included in the area of the moving object p, and therefore the motion estimation error signal ERu or ERl assumes a minimum value. As a result, the pixels in the mini-block A are assigned the motion vector Vu or Vl, as the case may be, instead of the motion vector Vo. A mini-block B, on the other hand, belongs to the area of the moving object q, and therefore the motion estimation error signal ERr or ERd assumes a minimum value. As a result, the pixels in the mini-block B are assigned the motion vector Vr or Vd instead of the motion vector Vo. Also, a mini-block C is in a still area, and therefore the motion estimation error signal ER assumes a minimum value. Thus, the pixels in the mini-block C are assigned the motion vector 0 instead of the motion vector Vo.

As described above, a motion estimation error is calculated by mini-block, and a motion vector associated with a minimum motion estimation error is assigned to the motion vector of the pixels in the mini-block. Thus, even in the presence of an inaccurate motion vector detected by block, a motion vector can be calculated substantially accurately by pixel. In other words, it is possible to considerably prevent an isolated deterioration in which a part of the image is replaced by an improper image.

Fig. 37 is a diagram showing a second example configuration of the pixel motion vector calculator 82' of Fig. 34. This example configuration is equivalent to the configuration of Fig. 35 to which a unique vector corrector 88 is added for assuring detection of a motion vector with a still higher accuracy. Specifically, the unique vector corrector 88 first calculates difference values EV1, EV2, EV3 and EV4 by equation (8) below from the motion vector Vom of the current mini-block and the motion vectors Vum, Vrm, Vdm, Vlm of upper, lower, left and right adjacent mini-blocks.

$$EV1 = abs(Vom-Vum) \quad (8)$$

$$EV2 = abs(Vom-Vrm)$$

$$EV3 = abs(Vom-Vdm)$$

$$EV4 = abs(Vom-Vlm)$$

The motion vector Vom for which all the difference values exceed a tolerance (one pixel or less in x direction or one line or less in y direction, for example) is judged as a unique vector. The unique vector is replaced by a corrected vector Vmd generated by the average value of the motion vectors of the upper, lower, left and right adjacent mini-blocks. In this way, a unique vector of inaccurate motion is replaced by a corrected vector ($Vmd = (Vom + Vum + Vrm + Vdm + Vlm)/5$) of higher accuracy for a further improved accuracy of a motion vector.

As described above, a motion estimation error is calculated for each mini-block, and a motion vector associated with a minimum motion estimation error is assigned as a motion vector for the pixels in the mini-block. Even in the case where an inaccurate motion vector is detected by block, therefore, a substantially accurate motion vector can be calculated by pixel. In this way, an isolated deterioration in which a part of the image is replaced by an improper image is remarkably suppressed.

Fig. 38 is a block diagram showing a first example configuration of a motion compensative processing section 76 of Fig. 28. An adder 89 calculates a weighted average of the signal S73 for the current frame and the signal S74 for the previous frame, and generates a signal component Sav for the still area of the interpolated frame. A compensation signal generator 90-1 generates a motion compensation signal Spr from the signal S74 for the previous frame and a corrective interpolated motion vector Vpr. A compensation signal generator 90-2, on the other hand, generates a motion compensation signal Sct from the signal S73 for the current frame and an interpolated motion vector Vct. The operation of the compensation signal generators 90-1 and 90-2 is shown briefly in Fig. 40a. With respect to a point A(x,y) of the interpolated frame fip, the motion compensative signal Spr represents the position at point A(x,y) of the previous frame fpr moved to point A"(x+Vprx,y+Vpry) by the interpolated motion vector Vpr (horizontal component Vprx, vertical component Vpry), and the motion compensative signal Sct represents a point A(x,y) of the current frame fct moved to a position at a point A'(x-Vctx,y-Vcty) by the interpolated motion vector Vct (horizontal component Vcx, vertical component Vcty). In other words,

$$Spr = fpr(x+Vprx,y+Vpry), \qquad (9)$$

$$Sct = fct(x-Vctx,y-Vcty)$$

Thus, the point A can be easily realized by controlling the read address of a memory circuit by an interpolated motion vector in such a manner as to read the signal representing the pixels at points A' and A". The generation of the interpolated motion vector will be described later.

An adder 92 calculates a weighted average of the two motion compensative signals Spr and Sct and generates a signal component Smc for the moving area of the interpolated frame.

A switch 93 selects a signal Sav for the pixels associated with the motion detection signal FD of "0" and a signal Smc for the pixels associated with the signal FD of "1". For the moving area, this output is produced as a progressive scanning signal S5 of NTSC system having a frame frequency of 60 Hz subjected to frame number conversion by the signal processing for motion compensation.

A frame sequence controller 91 generates corrected interpolated motion vectors Vct, Vpr required for motion compensation based on the frame sequence information of the frame sequence signal FS. This operation is briefly shown in Fig. 40b. The signals 1 to 5 in frame sequence for progressive scanning of PAL system having a frame frequency of 50 Hz is converted into signals 1 to 6 in frame sequence for progressive scanning of NTSC system having a frame frequency of 60 Hz by frame interpolation for motion compensation. In the process, the interpolated motion vector is required to coincide with the position of the frame to be interpolated. In accordance with the frame sequence information of the frame sequence signal FS, as shown in Fig. 40b, the coefficients ka, kb for weighting the motion vector signal V are changed to generate interpolated motion vectors Vpr, Vct by equation (10).

$$Vpr = V^*ka/(ka+kb) \qquad (10)$$

$$Vct = -V^*kb/(ka+kb)$$

For the interpolated frame of frame sequence 2, therefore, Vpr = V*5/6 , Vct = -V*1/6 (ka = 5, kb = 1), and for the interpolated frame of frame sequence 3, Vpr = V*4/6 , Vct = -V*2/6 (ka = 4, kb = 2), and so forth. In this way, interpolated motion vectors free of temporal deviation are generated. As a result, a frame number conversion free of temporal fluctuations is realized.

Fig. 39 is a block diagram showing a second example configuration of the motion compensative processing section 76 of Fig. 28. This configuration is different from the example configuration of Fig. 38 in that the signal component Sav for the still area of the interpolated frame is generated from the signal S73 for the current frame and thus can be realized by more simple signal processing. The configuration and functions of the remaining component parts are identical to those of the example configuration of Fig. 38 and will not be described.

As described above, according to this embodiment, the amount of calculations required for signal processing for motion compensation and the circuit size can be reduced. Also, it is possible to realize a system conversion apparatus for conversion from progressive scanning PAL to NTSC system with lesser image quality deterioration.

Fig. 41 is a block diagram showing a configuration of an image signal conversion system of motion compensation type according to another embodiment of the invention. According to this embodiment, the TV signal of PAL system is converted into a progressive scanning signal of a frame frequency of 60 Hz while maintaining the same number of scanning lines as the TV signal of PAL system.

This embodiment is equivalent to the configuration of Fig. 28 from which the vertical 6-5 converter 72 is removed, and the other component parts remain substantially the same. According to this embodiment, both the amount of calculations required for signal processing for motion compensation and the circuit size can be reduced. Also, it is possible to realize a system conversion apparatus for conversion to a progressive scanning PAL system having a frame frequency of 60 Hz with lesser image quality deterioration.

Fig. 42 is a block diagram showing a configuration of an image signal conversion apparatus of motion compensation type according to still another embodiment of the invention. According to this embodiment, the TV signal of PAL system is converted into the progressive scanning TV signal of NTSC system having a frame frequency of 60 Hz with a simpler signal processing for motion vector detection. An IP converter 71, a vertical 6-5 converter 72, a frame memory 73, a motion detector 74 and a motion compensative processing section 76 of Fig. 42 have the same configuration and operate the same way as the corresponding parts of the first embodiment, and therefore will not be described again.

A simplified motion vector detector 94 detects a block-based or pixel-based motion vector using the motion detection signal FD of the motion detector 74.

Fig. 43 is a block diagram showing a first example configuration of the simplified motion vector detector 94. A still block detector 81 detects the presence or absence of the motion detection signal FD of "1" by block, and outputs a "0" only in the case where all the motion detection signals FD are "0", and otherwise outputs a "1" as a signal BM. A controller 83 applies the signal BM as a control signal CT to a block matching section 96 and a pixel motion vector calculator 82'.

The block matching section 96 outputs a signal Va of "0" in the case where the control signal CT represents a still block. In the case where the control signal CT represents a moving block, on the other hand, a block pair with minimum error is searched for by block matching based on the motion detection signal FDpr for the previous frame delayed one frame in a one-frame delay line 95 and the motion detection signal FD for the current frame, and the resulting motion vector is output as a signal Va. In this case, the signals FDpr, FD are binary signals of "0" and "1". The search for a block pair with minimum error, therefore, can be performed in a very simple logic circuit including an EXOR (exclusive-OR) circuit, an adder and a comparator.

A pixel motion vector calculator 82', which has a similar configuration to the corresponding circuit of Figs. 35, 37 described above, calculates the motion compensation error between the motion detection signal FDpr for the previous frame delayed one frame by the motion vectors of the current block and the upper, lower, left and right adjacent blocks and the motion detection signal FD for the current frame. A motion vector associated with minimum motion estimation error is assigned as the motion vector of the pixels. The signals FD, FDpr are binary signals and therefore the calculation of the motion compensation error can be more easily executed.

Fig. 44 is a block diagram showing a second example configuration of the simplified motion vector detector 94 for detecting a block-based motion vector. The still block detector 81 detects the presence or absence of the motion detection signal FD of "1" by block, and outputs "0" only in the case where all motion detection signals are "0". Otherwise, a "1" signal is output. A selector 82 outputs a motion vector signal V which is a motion vector signal of "0" for the still block associated with the signal BM of "0" and which is a motion vector signal Va detected by the simplified block matching section 96 for the moving block associated with the signal BM of "1".

Only in the case where the signal BM is "1", the simplified block matching section 96 searches for a block pair with minimum error by block matching based on the motion detection signal FDpr for the previous frame delayed one frame in the one-frame delay line 95 and the motion detection signal FD for the current frame, and outputs the resulting motion vector Va. In this case, the signals FDpr, FD are binary signals of "0" and "1". Therefore, the search for a block pair with minimum error can be carried out in a very simple logic circuit including an EXOR (exclusive-OR) circuit, an adder and a comparator. As a result, both the amount of calculations for signal processing to search for a motion vector by block matching and the circuit size can be remarkably reduced.

Fig. 45 is a block diagram showing a third example configuration of the simplified motion vector detector 94 for detecting the motion vector by block. This configuration example is equivalent to the configuration of Fig. 44 and further comprises an adjacent motion information detector 83 and a motion vector corrector 84 for assuring the motion vector detection with higher accuracy. Specifically, as in Fig. 32, the motion correlation in the form of the motion detection signal FD in the boundary area with the adjacent blocks is detected and a corrected motion vector is generated and output by averaging the motion vector of the current block and the motion vector of adjacent vectors highly correlated with the current block.

As described above, according to this embodiment, as compared with the embodiment typically shown in Fig. 28, a system conversion apparatus is realized in which both the amount of calculations for signal processing for motion compensation and the circuit size are further reduced.

Fig. 46 is a block diagram showing a conversion apparatus for image signals of motion compensation type according to a further embodiment of the invention. This embodiment is for converting the TV signal of PAL system into the progressive scanning TV signal of NTSC system having a frame frequency of 60 Hz, or especially, the embodiment is intended to correct only the speed behavior liable to exhibit a salient motion judder adversely affecting the smooth motion.

In Fig. 46, an IP converter 71, a vertical 6-5 converter 72, a frame memory 73, a motion detector 74 and a motion vector detector 75 have the same configuration and operate the same way as the corresponding parts of the embodiment shown in Fig. 28. A MC operation controller 97 detects, using a motion vector signal V, the speed behavior (several to ten seconds per screen width or screen height, for example) liable to exhibit a motion judder for each pixel or mini-block. A MC control signal IPM of "1" is output in the blocks, pixels or mini-blocks for which the motion vector signal V is included in the above-mentioned range, and a MC control signal IPM of 0" is output in the blocks, pixels or mini-blocks for which the motion vector signal V is not included in the above-mentioned range.

A motion compensative processing section 98 realizes the configuration of Fig. 39 in a somewhat different form. In the configuration shown in Fig. 39, a switch 93 selects between the signal S73 and the signal Smc in response to the motion detection signal FD. According to this embodiment, in contrast, a signal produced as a logic product (AND circuit) of the motion detection signal FD and the MC control signal IPM is used. Specifically, in the case where the motion detection signal FD is "1" and the MC control signal IPM is "1" at the same time, the signal Sav is selected. The resulting output is the progressive scanning signal S75 of NTSC system having a frame frequency of 60 Hz subjected to frame number conversion by the signal processing of motion compensation type only for the speed behavior liable to exhibit a salient motion judder. According to this embodiment, only the signals within a specified range of a motion speed behavior are processed, and therefore a system conversion apparatus is realized in which both the amount of calculation and the circuit size are reduced and only those motions liable to exhibit a salient motion judder are corrected.

Fig. 47 is a block diagram showing a configuration of a conversion apparatus for an image signal of motion compensation type according to a further embodiment of the invention. This embodiment is for converting the TV signal of PAL system into the progressive scanning TV signal of NTSC system having a frame frequency of 60 Hz. This configuration is equivalent to the configuration of Fig. 42 and further comprises the MC operation controller 97 and the motion compensative processing section 98 of Fig. 46. The operation of this embodiment is similar to that of Fig. 46, so that a progressive scanning signal S5 of NTSC system having a frame frequency of 60 Hz converted in the number of frames by signal processing for motion compensation is produced only for the speed behavior liable to exhibit a salient motion judder. According to this embodiment, a system conversion apparatus is realized which is further reduced in circuit size.

Fig. 48 is a block diagram showing a configuration of a conversion apparatus for an image signal of motion compensation type according to a yet further embodiment of the invention. This embodiment is intended for converting the TV signal of PAL system into the progressive scanning TV signal of NTSC system having a frame frequency of 60 Hz, and suitable for an application in which the signal processing for motion compensation is performed only for a special motion such as horizontal or vertical panning or text scroll with the whole screen moving at a uniform speed.

According to this embodiment, the MC operation controller 97 of Fig. 46 is replaced by a MC confined operation controller 99.

The MC confined operation controller 99 detects a special motion using a motion detection signal FD and a motion vector signal V. Specifically, in the case where the magnitude and direction of a motion vector of a block having a motion vector signal V not zero assumes substantially the same value over the entire screen area for each block, each mini-block or each pixel, then the motion is judged as a vertical panning or a horizontal panning. In that case, a signal "1" is output as a signal IPM for the entire screen area. Also, in the case where the motion area detected by the motion detection signal FD is strip-shaped and the motion vectors for the blocks in this area assume substantially the same value, the motion is judged as a text scroll. In that case, a signal of "1" is output as a signal IPM for the blocks in the corresponding text scroll area. For other areas, the signal IPM of "0" is output.

The motion compensative processing section 98 controls the switch 93 by the signal representing the logic product of the signal IPM and the motion detection signal FD as described above. Only for a special motion, therefore, this output is produced as a signal subjected to frame number conversion by the signal processing for motion compensation.

According to this embodiment, a system conversion apparatus is realized in which only special motions which exhibit a salient motion judder are corrected.

Fig. 49 is a block diagram showing a configuration of a conversion apparatus for image signals of motion compensation type according to a seventh embodiment of the invention. In this embodiment, the MC operation controller 97 of Fig. 47 is replaced by a MC confined operation controller 99. The configuration and operation of the MC confined operation controller 99 are similar to those of the embodiment shown in Fig. 48. This embodiment realizes a system conversion apparatus further reduced in circuit size.

Fig. 50 is a block diagram showing a configuration of a TV receiver employing a conversion apparatus for image signals of motion compensation type according to still another embodiment of the invention. This embodiment refers to the case in which the image display unit displays a progressive scanning image of NTSC system in 525 scanning lines at a frame frequency of 60 Hz.

The baseband TV signal VS is applied to a NTSC decoder 100, a PAL decoder 101 and a controller 102. The NTSC decoder 100 performs signal processing for demodulation (YC separation and color demodulation) according to the NTSC system and outputs a demodulation signal S80 of interlaced scanning (the luminance signal component and the color difference signal components).

The PAL decoder 101 performs the signal processing for demodulation (YC separation and color demodulation) according to PAL system and outputs a demodulation signal S81 (the luminance signal and the color difference signals) of interlaced scanning. A controller 102 identifies the system type based on the sync signal of the TV signal VS and generates a control signal CS required for the receiving operation of the particular system. A switch 103 selects the signal S80 for the NTSC system and the signal S81 for the PAL system according to the control signal CS.

An IP converter 104 performs the signal processing for motion adaptive conversion from interlace to progressive scanning and outputs a progressive scanning signal. A scaling section 105 performs the signal processing for converting the format (the aspect ratio and the number of scanning lines) to that of the image display unit. The signal for PAL system, for example, is converted to a signal of 525 scanning lines by the vertical 6-5 conversion. The progressive scanning signal S83 including the PC image signal, on the other hand, is converted into a signal of 525 scanning lines by a predetermined vertical conversion.

A frame rate converter 106 performs the signal processing for converting the number of frames for motion compensation through the above-mentioned conversion apparatus, and converts the signal into the one having the same frame frequency as the image display unit 108. The progressive scanning signal having the frame frequency of 50 Hz of PAL system, for example, is converted into a signal having a frame frequency of 60 Hz by frame interpolation for motion compensation.

A color space converter 107 performs the signal processing for image improvement such as contour correction or tone correction, conversion to the three primary color signals and the inverted gamma correction (for the display unit having a linear gamma characteristic). The resulting output signal is supplied to a progressive scanning display unit 108 for image display.

With this TV receiver, an inexpensive TV receiver is realized with an improved image quality meeting the multi-source requirements, thereby conspicuously contributing to increased numbers of functions and higher image quality. Even with the image display unit based on HDTV system, the image signal conversion apparatus of motion compensation type according to the invention is applicable to the conversion of the number of frames.

Figs. 51a, 51b show an image signal conversion apparatus of motion compensation type according to still another embodiment of the invention, and are diagrams for explaining the configuration and operation of the apparatus for converting the film image having a frame frequency of 24 Hz such as a movie into a progressive scanning signal having a frame frequency of 60 Hz according to an embodiment of the invention.

Fig. 51a is a block diagram showing a configuration of the apparatus comprising a video demodulator 109, an IP converter 110, a frame number converter 111 and a controller 112.

An input video signal VS is subjected to a predetermined demodulation process in the video demodulator 109 thereby to demodulate an interlaced scanning signal S90 including the luminance signal and the color difference signals.

The controller 112 judges whether the video signal is an ordinary image signal or a telecine image signal (a signal of a motion picture film image or the like converted into a TV format by the 2-3 pull-down) from the period of frame generation during which the inter-frame difference signal component of the video signal VS becomes zero. The controller 112 thus outputs a "1" signal for an ordinary image and a "0" signal for a telecine image as a signal CTS.

The IP converter 110 converts the signal CTS of "1" into a progressive scanning signal by the conventional motion adaptive scanning conversion method. In the case where the signal CTS is "0", on the other hand, a signal of an interpolated scanning line is generated from the signals of the two fields in the same frame by film mode interpolation, and is converted into a progressive scanning telecine signal having a frame frequency of 24 Hz.

In the case where the signal CTS is "1", the frame number converter 111 generates a progressive scanning signal VO having a frame frequency of 60 Hz by a frame number conversion for motion compensation the same way as the above-mentioned embodiments. In the case where the signal CTS is "0", on the other hand, interpolated motion vectors Vct, Vpr required for motion compensation are generated in the frame sequence shown in Fig. 51b. Specifically, as shown in Fig. 51b, coefficients ka, kb weighted on the motion vector signal V are changed to generate interpolated motion vectors Vpr, Vct by the following calculation:

$$Vpr = V*ka/(ka+kb),\ Vct = -V*kb/(ka+kb) \qquad (11)$$

Thus, interpolated motion vectors are generated in such a manner that $Vpr = V*2/5$, $Vct = -V*3/5$ ($ka = 2$, $kb = 3$) for the interpolated frame of frame sequence 2, and $Vpr = V*4/5$, $Vct = -V*1/5$ ($ka = 4$, $kb = 1$) for the interpolated frame of frame sequence 3, and so forth. In this way, the progressive scanning telecine signals of frame sequences 1 and 2 having a frame frequency of 24 Hz are converted by frame interpolation for motion compensation into the progressive scanning signals VO of frame sequences 1 to 5 having a frame frequency of 60 Hz.

As described above, according to this embodiment, an inexpensive, high-quality frame number conversion apparatus for converting a film image of a movie or the like into a progressive scanning signal having a frame frequency of 60 Hz.

The present invention is not limited to the above-described embodiments In the embodiments shown in Figs. 32 to 49, for example, a configuration lacking the vertical 6-5 converter as in the embodiment of Fig. 41 can realize a system conversion apparatus for converting the TV signal of PAL system into a progressive scanning signal having a frame frequency higher than 50 Hz.

According to the aforementioned embodiments, it is possible to realize a system conversion apparatus with only a small amount of calculations required for signal processing for motion compensation, a smaller circuit size and a reduced image quality deterioration. As a result, a significant effect is attained for meeting multi-source requirements and improving the image quality of the TV receiver.

## Claims

1. A system conversion apparatus for image signals, characterized by:

means (5) for searching for a block-based motion vector according to an image signal;

means (6) for assigning a motion vector associated with a predetermined motion compensation error determined for each mini-block as a pixel-based motion vector in a mini-block, using the motion vectors of the current block and adjacent blocks searched for; and

means (7) for generating an interpolated frame of an image signal using said pixel-based motion vector thereby to convert the number of frames of said image signal.

**2.** A system conversion apparatus for image signals according to Claim 1,
characterized in that a motion vector with minimum motion estimation error is assigned to a pixel-based motion vector in a mini-block as said motion vector associated with a predetermined motion estimation error.

**3.** A system conversion apparatus for image signals according to Claim 1, characterized in that said search means includes

means (10) for searching for no block-based motion vector for blocks with the motion thereof not detected by a frame difference signal of said image signal, and assigning a "0" to said block-based motion vector.

**4.** A system conversion apparatus for image signals according to Claim 1,
characterized in that said assignment means (10) assigns a "0" as said pixel-based motion vector to the pixels with the motion thereof not detected by a frame difference signal of said image signal.

**5.** A system conversion apparatus for image signals, characterized by:

a scan converter (1) for converting an interlaced scanning image signal to a progressive scanning image signal;

a motion detector (4) for detecting the motion of an image from the frame difference signal of said progressive scanning image signal;

a block-based vector search section (5) for searching for a block-based motion vector using the output signal from said motion detector;

a pixel-based motion vector generator (6) for assigning a motion vector associated with a predetermined motion estimation error determined by mini-block using the motion vectors of the current block and adjacent blocks searched, as a pixel-based motion vector in said mini-block; and

a motion compensative interpolated frame generator (7) for generating an interpolated frame of an image signal using said pixel-based motion vector.

**6.** A system conversion apparatus for image signals according to Claim 5,
characterized in that said block-based motion vector search section (5) assigns a "0" as a block-based motion vector to the blocks with the motion thereof not detected by said motion detector, and searches for a block-based motion vector by block matching as far as the blocks with the motion thereof detected by said motion detector are concerned.

**7.** A system conversion apparatus for image signals according to Claim 6,
characterized in that said block-based motion vector search section (5) calculates a motion vector associated with minimum estimation error among a plurality of preset representative motion vectors as far as the blocks with the motion thereof detected are concerned, and with reference to said motion vector, detects an appropriate motion vector with minimum motion estimation error as a block-based motion vector from motion vectors within a predetermined range.

**8.** A system conversion apparatus for image signals according to Claim 6,
characterized in that said block-based motion vector search section (5) calculates, as far as the blocks with the motion thereof detected are concerned, a motion vector associated with minimum estimation error among the motion vectors of the immediately preceding block and a plurality of preset representative motion vectors, and with reference to said motion vector, detects an appropriate motion vector with minimum motion estimation error within a predetermined range as a block-based motion vector.

**9.** A system conversion apparatus for image signals according to Claim 5,
characterized in that said pixel-based motion vector generator (6) assigns a "0" to the pixel-based motion vector as far as the pixels with the motion thereof not detected by said motion detector are concerned,

and as far as the pixels with the motion thereof detected by said motion detector are concerned, assigns a block-based motion vector as a pixel-based motion vector in the case where the value of the motion estimation error based on the block-based motion vector is less than a threshold level, while assigning a motion vector with minimum motion estimation error calculated based on a mini-block as a pixel-based motion vector in the case where the value of the estimation error based on the block-based motion vector is not less than the threshold level.

**10.** A system conversion apparatus for image signals according to Claim 9,
characterized in that said calculation of the estimation error based on a mini-block is carried out for the pixels in the area including said mini-block.

**11.** A system conversion apparatus for image signals according to Claim 9,
characterized in that in the case where the value of the motion estimation error based on said block-based motion vector is not less than a threshold level, said pixel-based motion vector generator (6) re-searches for a motion vector by block matching using said block-based motion vector as a reference vector for each sub-block one half as large in both horizontal and vertical directions, calculates a reference motion vector with minimum motion estimation error for each mini-block using said researched motion vector and the block-based motion vectors of adjacent blocks as reference vectors, and assigns said calculated reference motion vector as a pixel-based motion vector.

**12.** A system conversion apparatus for image signals according to Claim 9,
characterized in that in the case where the value of the motion estimation error based on said block-based motion vector is not less than a threshold level, first re-search means (20) of said pixel-based motion vector generator (6) re-searches for a motion vector by block matching using said block-based motion vector as a reference vector for each first sub-block one half as large in both horizontal and vertical directions, and then second re-search means (20) of said pixel-based motion vector generator (6) re-searches for a motion vector by block matching using said re-searched motion vector as a reference vector for each second sub-block one half as large as said first sub-block in both horizontal and vertical directions, said re-search operation being repeated until the block size reaches that of a mini-block thereby to generate a pixel-based motion vector.

**13.** A system conversion apparatus for image signals according to Claim 9,
characterized in that in the case where the value of the motion estimation error based on the block-based motion vector is not less than a threshold level, first research means (24), second re-search means (25) and n-th re-search means (26) of said pixel-based motion vector generator (6) re-search a first sub-block one half as large in both horizontal and vertical directions, a second sub-block one fourth as large in both horizontal and vertical directions, and an n-th sub-block equal in size to a mini-block for a first motion vector, a second motion vector and an n-th motion vector, respectively, by block matching using said block-based motion vector as a reference vector, calculates one of said first, second and n-th motion vectors with minimum motion correction error in each mini-block, and assigns said calculated motion vector as a pixel-based motion vector.

**14.** A system conversion apparatus for image signals according to any one of Claims 10 to 13,
characterized in that said pixel-based motion vector generator (6) calculates a motion estimation error using the luminance signal component of the image signal.

**15.** A system conversion apparatus for image signals according to any one of Claims 10 to 13,
characterized in that said pixel-based motion vector generator (6) calculates a motion estimation error using the luminance signal component and the color components of the image signal.

**16.** A system conversion apparatus for image signals according to any one of Claims 5 to 15,
characterized in that said motion compensative interpolated frame generator (7) includes a motion speed detector (32) for detecting a special motion based on said pixel-based motion vector, and said frame interpolation for motion compensation is carried out using the output signal of said motion speed detector.

**17.** A system conversion apparatus for image signals according to any one of Claims 5 to 16, characterized by:

a scene change (34) detector for detecting a scene change from an accumulated value in a motion detection area during one-frame period, and
characterized in that the search for a block-based motion vector, the generation of a pixel-based motion vector and the frame interpolation for motion compensation are suspended and an interpolated frame is generated by selected one of the signal of the current frame and the signal of the previous frame, as far as the frame for which a scene change is detected is concerned.

**18.** A system conversion apparatus for image signals according to any one of Claims 5 to 17, characterized in that a scaling processing section (39) having the function of compressing or enlarging the number of scanning lines of the image signal from N to M is inserted in the stage subsequent to said scanning converter (1).

**19.** A system conversion apparatus for image signals according to any one of Claims 5 to 17, characterized in that a scaling processing section (39) having the function of compressing or enlarging the number of scanning lines of the image signal from N to M is inserted in the stage subsequent to said motion compensative interpolated frame generator (7).

**20.** A system conversion method for image signals, characterized by the steps of:

searching for a block-based motion vector according to an image signal (5);
assigning a motion vector associated with a predetermined motion estimation error determined for each mini-block using said block-based motion vector to a pixel-based motion vector in said mini-block (6); and
changing the number of frames of the image signal by generating an interpolated frame of the image signal using said pixel-based motion vector (7).

**21.** A system conversion method for image signals according to Claim 20,
characterized in that said step of changing the number of frames of said image signal includes the substep of detecting a special motion based on said pixel-based motion vector, and an interpolated frame of said image signal is generated using said detection signal of a special motion.

**22.** A system conversion method for image signals according to Claim 20 or 21, further characterized by the steps of

detecting a scene change from an accumulated value in a motion detection area during the one-frame period of said image signal (34), and
suspending the search for a block-based motion vector, the assignment of a pixel-based motion vector and the generation of an interpolated frame, and generating an interpolated frame from selected one of the signal of said current frame and the signal of said previous frame, as far as the frame for which a scene change is detected is concerned.

**23.** A system conversion method for image signals according to any one of Claims 20 to 22, further characterized by the scaling step (39) of changing the number of the scanning lines of the image signal, said scaling step being inserted in the stage before said step (5) of searching for a block-based motion vector.

**24.** A system conversion method for image signals according to any one of Claims 20 to 22, further characterized by the scaling step (39) of changing the number of the scanning lines of the image signal, said scaling step being inserted in the stage subsequent to said step (7) of changing the number of frames of said image signal.

**25.** A motion compensative frame number conversion apparatus characterized by:

a motion detector (4) for detecting the motion of an image from the frame difference signal of the image signal;
a block-based motion vector search means (5) for searching for a block-based motion vector using the output signal from said motion detector;
a pixel-based motion vector generator (6) for assigning the motion vector associated with a predetermined motion estimation error determined for each mini-block using the motion vectors of said searched current block and the adjacent blocks, to the pixel-based motion vector in said mini-block; and
a motion compensative interpolated frame generator (7) for generating an interpolated frame of the image signal using said pixel-based motion vector.

**26.** A motion compensative frame number conversion apparatus according to Claim 25,
characterized in that said motion compensative interpolated frame generator includes a motion speed detector (32) for detecting a special motion based on said pixel-based motion vector, and the operation of frame interpolation for motion compensation is performed using the output signal of said motion speed detector.

**27.** A motion compensative frame number conversion apparatus according to Claim 25, further characterized by a scene change detector (34) for detecting a scene change from an accumulated value in a motion detection area during the one-frame period, and

characterized in that the search for a block-based motion vector, the generation of a pixel-based motion vector and the frame interpolation for motion compensation are suspended and an interpolated frame is generated from selected one of the signal of said current frame and the signal of said previous frame, as far as the frame for which a scene change is detected is concerned.

**28.** A television receiver characterized by:

an input section (51) for inputting a image signal;
an image format converter (54) for searching for a block-based motion vector based on said image signal, generating a pixel-based motion vector using said block-based motion vector and generating an interpolated frame of the image signal using said pixel-based motion vector thereby to change the number of frames of the image signal; and
a display unit (55) for displaying the output of said image format converter (54).

**29.** A television receiver according to Claim 28,

characterized in that said image format converter performs the scaling process for changing the number of scanning lines of the image signal before said search for said block-based motion vector or after said change of the number of frames.

**30.** A television receiver characterized by:

an input section (51) for inputting a plurality of image signals of different systems;
a plurality of image format converters (60) for searching for a block-based motion vector based on said image signal from said input section, generating a pixel-based motion vector using said block-based motion vector and generating an interpolated frame of the image signal using said pixel-based motion vector thereby to change the number of frames of the image signal;
a multiplexer (62) for multiplexing the output signals of said image format converters; and
a display unit (55) for displaying an image based on the output of said multiplexer.

**31.** A television receiver according to Claim 30,

characterized in that said image format converter performs the scaling process for changing the number of scanning lines of the image signal before the search for said block-based motion vector or after the change of the number of frames.

**32.** A television receiver according to Claim 31, further characterized in that a signal mixer (63) for mixing a plurality of image signals input from said input section is inserted in the stage before said image format converter.

**33.** A television receiver characterized by:

an input section (51) for inputting the image signal;
a motion compensative frame number converter (39) for searching for a block-based motion vector according to the image signal, assigning the motion vector associated with a predetermined motion estimation error determined for each mini-block using the motion vectors of the searched current block and adjacent blocks, to the pixel-based motion vector in a mini-block, and generating an interpolated frame of the image signal using said pixel-based motion vector thereby to change the number of frames of the image signal; and
a display unit (55) for displaying the output of said motion compensative frame number converter.

**34.** A television receiver characterized by:

an input unit (51) for inputting a plurality of image signals of different systems;
a plurality of image format converters (60) including a motion compensative frame number converter for searching for a block-based motion vector according to the image signal, assigning the motion vector associated with a predetermined motion compensation error determined for each mini-block using the motion vectors of the searched current block and adjacent blocks, to the pixel-based motion vector in said mini-block, and generating an interpolated frame of the image signal using said pixel-based motion vector thereby to change the number of frames of the image signal;

a multiplexer (62) for multiplexing the output signal from said image format converters; and

a display unit (55) for displaying an image based on the output signal of said multiplexer.

**35.** A television receiver according to Claim 34,

characterized in that said motion compensative frame number converter assigns a "0" as a block-based motion vector to the blocks for which the motion of said image is not detected, and searches for a block-based motion vector by block matching, as far as the blocks for which the motion is detected are concerned.

**36.** A television receiver according to Claim 35,

characterized in that as far as the blocks with the motion detected are concerned, a motion vector minimizing the motion estimation error among a plurality of preset representative motion vectors is calculated and a motion vector minimizing the motion estimation error is detected as a block-based motion vector from the motion vectors within a predetermined range with reference to said motion vector minimizing the motion estimation error.

**37.** A television receiver according to Claim 35,

characterized in that in the case of a block with the motion detected, a motion vector minimizing the motion estimation error is calculated among the motion vectors of the block immediately preceding to said first block and a plurality of preset representative motion vectors, and a motion vector minimizing the motion estimation error is detected as a block-based motion vector from the motion vectors within a predetermined range from said motion vector minimizing the motion estimation error.

**38.** A television receiver according to Claim 34,

characterized in that said motion compensative frame number converter (39) assigns a "0" to the pixel-based motion vector for the pixels with the motion of the image signal not detected, and

as far as the pixels with the motion detected are concerned, assigns a block-based motion vector to the pixel-based motion vector in the case where the value of the motion estimation error based on said block-based motion vector is less than a threshold level, and assigns a motion vector minimizing the motion estimation error calculated based on a mini-block as a pixel-based motion vector in the case where the value of the estimation error based on the block-based motion vector is not less than a threshold level.

**39.** A television receiver according to Claim 38,

characterized in that the estimation error is calculated based on said mini-block for the pixels in an area including said mini-block.

**40.** A television receiver according to Claim 38,

characterized in that in the case where the value of the motion estimation error based on said block-based motion vector is not less than a threshold level, a motion vector is researched by block matching using said block-based motion vector as a reference vector for each sub-block one half as large in both horizontal and vertical directions, a reference motion vector minimizing the motion estimation error is calculated for each mini-block with said re-searched motion vector and the block-based motion vectors of adjacent blocks as reference vectors, and said calculated reference motion vector is assigned as a pixel-based motion vector.

**41.** A television receiver according to Claim 38,

characterized in that in the case where the value of the motion estimation error based on said block-based motion vector is not less than a threshold level, a motion vector is re-searched by block matching using said block-based motion vector as a reference vector for each first sub-block one half as large in both horizontal and vertical directions, and then a motion vector is re-searched by block matching using said re-searched motion vector as a reference vector for each second sub-block one half as large as said first sub-block in both horizontal and vertical directions, said re-search step being repeated until the mini-block size is reached thereby to generate a pixel-based motion vector.

**42.** A television receiver according to Claim 38,

characterized in that in the case where the value of the motion estimation error based on the block-based motion vector is not less than a threshold level, first, second and n-th motion vectors are re-searched by block matching using said block-based motion vector as a reference vector for a first sub-block one half in size in both horizontal and vertical directions, a second sub-block one fourth smaller in size and subsequent sub-blocks up to a n-th sub-block making up a mini-block, respectively; one of the motion vectors of the first, second or the n-th sub-block having a minimum motion estimation error is calculated based on a mini-block; and said calculated motion vector is assigned as an pixel-based motion vector.

**43.** A television receiver according to Claim 34,
characterized in that said motion compensative frame number converter includes a motion speed detector (34) for detecting a special motion based on said pixel-based motion vector, and said interpolated frame is generated using the output signal of said motion speed detector.

**44.** A television receiver according to Claim 34,
characterized in that said motion compensative frame number converter includes a scene change detector (34) for detecting a scene change from an accumulated value in a motion detection area during a one-frame period, and
as far as the frame for which a scene change is detected is concerned, the search for said block-based motion vector, the assignment of a pixel-based motion vector and the generation of an interpolated frame are suspended and an interpolated frame is generated from selected one of the signal of the current frame and the signal of the previous frame.

**45.** A motion compensative image signal conversion apparatus for converting a first image signal into a second image signal having a greater number of frames than said first image signal, said apparatus comprising a motion information detector for detecting the motion information of an image from an image signal generator of a first image and a motion compensative processing section for changing the number of frames by motion compensative frame interpolation using the motion vector in said motion information, characterized in that said motion information detector includes:

a motion detector (74) for detecting the presence or absence of the motion for each pixel from the difference signal component between the frames of said first image signal;
a motion vector detector (75) for detecting a motion vector of a moving block including motion-detected pixels by block matching but not detecting a motion vector of a still block including only pixels with the motion not detected; and
said motion compensative processing section includes means (76) for interpolating a frame with a pixel-based motion vector output from said motion vector detector.

**46.** A conversion apparatus for motion compensative image signals according to Claim 45, characterized in that said motion vector detector includes:

an adjacent motion information detector (83) for detecting the motion correlation between the current block and a plurality of blocks adjacent thereto from the output signal of said motion detector (75); and
a motion vector corrector (84) for calculating a corrected motion vector based on the motion vectors of said current block and said adjacent blocks in accordance with the motion correlation signal output from said adjacent motion information detector.

**47.** A conversion apparatus for motion compensative image signals according to Claim 46,
characterized in that said adjacent motion information detector (83) is so configured as to determine the correlation according to the number of pixels having the motion in the boundary area between said current block and said adjacent blocks.

**48.** A conversion apparatus for motion compensative image signals according to Claim 46, characterized in that said motion vector detector includes:

an error calculator (85) for calculating the correction error based on the motion vectors of the prevailing block and a plurality of blocks adjacent thereto; and
means (86, 87) for assigning a motion vector of "0" to the pixels in a still block with the motion not detected and assigning a motion vector corresponding to a minimum value of the output of said error calculator as a motion vector of the pixels in said mini-block for a moving block with the motion detected.

**49.** A conversion apparatus for motion compensative image signals according to Claim 48, characterized in that said motion vector detector further includes a corrector (88) for correcting a unique vector detected from the correlation of the motion vectors between the current mini-block and mini-blocks adjacent thereto by calculating an average value of the motion vectors of said mini-blocks.

**50.** A conversion apparatus for motion compensative image signals according to any one of Claims 45 to 49,

characterized in that as far as a moving block is concerned, said block-based motion vector detector of said motion vector detector includes means for detecting a motion vector by block matching using the signals of the current frame and the previous frame output from said motion detector.

**51.** A conversion apparatus for motion compensative image signals according to any one of Claims 45 to 50,

characterized in that said motion vector detector includes a motion vector selector for selecting a motion vector within a specific motion range of said motion vector or said corrected motion vector, and said motion correction processing section corrects the motion using only the motion vectors within a specific range selected.

**52.** A conversion apparatus for motion compensative image signals according to Claim 51,

characterized in that said motion vector within a specific range has a speed liable to exhibit a motion judder or corresponds to selected one of vertical panning, horizontal panning and text scroll.

**53.** A conversion apparatus for motion compensative image signals according to any one of Claims 45 to 52,

characterized in that said first image signal generator includes an IP converter (71) for converting the television signal of PAL system into a progressive scanning signal sequence having a frame frequency of 50 Hz by conversion from interlace to progressive scanning, and said second image signal is a progressive scanning signal of NTSC system.

**54.** A conversion apparatus for motion compensative image signals according to any one of Claim 53,

characterized in that said first image signal generator includes a vertical 6-5 converter (72) for changing the number of scanning lines of the output signal sequence of said IP converter to the number of scanning lines equivalent to the NTSC system by the 6-5 conversion.

**55.** A television receiver comprising a progressive scanning image display unit having a frame frequency of approximately 60 Hz and a motion compensative image signal converter according to any one of Claims 45 to 52, characterized in that the interlaced scanning signal demodulated from the television signal of PAL system is processed for motion compensative frame interpolation by said motion compensative image signal converter and displayed on said image display unit.

**56.** An image display apparatus comprising a progressive scanning image display unit (55) having a frame frequency of approximately 60 Hz and a motion compensative image signal converter according to any one of Claims 44 to 52, characterized in that the film image signal having a frame frequency of 24 Hz is processed for motion compensative frame interpolation by said motion compensative image signal converter and displayed on said image display unit.

**57.** In a moving signal conversion method for correcting the motion using a motion vector of an image signal and converting a first image signal into a second image signal having a greater number of frames than said first image signal by frame interpolation,

characterized in that the motion for each pixel is detected from the inter-frame difference signal component of said first image signal, said first image signal is segmented into a plurality of blocks, a motion vector is detected by block matching only for the blocks including pixels in motion, and the amount of motion is determined for each pixel using said motion vector only for the pixels in motion in response to the signal detecting the presence or absence of the motion of each pixel by said frame interpolation.

**58.** A motion compensative image signal conversion method according to Claim 57,

wherein said motion vector detector detects the correlation of motion between the current block and a plurality of blocks adjacent thereto using said detection signal as to the presence or absence of motion for each pixel, and the motion vector of said current block is corrected using the motion vectors of said adjacent blocks in accordance with said correlation.

**59.** A motion compensative image signal conversion method according to Claim 57 or 58,

wherein said motion vector detector selects a motion vector within a specific range of said motion vector or said corrected motion vector, and said motion compensative processing section corrects the motion using only the motion vectors within said selected specific range.

**60.** A motion compensative image signal conversion method according to Claim 57 or 58, wherein said first image signal and said second image signal are the television image signal of PAL system and the television image signal of NTSC system, respectively.

FIG. 1

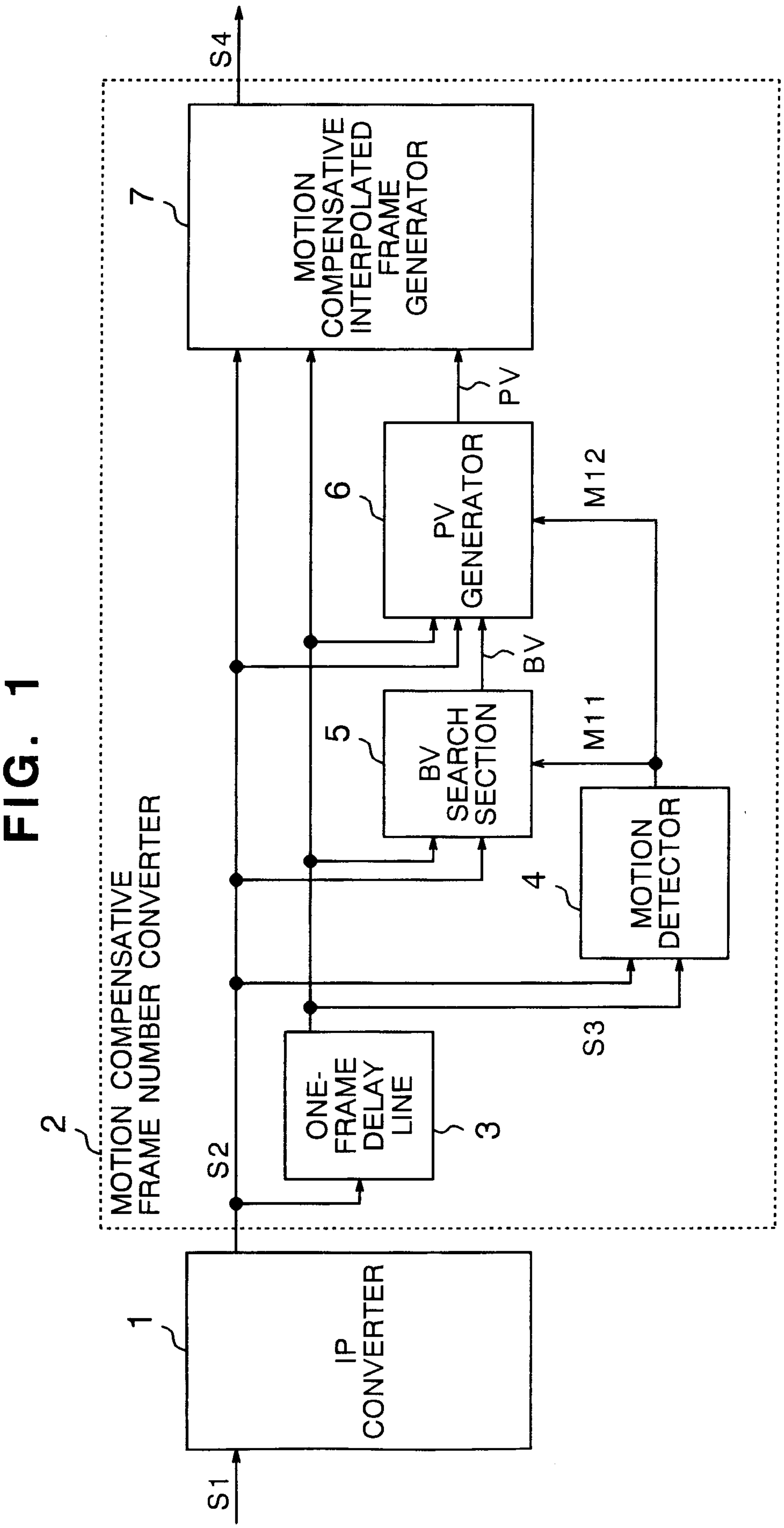
S1
1
IP CONVERTER
2
MOTION COMPENSATIVE FRAME NUMBER CONVERTER
S2
3
ONE-FRAME DELAY LINE
S3
4
MOTION DETECTOR
5
BV SEARCH SECTION
M11
BV
6
PV GENERATOR
M12
PV
7
MOTION COMPENSATIVE INTERPOLATED FRAME GENERATOR
S4

FIG. 2

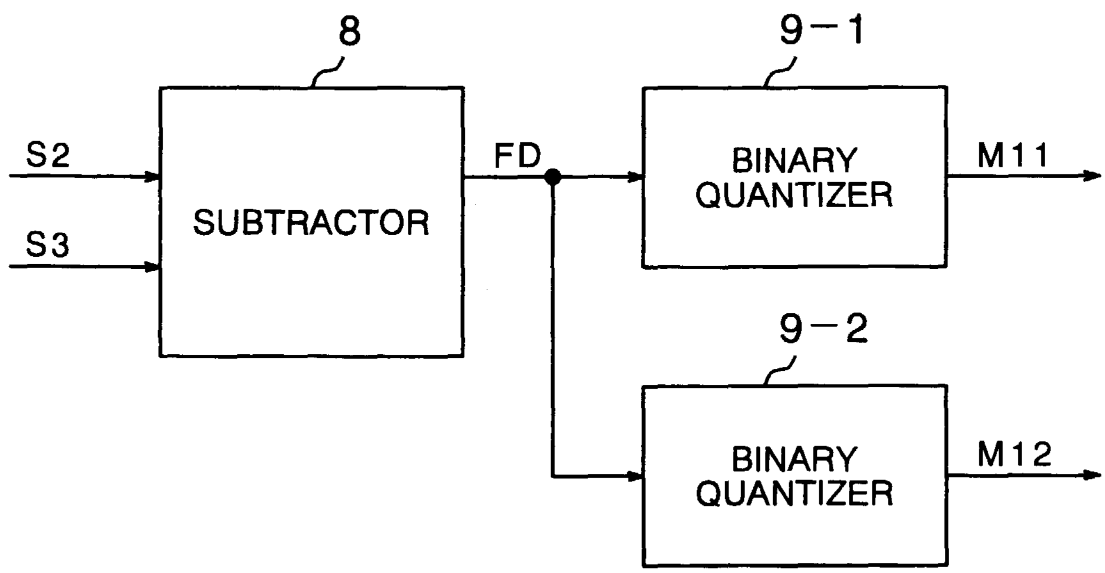
8
9-1
9-2
S2
S3
SUBTRACTOR
FD
BINARY QUANTIZER
M11
BINARY QUANTIZER
M12

FIG. 3

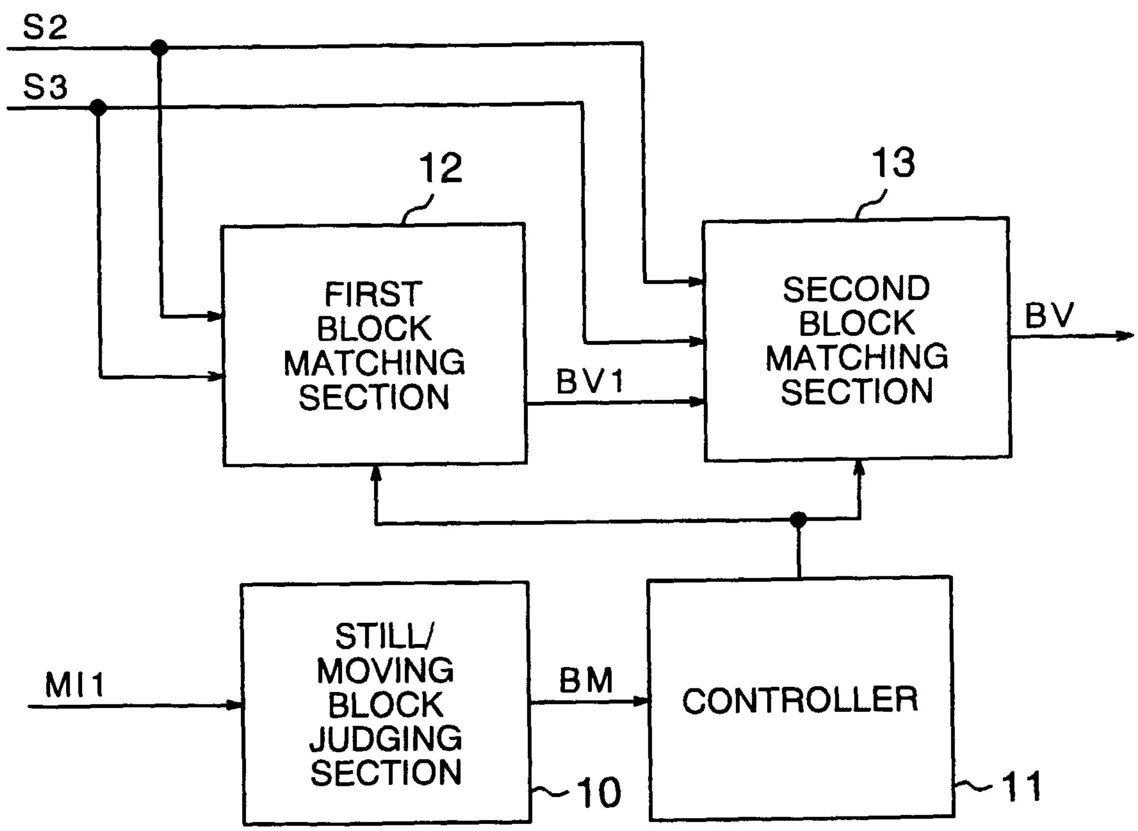
S2
S3
12
13
FIRST BLOCK MATCHING SECTION
SECOND BLOCK MATCHING SECTION
BV1
BV
MI1
STILL/ MOVING BLOCK JUDGING SECTION
BM
CONTROLLER
10
11

FIG. 4

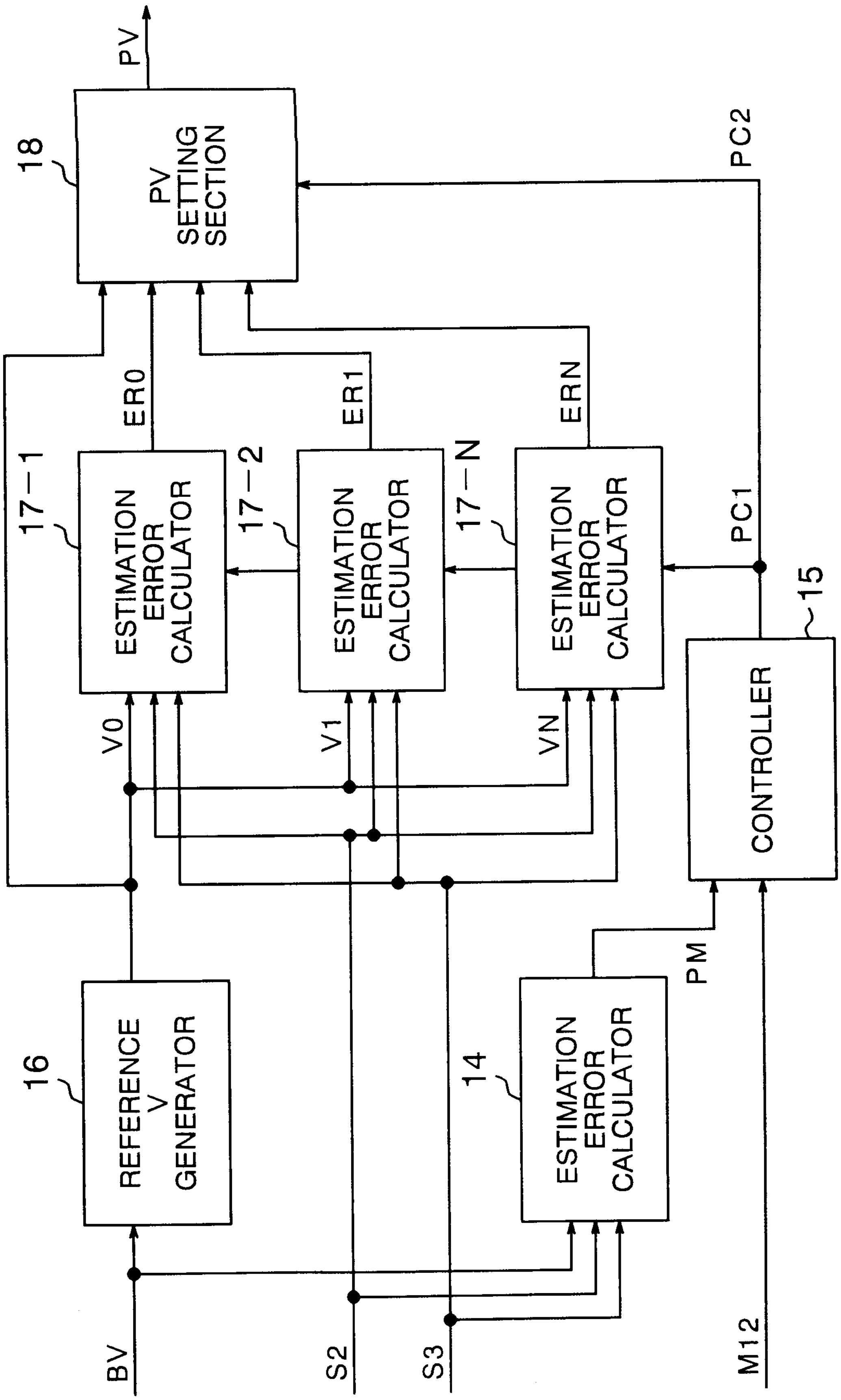

PV
18
PV
SETTING
SECTION
PC2
17−1
ER0
ESTIMATION
ERROR
CALCULATOR
17−2
ER1
ESTIMATION
ERROR
CALCULATOR
17−N
ERN
ESTIMATION
ERROR
CALCULATOR
PC1
15
CONTROLLER
V0
V1
VN
16
REFERENCE
V
GENERATOR
14
ESTIMATION
ERROR
CALCULATOR
PM
BV
S2
S3
M12

FIG. 5

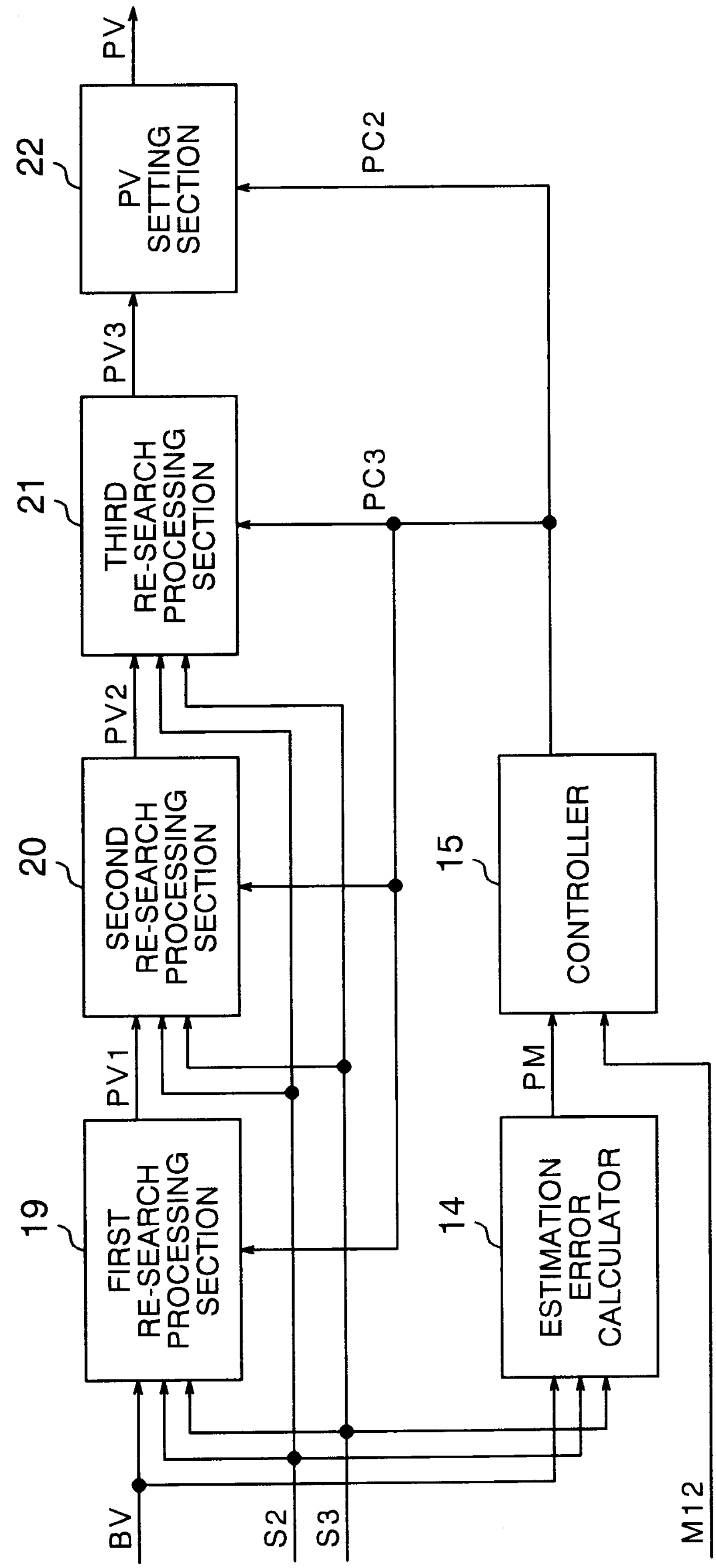

BV
S2
S3
M12
19
FIRST RE-SEARCH PROCESSING SECTION
PV1
20
SECOND RE-SEARCH PROCESSING SECTION
PV2
21
THIRD RE-SEARCH PROCESSING SECTION
PV3
22
PV SETTING SECTION
PV
14
ESTIMATION ERROR CALCULATOR
PM
15
CONTROLLER
PC3
PC2

FIG. 6

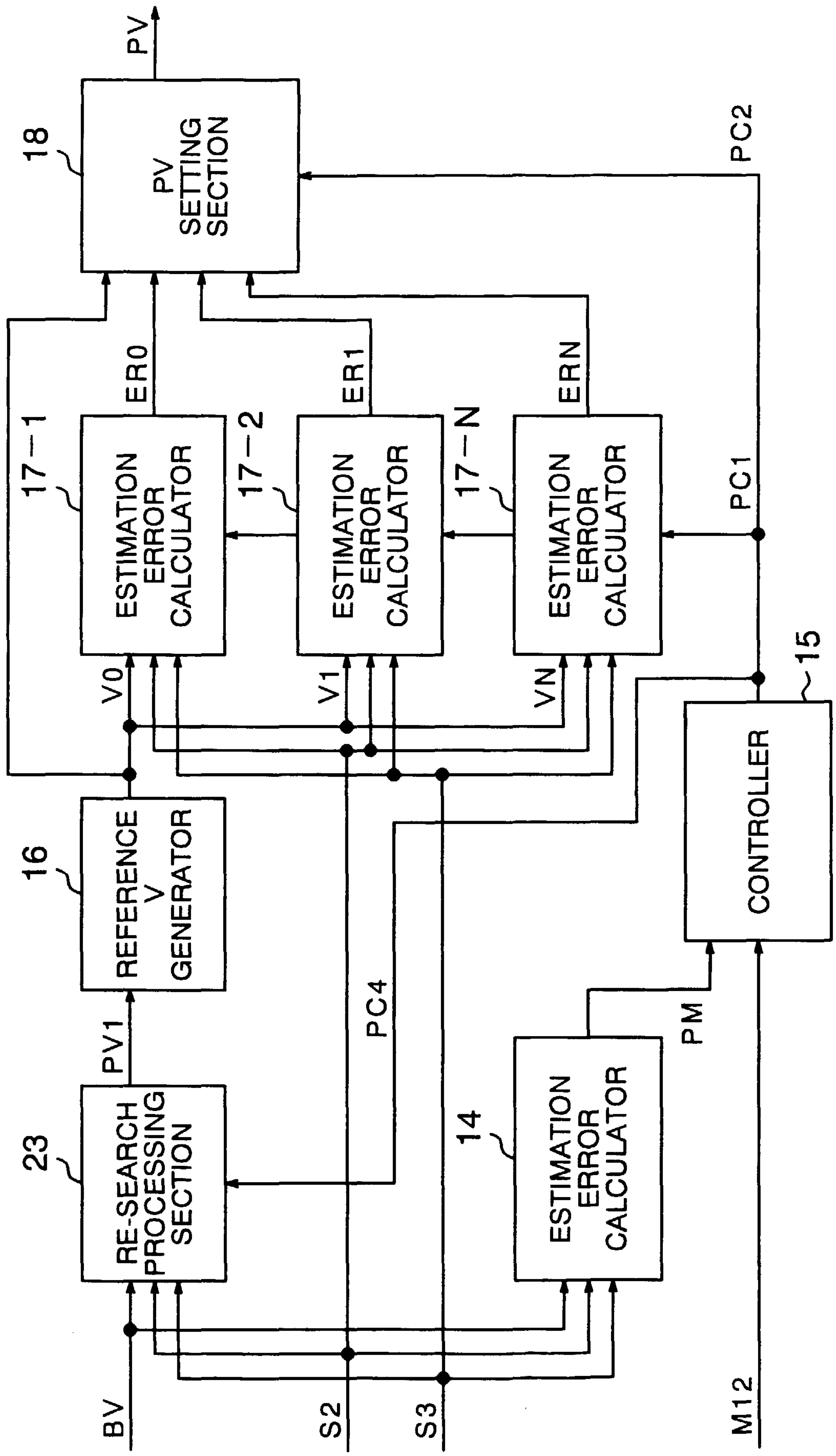

PV
18
PV SETTING SECTION
PC2
ER0
ER1
ERN
17-1
17-2
17-N
ESTIMATION ERROR CALCULATOR
ESTIMATION ERROR CALCULATOR
ESTIMATION ERROR CALCULATOR
PC1
V0
V1
VN
15
CONTROLLER
16
REFERENCE V GENERATOR
PC4
PV1
23
RE-SEARCH PROCESSING SECTION
14
ESTIMATION ERROR CALCULATOR
PM
BV
S2
S3
M12

FIG. 7

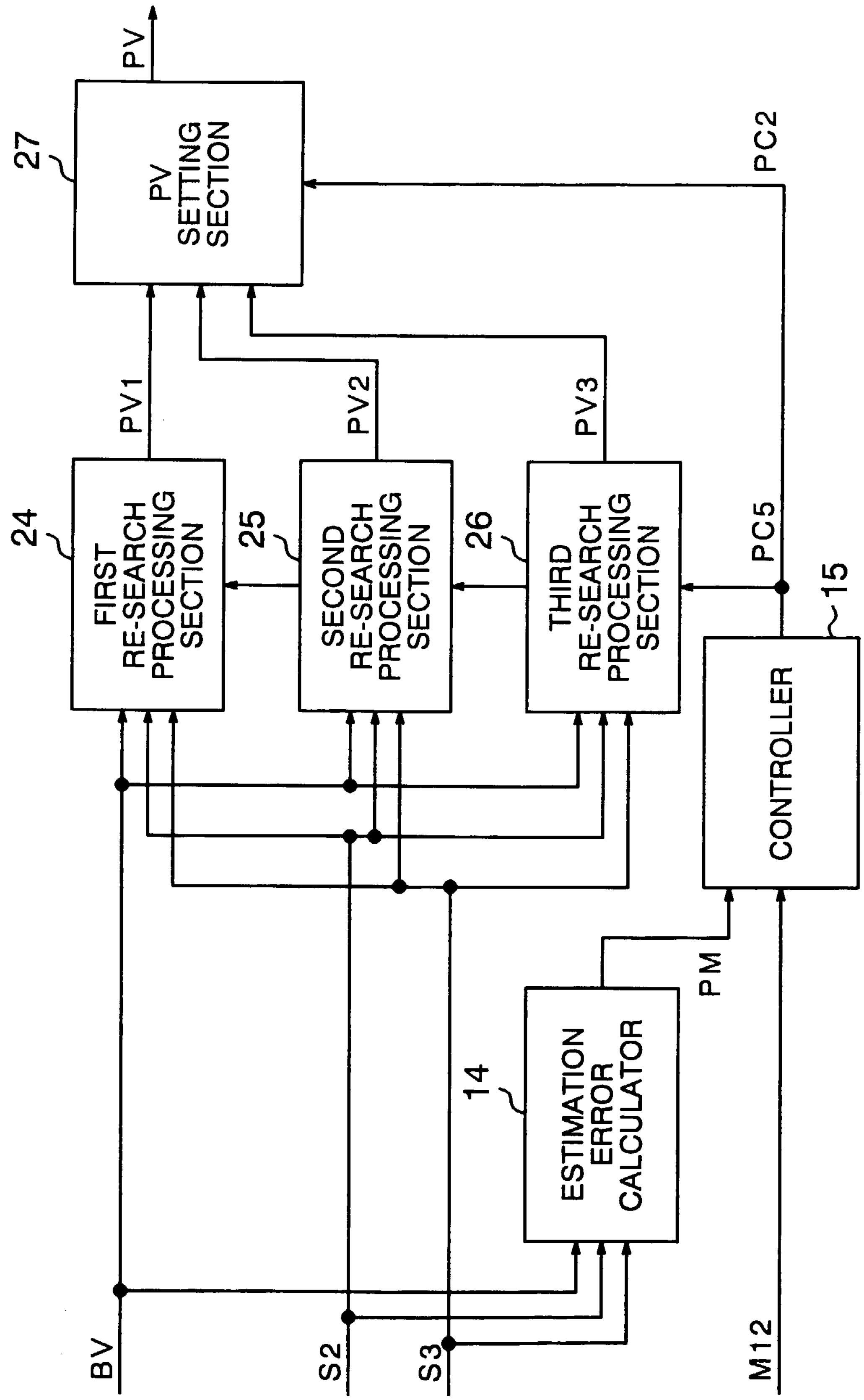

PV
27
PV SETTING SECTION
PC2
PV1
PV2
PV3
24
FIRST RE-SEARCH PROCESSING SECTION
25
SECOND RE-SEARCH PROCESSING SECTION
26
THIRD RE-SEARCH PROCESSING SECTION
PC5
15
CONTROLLER
PM
14
ESTIMATION ERROR CALCULATOR
BV
S2
S3
M12

FIG. 8

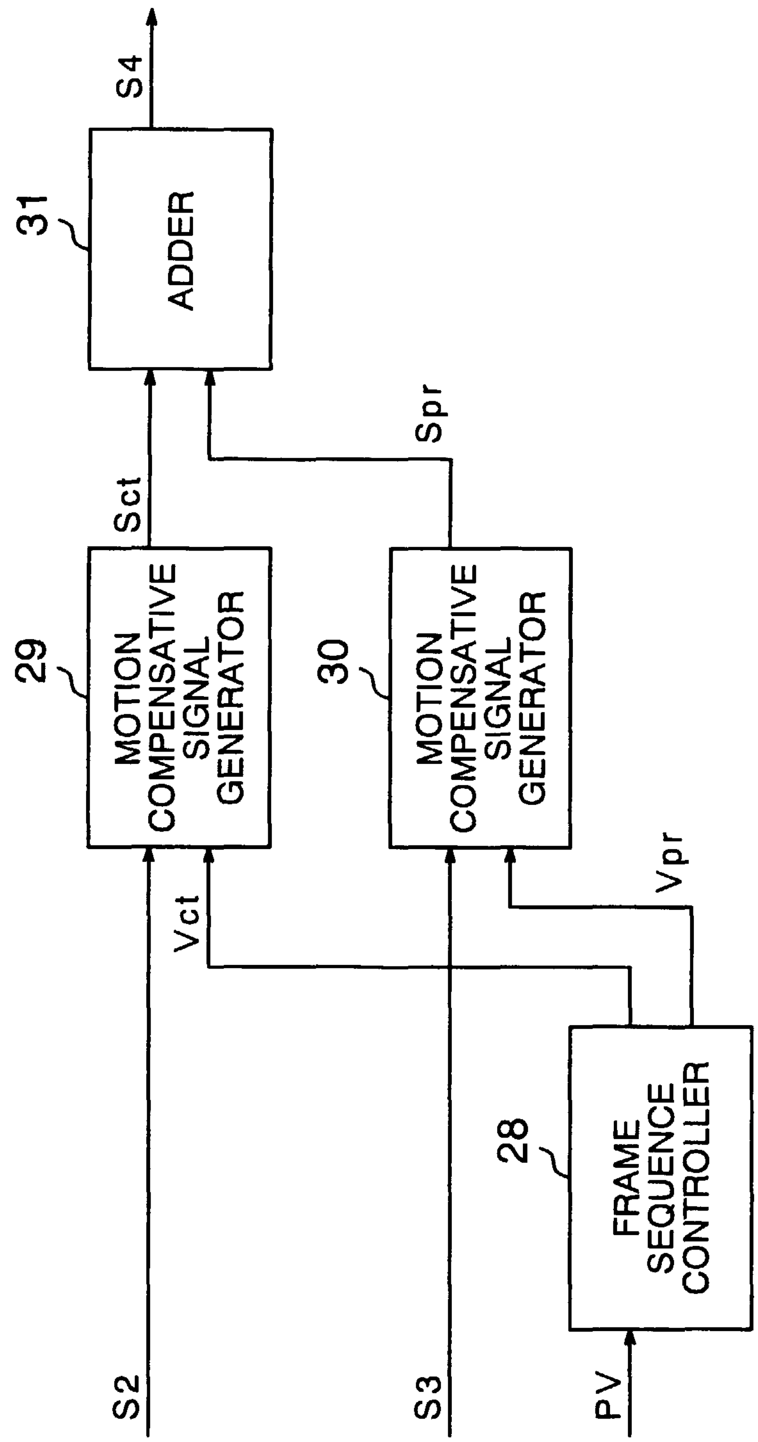
S4
31
ADDER
Sct
Spr
29
MOTION COMPENSATIVE SIGNAL GENERATOR
30
MOTION COMPENSATIVE SIGNAL GENERATOR
Vct
Vpr
28
FRAME SEQUENCE CONTROLLER
S2
S3
PV

FIG. 9a

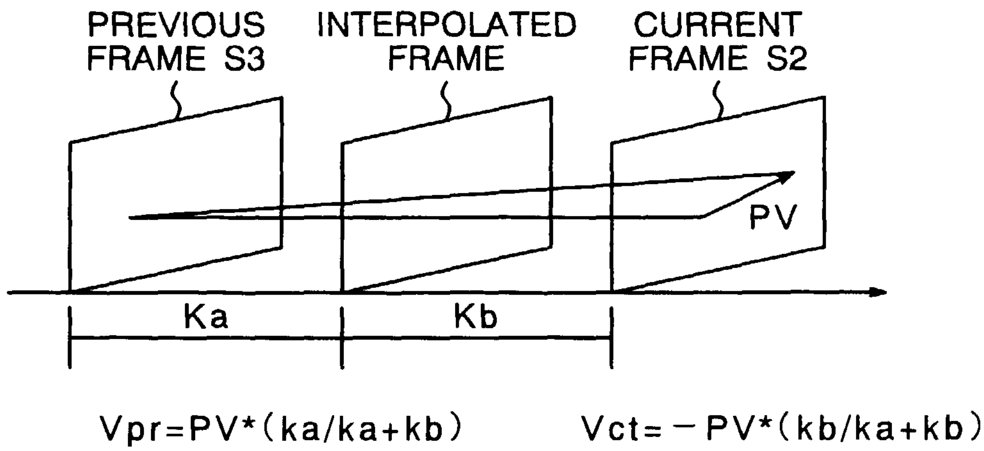


FIG. 9b

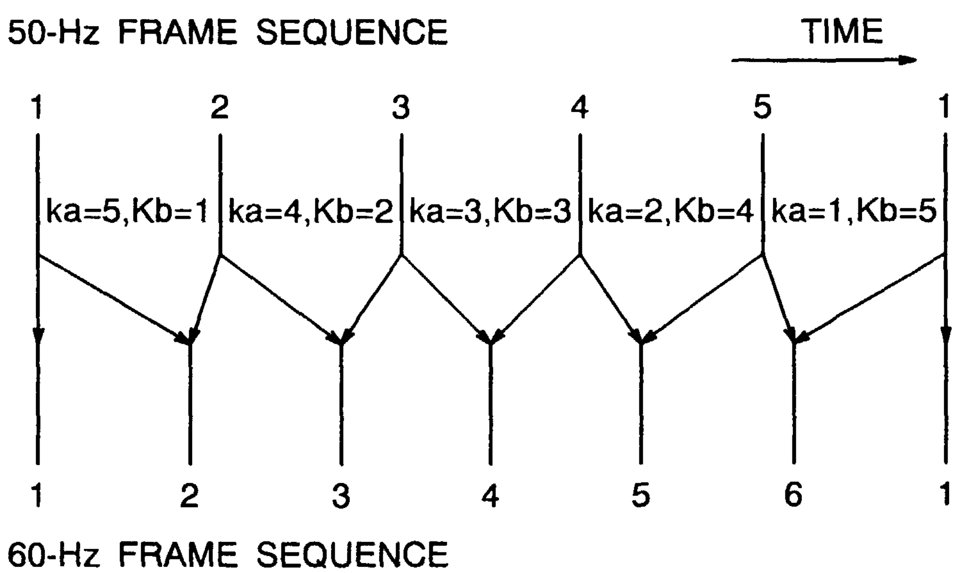


FIG. 9c

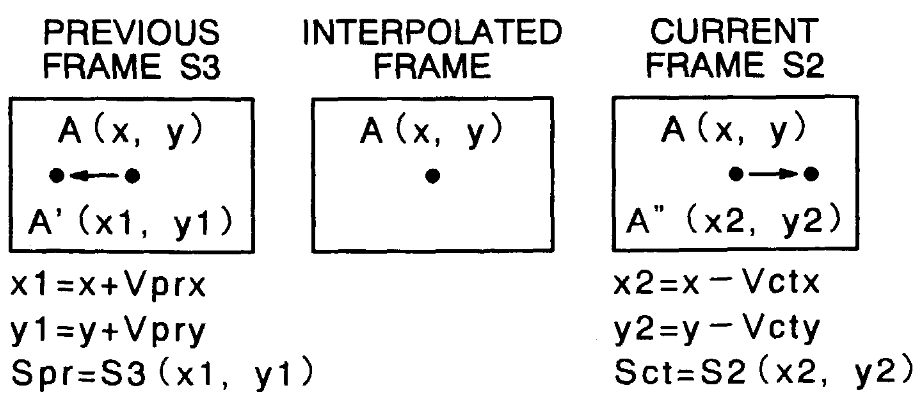

FIG. 10

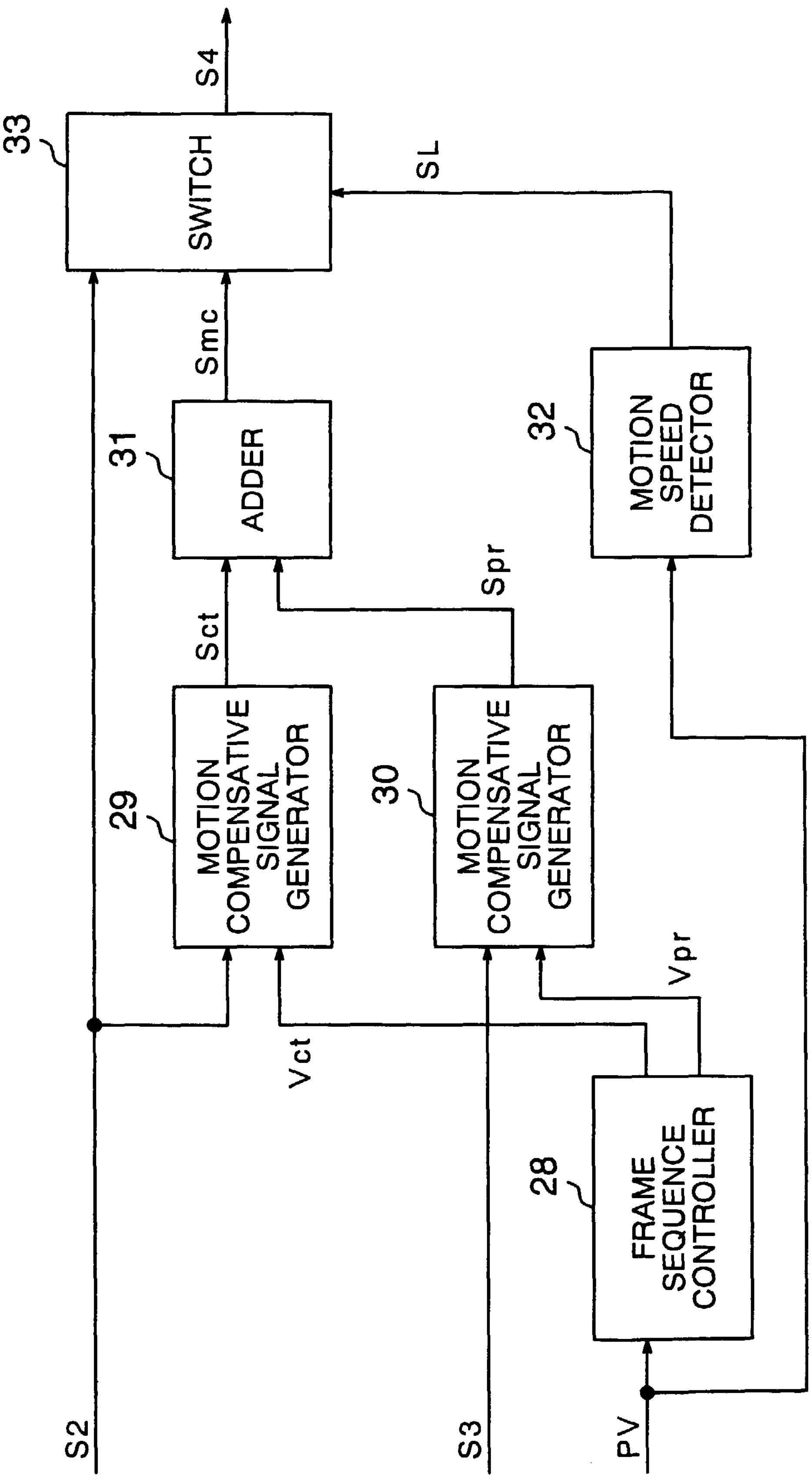
S2
S3
PV
28
FRAME SEQUENCE CONTROLLER
Vct
Vpr
29
MOTION COMPENSATIVE SIGNAL GENERATOR
30
MOTION COMPENSATIVE SIGNAL GENERATOR
Sct
Spr
31
ADDER
Smc
32
MOTION SPEED DETECTOR
SL
33
SWITCH
S4

FIG. 11

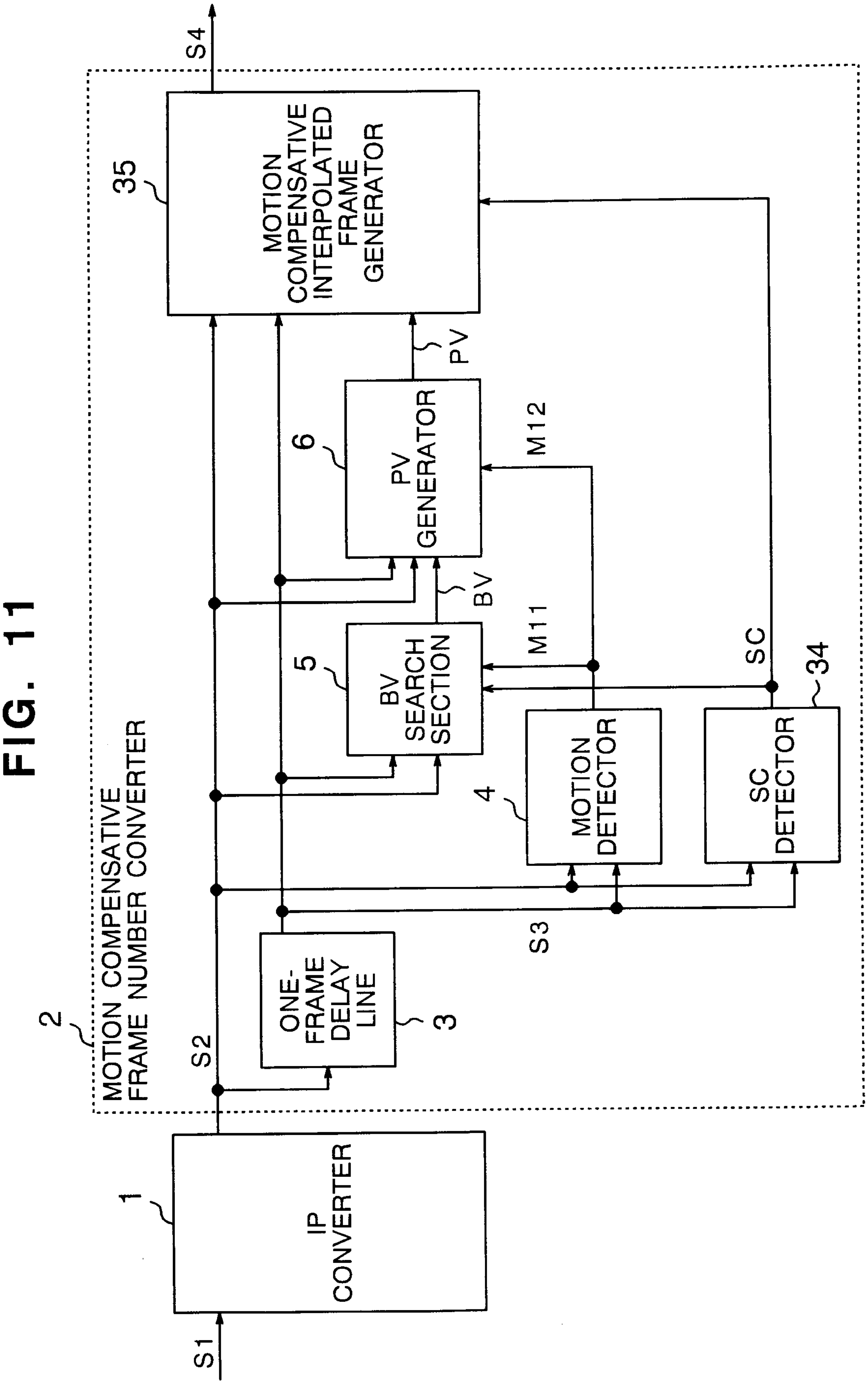
2
MOTION COMPENSATIVE
FRAME NUMBER CONVERTER
S1
1
IP CONVERTER
S2
ONE-FRAME DELAY LINE
3
S3
4
MOTION DETECTOR
34
SC DETECTOR
SC
M11
5
BV SEARCH SECTION
BV
6
PV GENERATOR
M12
PV
35
MOTION COMPENSATIVE INTERPOLATED FRAME GENERATOR
S4

FIG. 12

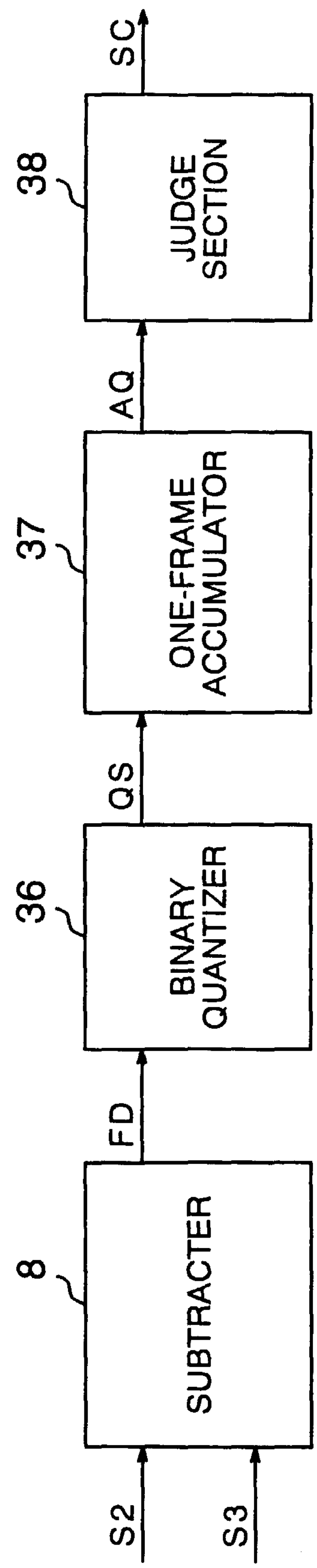
S2
S3
8
SUBTRACTER
FD
36
BINARY QUANTIZER
QS
37
ONE-FRAME ACCUMULATOR
AQ
38
JUDGE SECTION
SC

FIG. 13

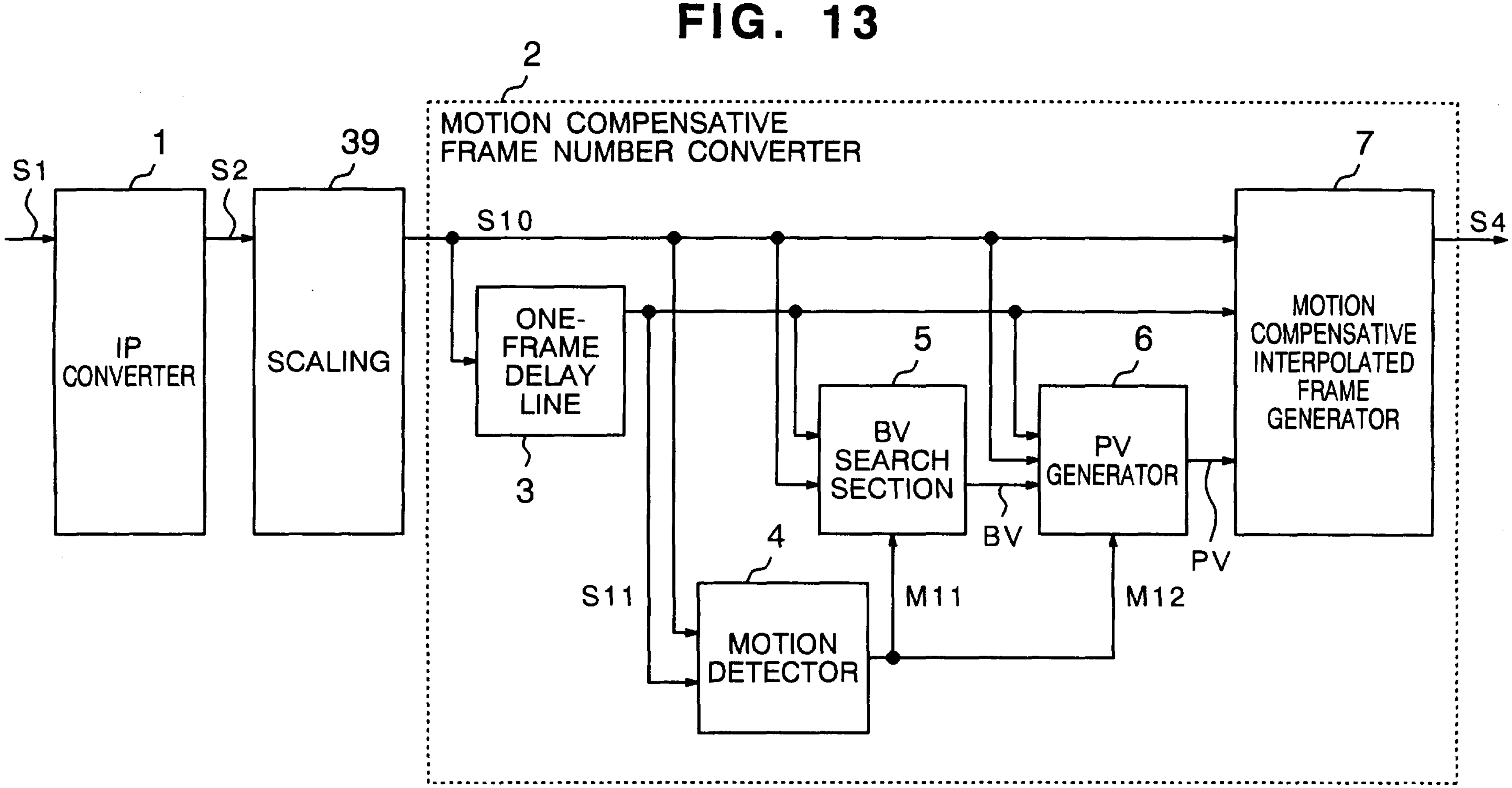
S1
1
IP CONVERTER
S2
39
SCALING
2
MOTION COMPENSATIVE FRAME NUMBER CONVERTER
S10
ONE-FRAME DELAY LINE
3
S11
4
MOTION DETECTOR
5
BV SEARCH SECTION
M11
BV
6
PV GENERATOR
M12
PV
7
MOTION COMPENSATIVE INTERPOLATED FRAME GENERATOR
S4

FIG. 14

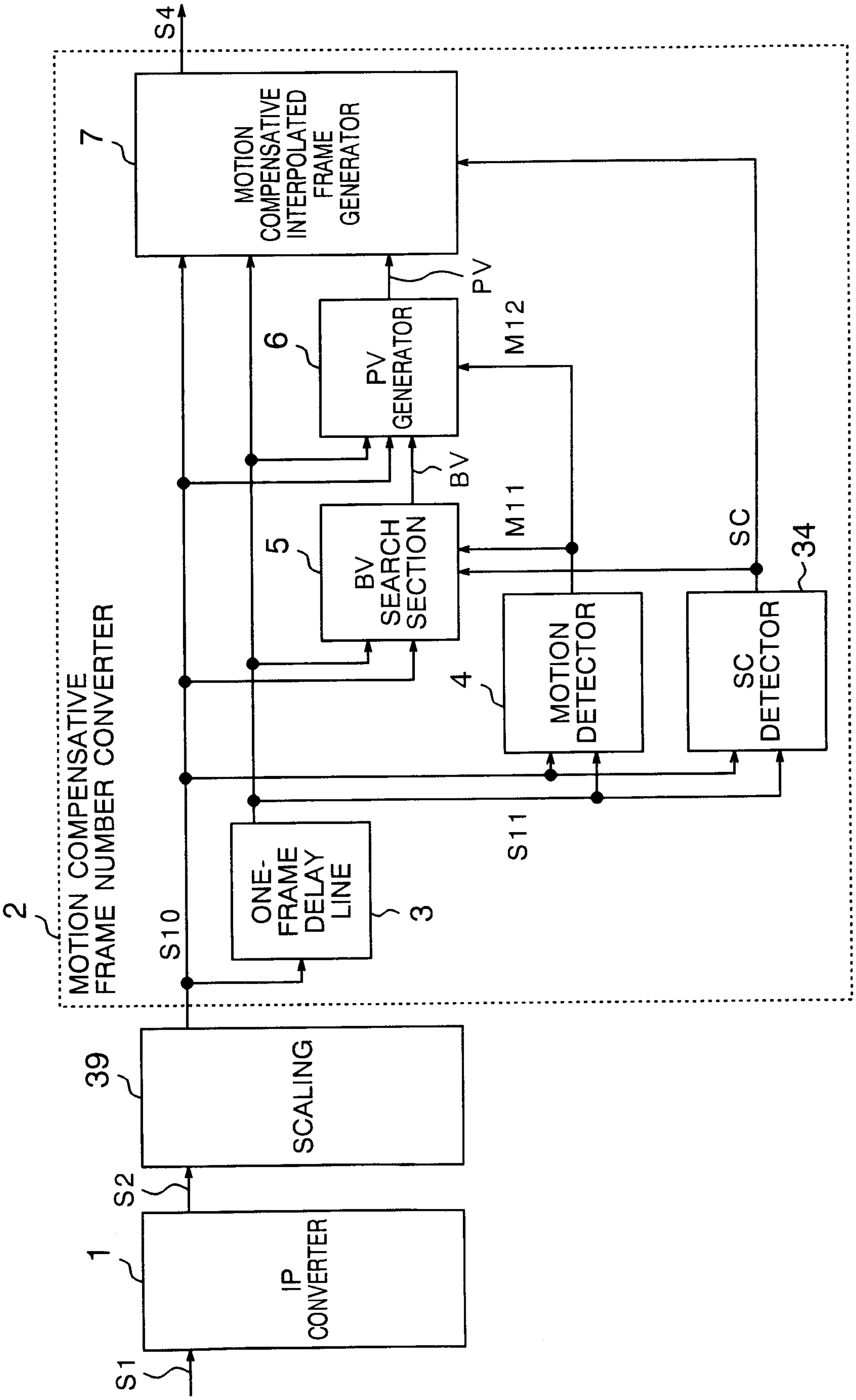

S4
7
MOTION COMPENSATIVE INTERPOLATED FRAME GENERATOR
PV
6
PV GENERATOR
M12
BV
5
BV SEARCH SECTION
M11
SC
34
4
MOTION DETECTOR
SC DETECTOR
S11
2
MOTION COMPENSATIVE FRAME NUMBER CONVERTER
S10
ONE-FRAME DELAY LINE
3
39
SCALING
S2
1
IP CONVERTER
S1

FIG. 15

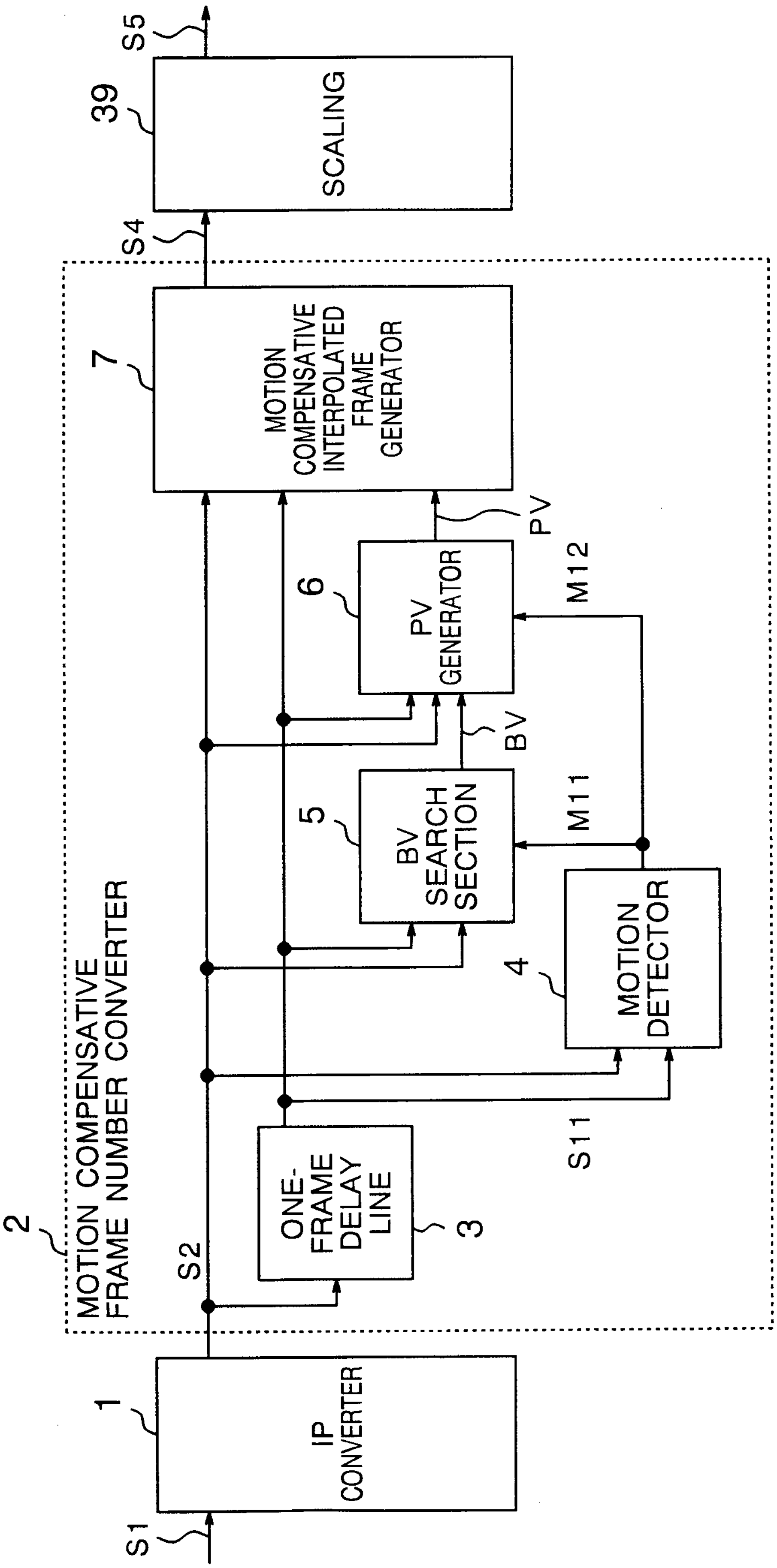
S1
1
IP CONVERTER
2
MOTION COMPENSATIVE FRAME NUMBER CONVERTER
S2
3
ONE-FRAME DELAY LINE
S11
4
MOTION DETECTOR
5
BV SEARCH SECTION
M11
BV
6
PV GENERATOR
M12
PV
7
MOTION COMPENSATIVE INTERPOLATED FRAME GENERATOR
S4
39
SCALING
S5

FIG. 16

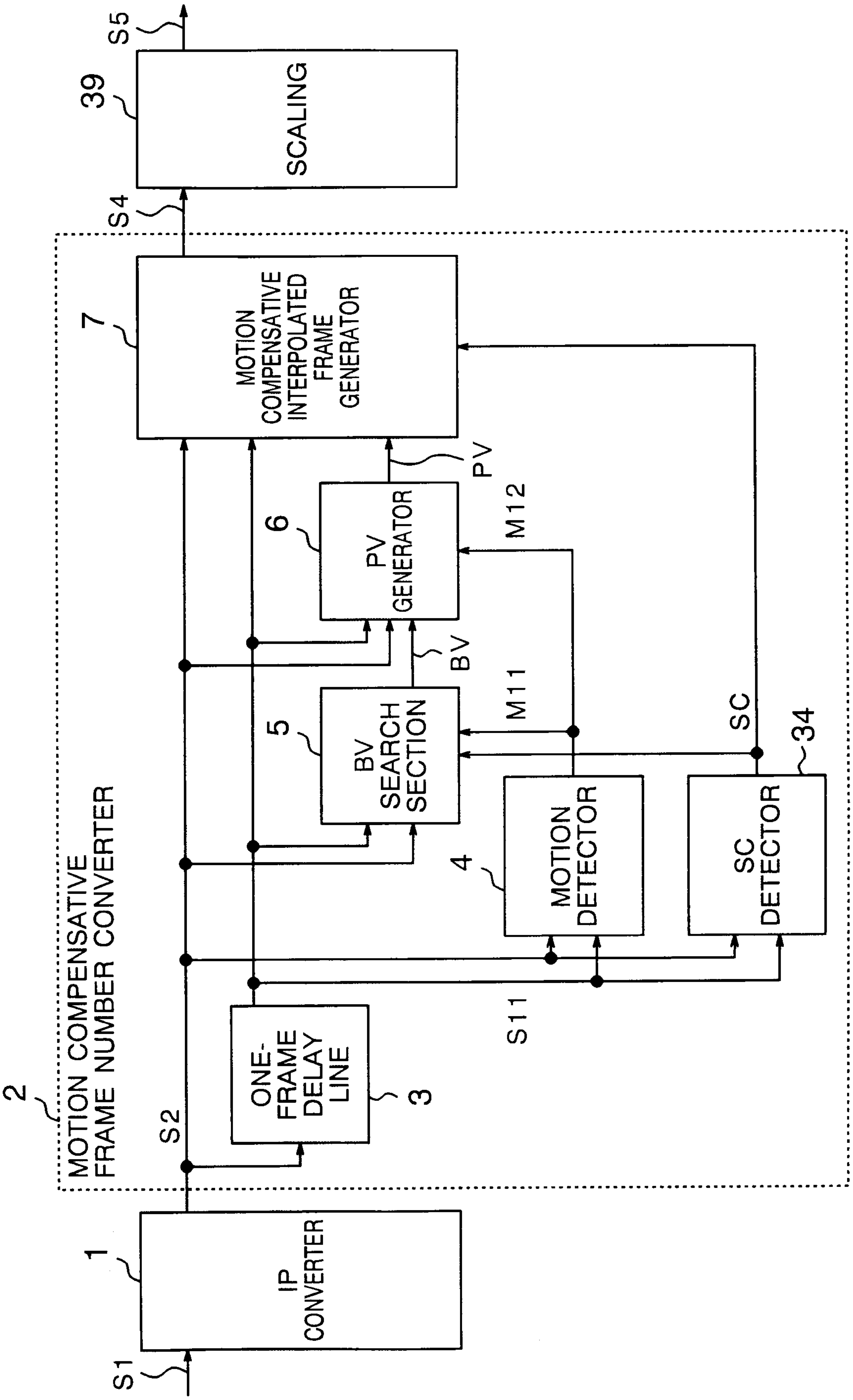
S1
1
IP CONVERTER
S2
2
MOTION COMPENSATIVE FRAME NUMBER CONVERTER
ONE-FRAME DELAY LINE
3
S11
4
MOTION DETECTOR
34
SC DETECTOR
5
BV SEARCH SECTION
M11
SC
BV
6
PV GENERATOR
M12
PV
7
MOTION COMPENSATIVE INTERPOLATED FRAME GENERATOR
S4
39
SCALING
S5

FIG. 17

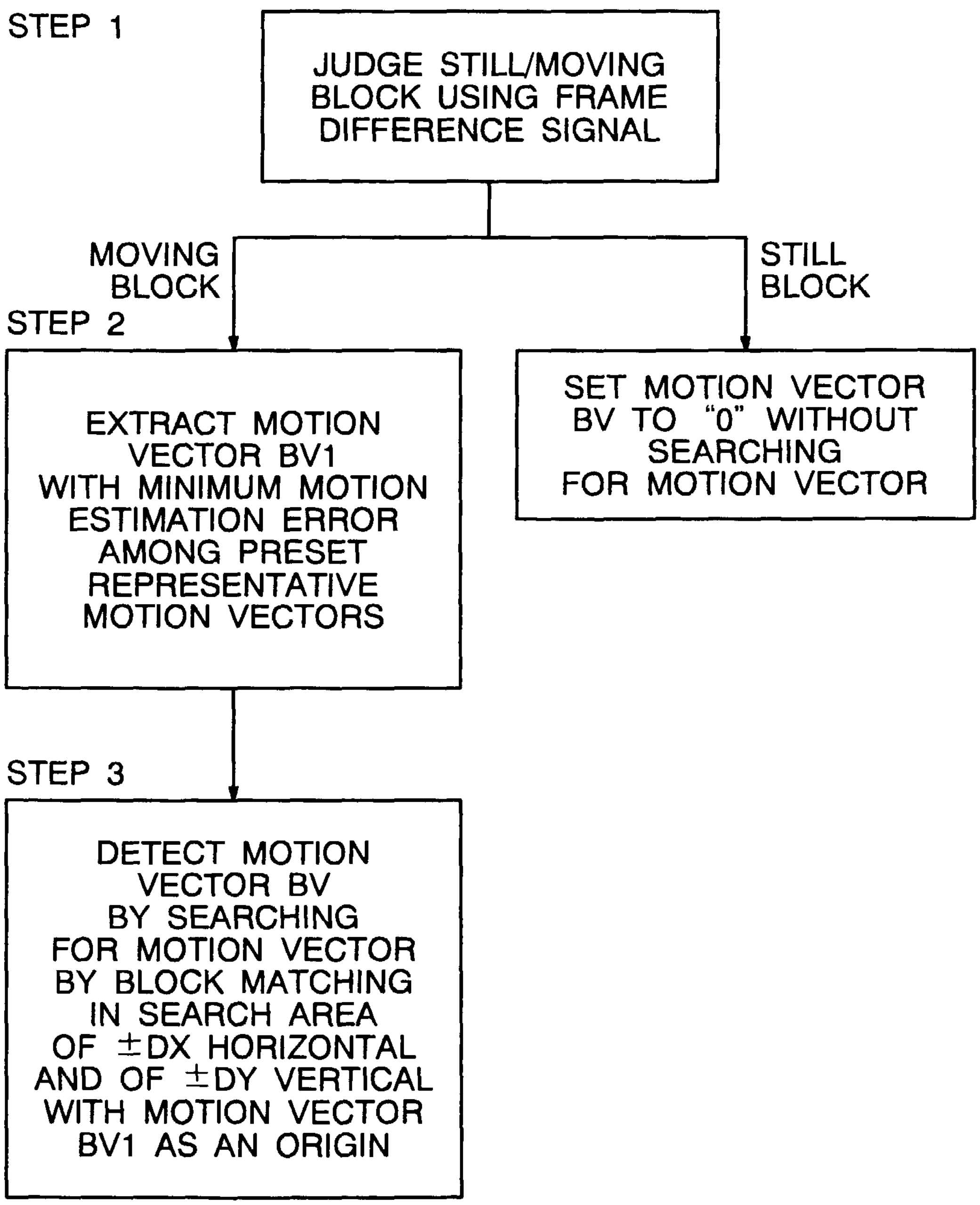
STEP 1
JUDGE STILL/MOVING BLOCK USING FRAME DIFFERENCE SIGNAL
MOVING BLOCK
STILL BLOCK
STEP 2
EXTRACT MOTION VECTOR BV1 WITH MINIMUM MOTION ESTIMATION ERROR AMONG PRESET REPRESENTATIVE MOTION VECTORS
SET MOTION VECTOR BV TO "0" WITHOUT SEARCHING FOR MOTION VECTOR
STEP 3
DETECT MOTION VECTOR BV BY SEARCHING FOR MOTION VECTOR BY BLOCK MATCHING IN SEARCH AREA OF ±DX HORIZONTAL AND OF ±DY VERTICAL WITH MOTION VECTOR BV1 AS AN ORIGIN

# FIG. 18a

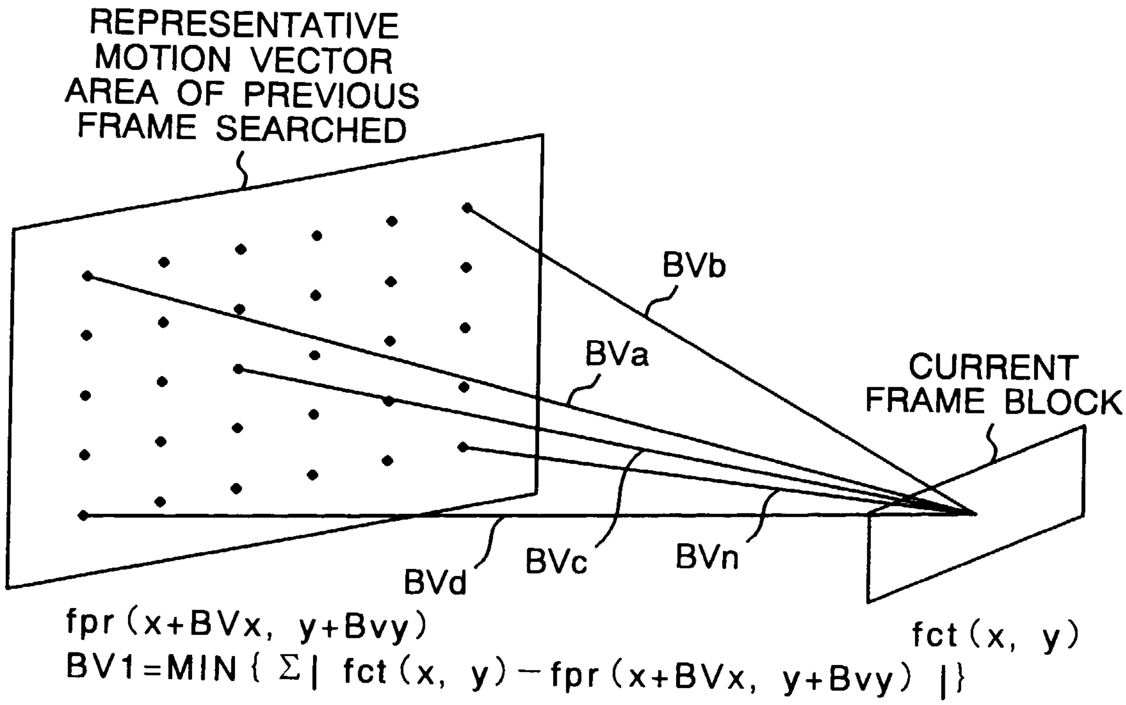


# FIG. 18b

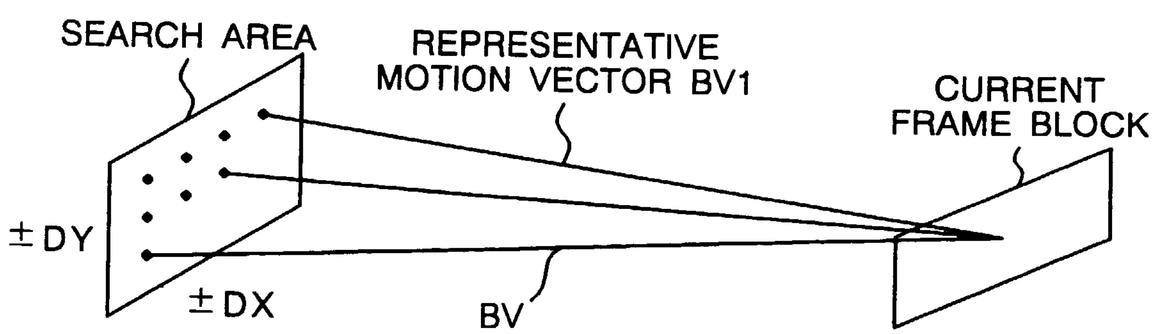

FIG. 19

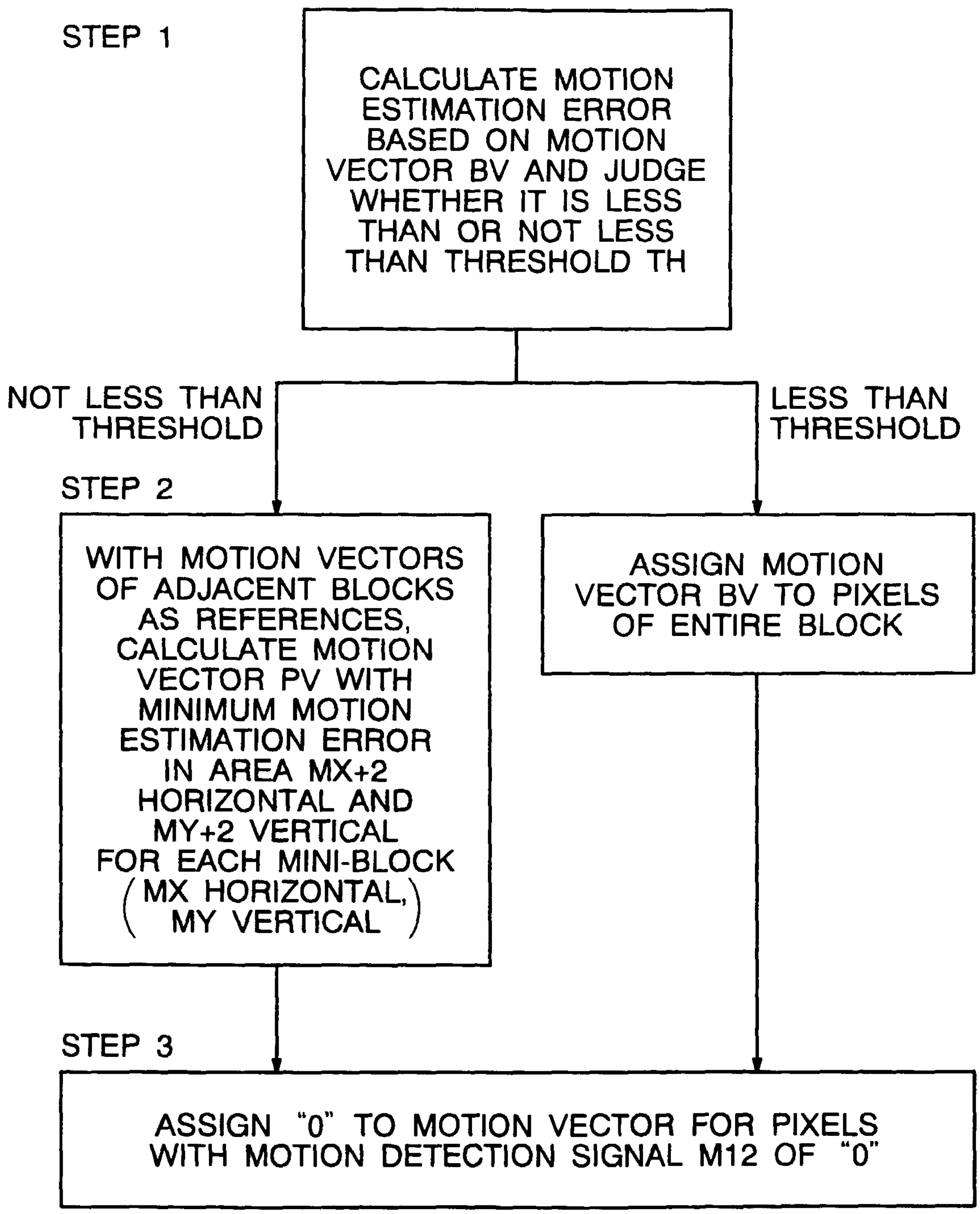
STEP 1
CALCULATE MOTION ESTIMATION ERROR BASED ON MOTION VECTOR BV AND JUDGE WHETHER IT IS LESS THAN OR NOT LESS THAN THRESHOLD TH
NOT LESS THAN THRESHOLD
LESS THAN THRESHOLD
STEP 2
WITH MOTION VECTORS OF ADJACENT BLOCKS AS REFERENCES, CALCULATE MOTION VECTOR PV WITH MINIMUM MOTION ESTIMATION ERROR IN AREA MX+2 HORIZONTAL AND MY+2 VERTICAL FOR EACH MINI-BLOCK (MX HORIZONTAL, MY VERTICAL)
ASSIGN MOTION VECTOR BV TO PIXELS OF ENTIRE BLOCK
STEP 3
ASSIGN "0" TO MOTION VECTOR FOR PIXELS WITH MOTION DETECTION SIGNAL M12 OF "0"

FIG. 20

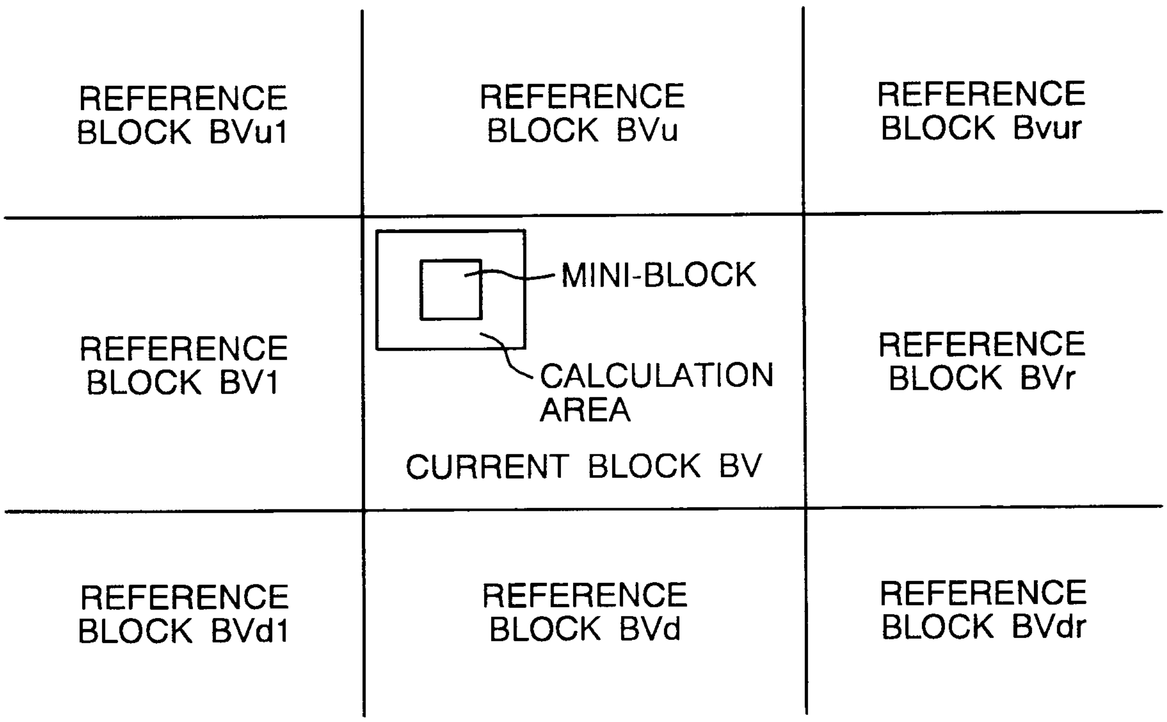


$$PV=MIN\{\Sigma|\ fct(x,\ y)-fpr(x+BVx,\ y+Bvy)\ |\}$$

FIG. 21a

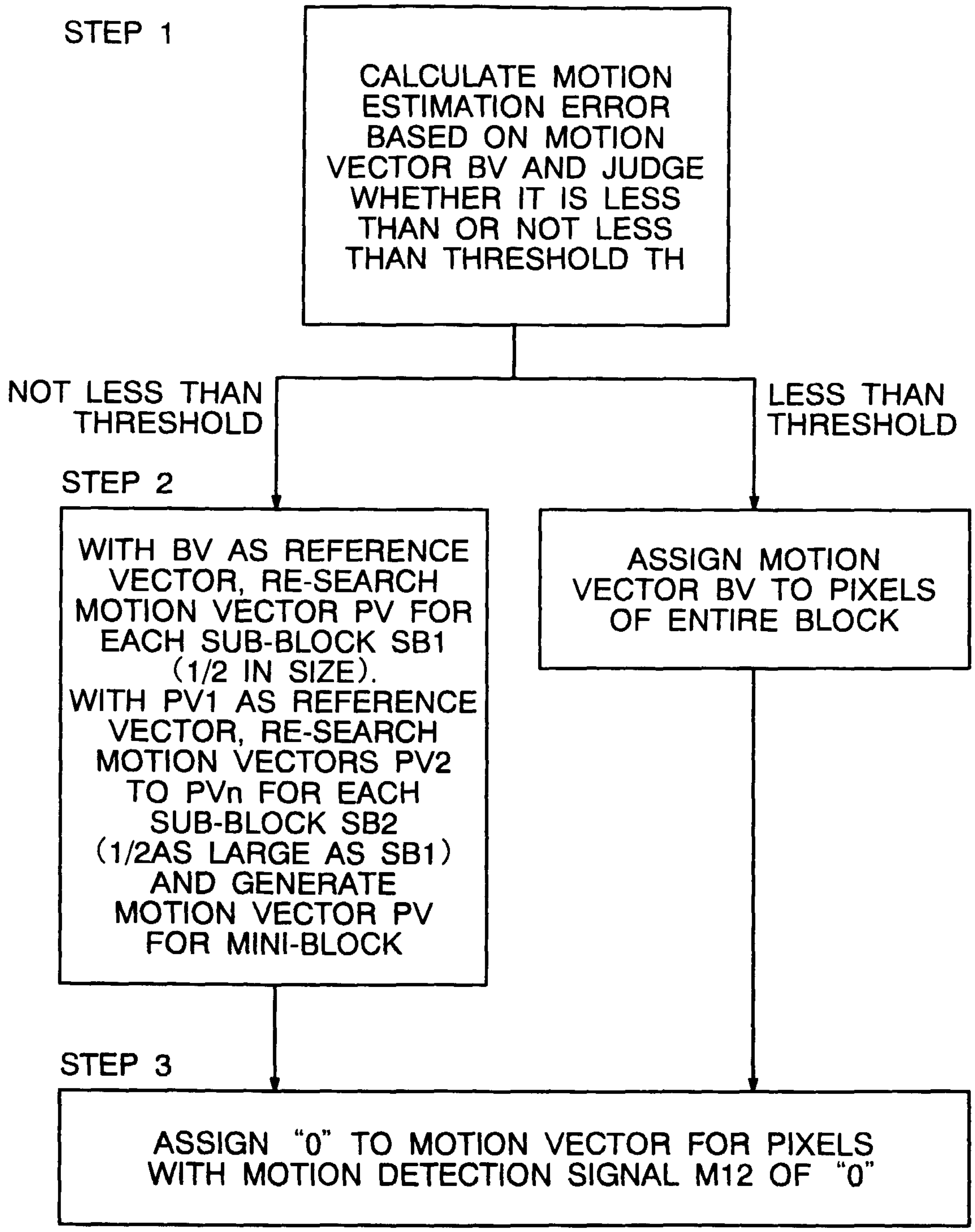
STEP 1
CALCULATE MOTION ESTIMATION ERROR BASED ON MOTION VECTOR BV AND JUDGE WHETHER IT IS LESS THAN OR NOT LESS THAN THRESHOLD TH
NOT LESS THAN THRESHOLD
LESS THAN THRESHOLD
STEP 2
WITH BV AS REFERENCE VECTOR, RE-SEARCH MOTION VECTOR PV FOR EACH SUB-BLOCK SB1 (1/2 IN SIZE). WITH PV1 AS REFERENCE VECTOR, RE-SEARCH MOTION VECTORS PV2 TO PVn FOR EACH SUB-BLOCK SB2 (1/2AS LARGE AS SB1) AND GENERATE MOTION VECTOR PV FOR MINI-BLOCK
ASSIGN MOTION VECTOR BV TO PIXELS OF ENTIRE BLOCK
STEP 3
ASSIGN "0" TO MOTION VECTOR FOR PIXELS WITH MOTION DETECTION SIGNAL M12 OF "0"

FIG. 21b

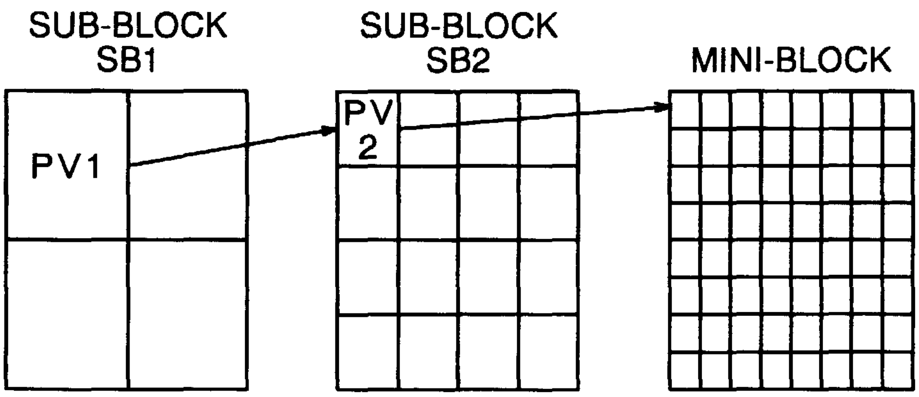

FIG. 22

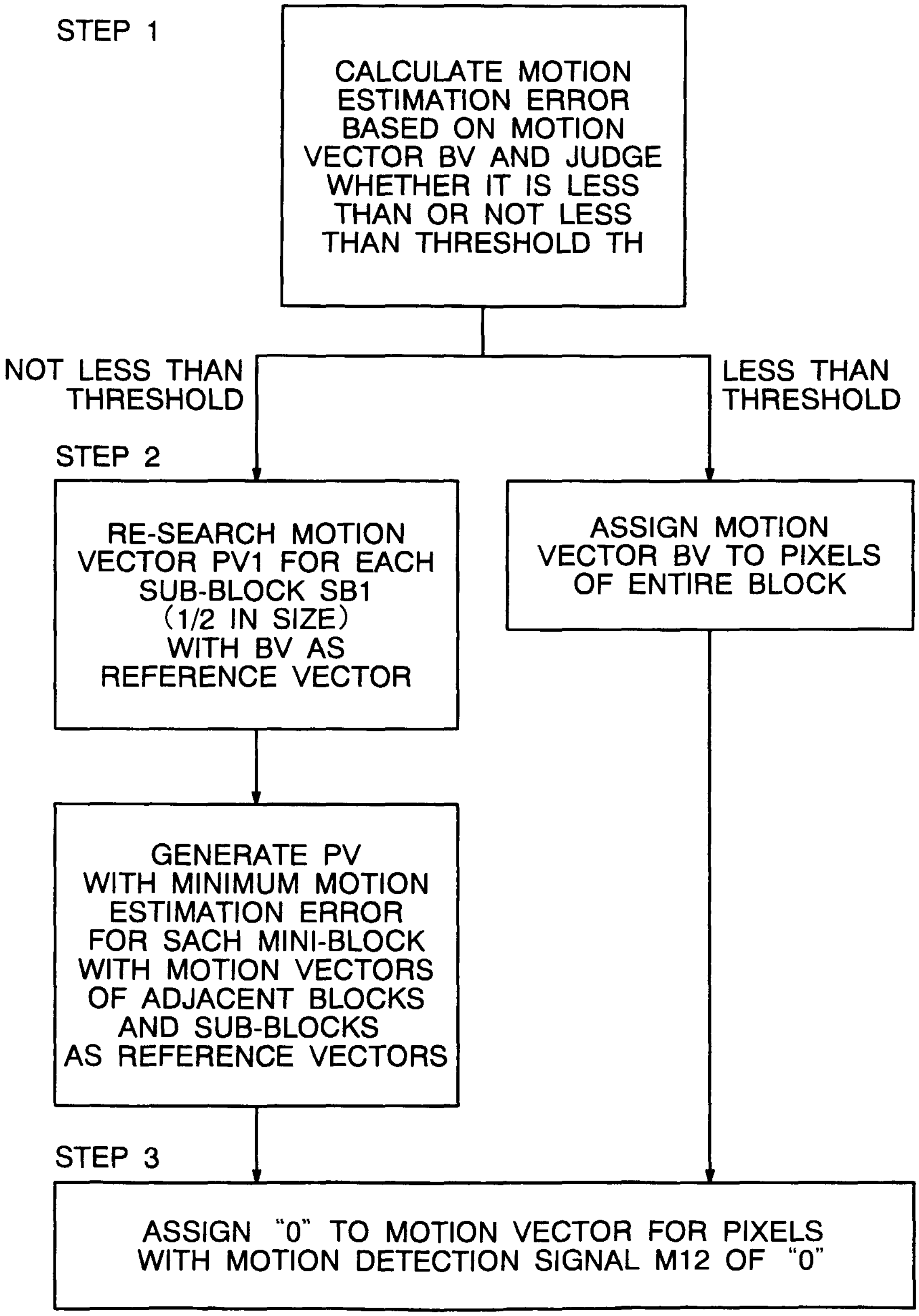
STEP 1
CALCULATE MOTION ESTIMATION ERROR BASED ON MOTION VECTOR BV AND JUDGE WHETHER IT IS LESS THAN OR NOT LESS THAN THRESHOLD TH
NOT LESS THAN THRESHOLD
LESS THAN THRESHOLD
STEP 2
RE-SEARCH MOTION VECTOR PV1 FOR EACH SUB-BLOCK SB1 (1/2 IN SIZE) WITH BV AS REFERENCE VECTOR
ASSIGN MOTION VECTOR BV TO PIXELS OF ENTIRE BLOCK
GENERATE PV WITH MINIMUM MOTION ESTIMATION ERROR FOR SACH MINI-BLOCK WITH MOTION VECTORS OF ADJACENT BLOCKS AND SUB-BLOCKS AS REFERENCE VECTORS
STEP 3
ASSIGN "0" TO MOTION VECTOR FOR PIXELS WITH MOTION DETECTION SIGNAL M12 OF "0"

FIG. 23a

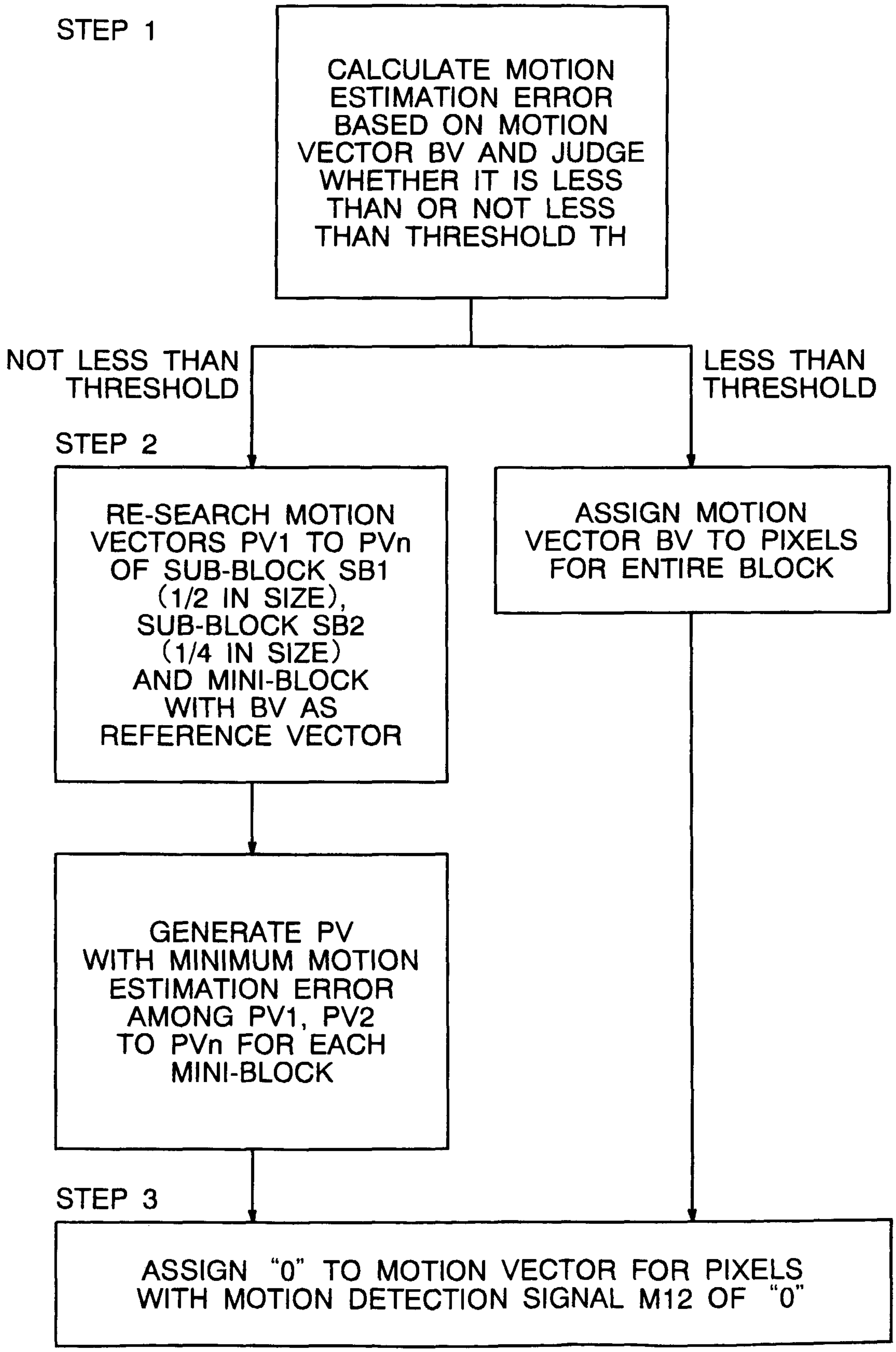
STEP 1
CALCULATE MOTION ESTIMATION ERROR BASED ON MOTION VECTOR BV AND JUDGE WHETHER IT IS LESS THAN OR NOT LESS THAN THRESHOLD TH
NOT LESS THAN THRESHOLD
LESS THAN THRESHOLD
STEP 2
RE-SEARCH MOTION VECTORS PV1 TO PVn OF SUB-BLOCK SB1 (1/2 IN SIZE), SUB-BLOCK SB2 (1/4 IN SIZE) AND MINI-BLOCK WITH BV AS REFERENCE VECTOR
ASSIGN MOTION VECTOR BV TO PIXELS FOR ENTIRE BLOCK
GENERATE PV WITH MINIMUM MOTION ESTIMATION ERROR AMONG PV1, PV2 TO PVn FOR EACH MINI-BLOCK
STEP 3
ASSIGN "0" TO MOTION VECTOR FOR PIXELS WITH MOTION DETECTION SIGNAL M12 OF "0"

FIG. 23b

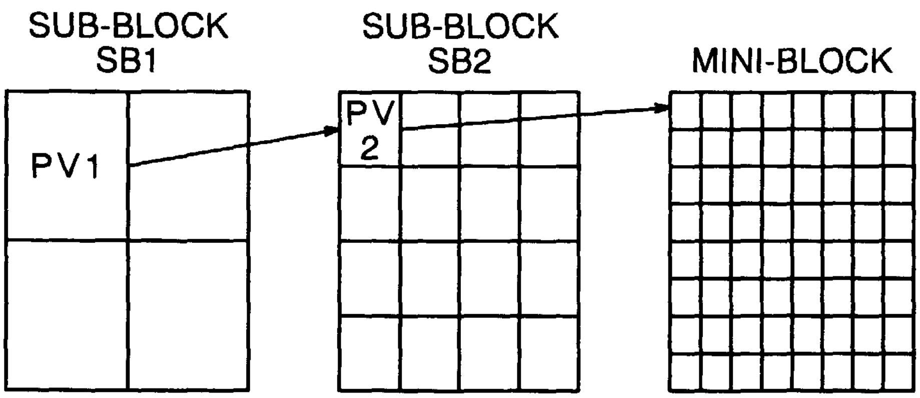

FIG. 24

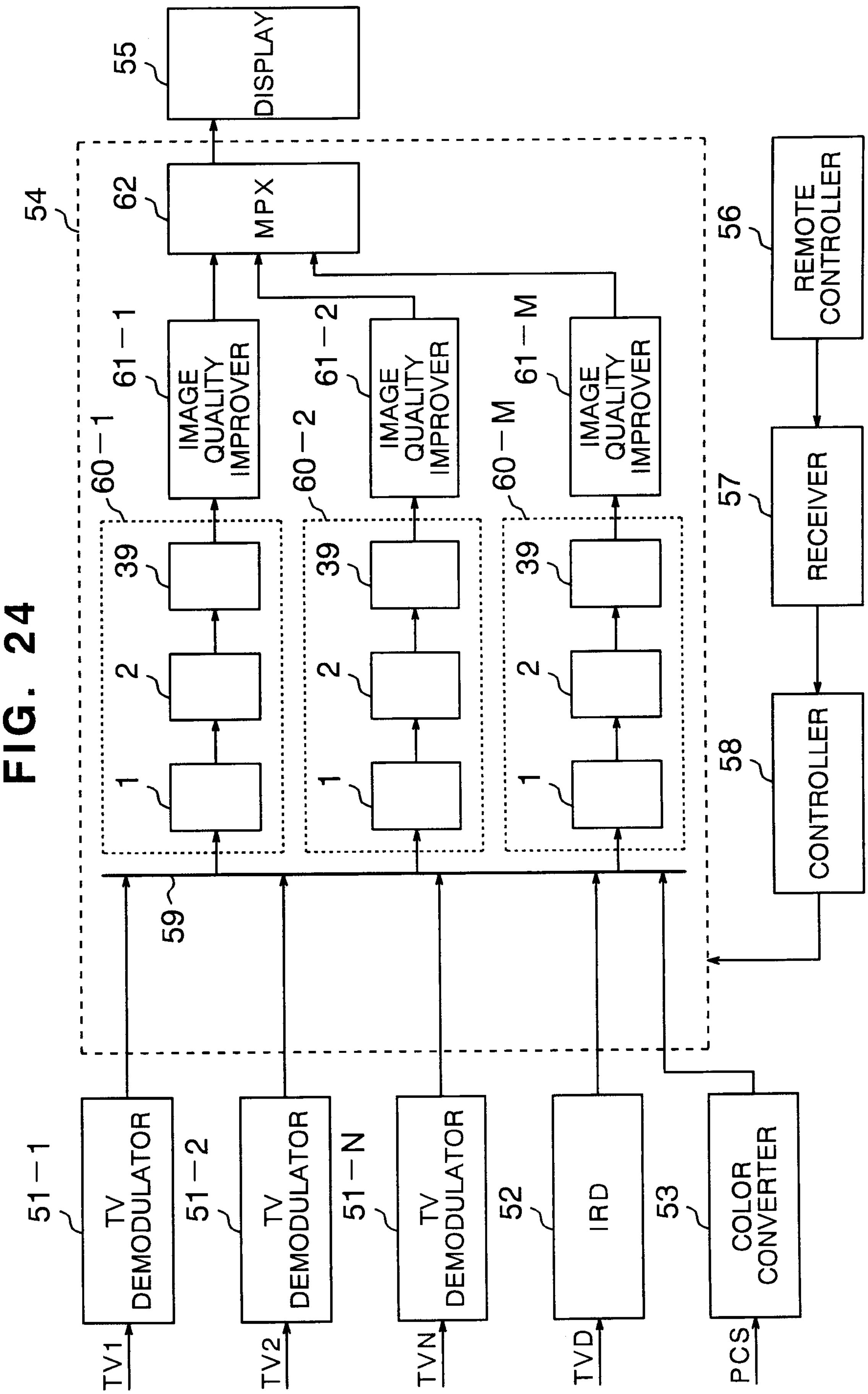
TV1
TV2
TVN
TVD
PCS
51−1
TV DEMODULATOR
51−2
TV DEMODULATOR
51−N
TV DEMODULATOR
52
IRD
53
COLOR CONVERTER
54
59
60−1
60−2
60−M
1
2
39
61−1
IMAGE QUALITY IMPROVER
61−2
IMAGE QUALITY IMPROVER
61−M
IMAGE QUALITY IMPROVER
62
MPX
55
DISPLAY
56
REMOTE CONTROLLER
57
RECEIVER
58
CONTROLLER

FIG. 25

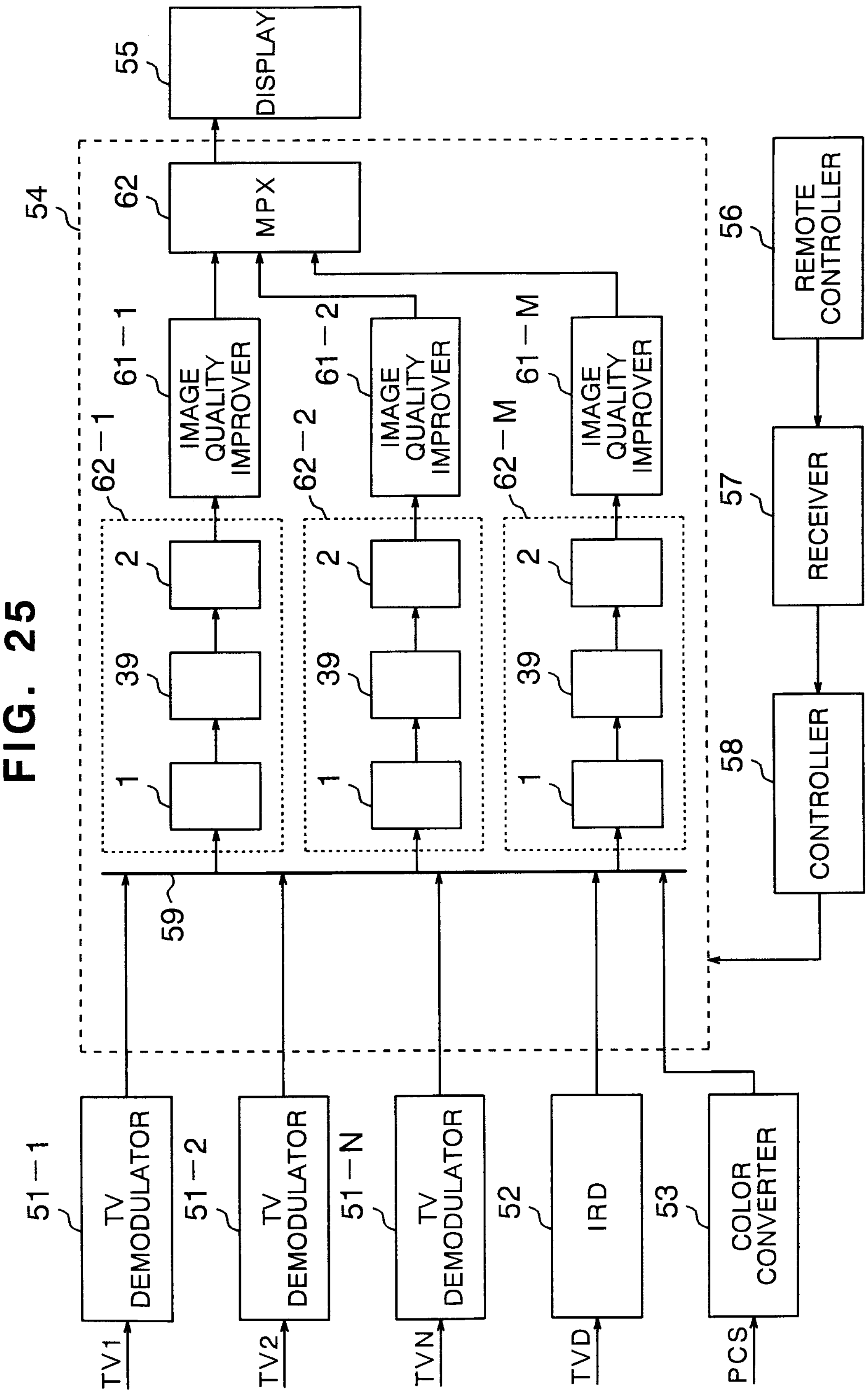
55
DISPLAY
54
62
MPX
61－1
IMAGE QUALITY IMPROVER
61－2
IMAGE QUALITY IMPROVER
61－M
IMAGE QUALITY IMPROVER
62－1
62－2
62－M
2
39
1
59
56
REMOTE CONTROLLER
57
RECEIVER
58
CONTROLLER
51－1
TV DEMODULATOR
51－2
TV DEMODULATOR
51－N
TV DEMODULATOR
52
IRD
53
COLOR CONVERTER
TV1
TV2
TVN
TVD
PCS

FIG. 26

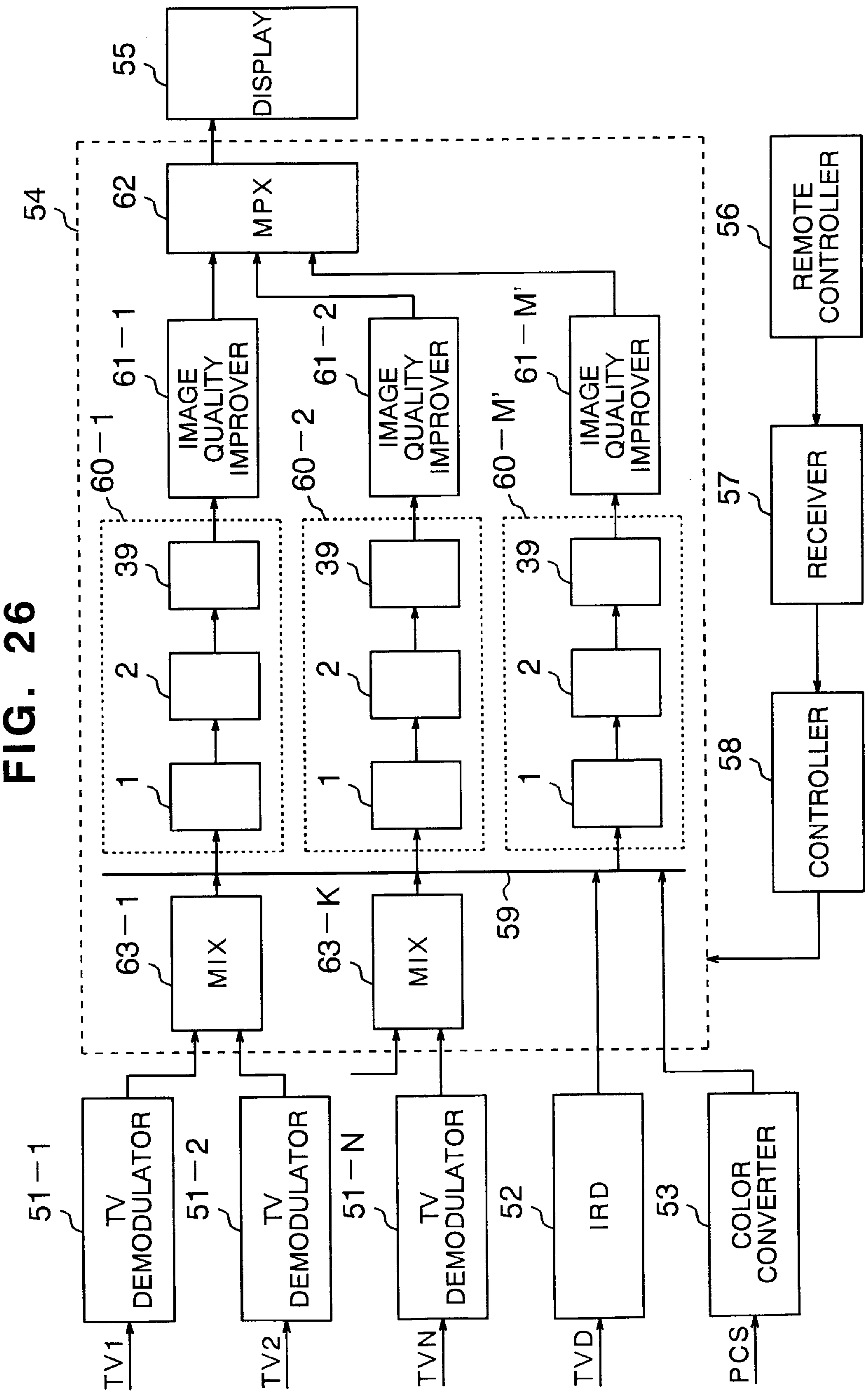
55
DISPLAY
54
62
MPX
61－1
IMAGE QUALITY IMPROVER
61－2
IMAGE QUALITY IMPROVER
61－M'
IMAGE QUALITY IMPROVER
60－1
60－2
60－M'
39
2
1
56
REMOTE CONTROLLER
57
RECEIVER
58
CONTROLLER
63－1
MIX
63－K
MIX
59
51－1
TV DEMODULATOR
51－2
TV DEMODULATOR
51－N
TV DEMODULATOR
52
IRD
53
COLOR CONVERTER
TV1
TV2
TVN
TVD
PCS

FIG. 27

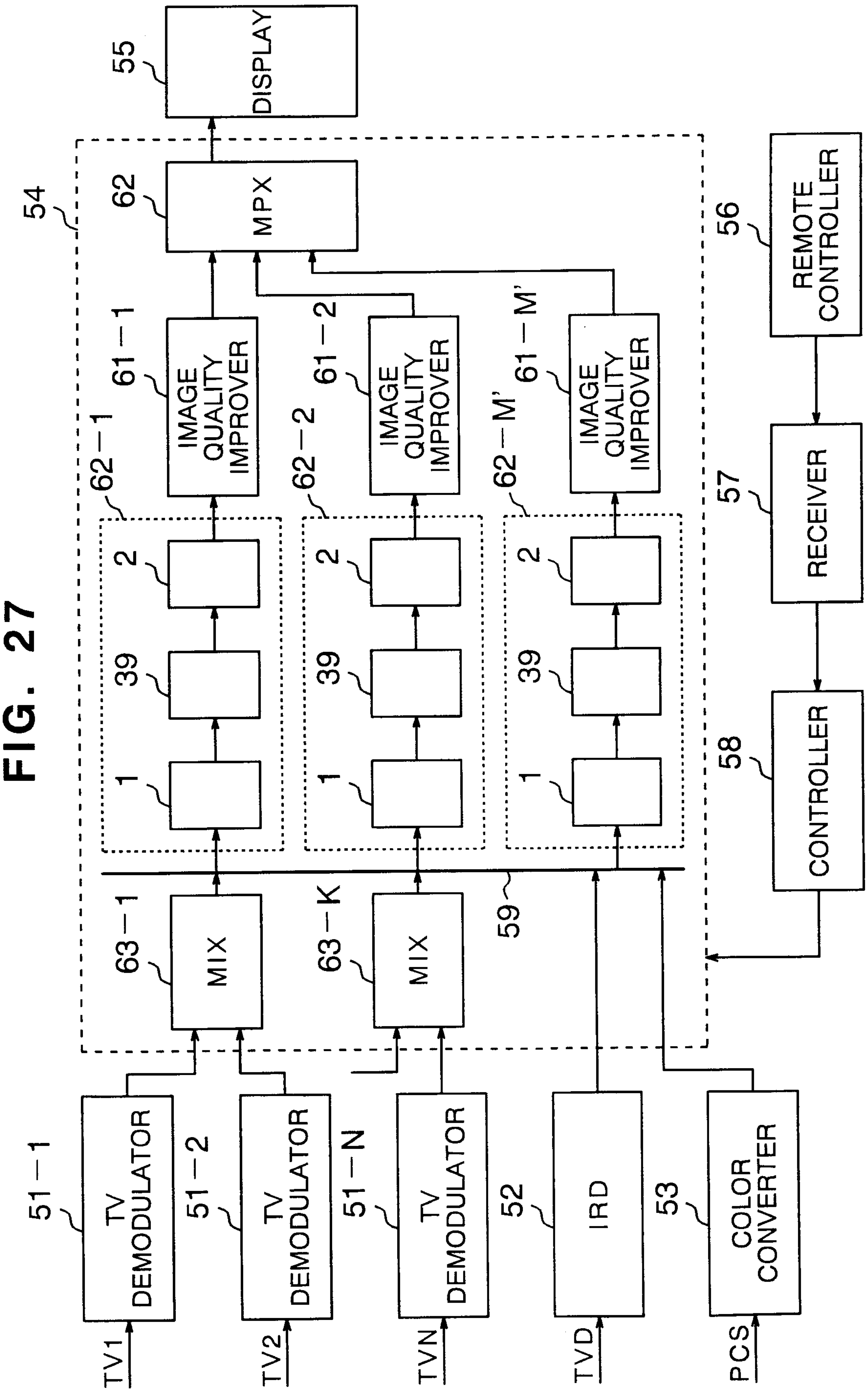

TV1
TV2
TVN
TVD
PCS
51－1
TV DEMODULATOR
51－2
TV DEMODULATOR
51－N
TV DEMODULATOR
52
IRD
53
COLOR CONVERTER
54
63－1
MIX
63－K
MIX
59
62－1
62－2
62－M'
1
39
2
61－1
IMAGE QUALITY IMPROVER
61－2
IMAGE QUALITY IMPROVER
61－M'
IMAGE QUALITY IMPROVER
62
MPX
55
DISPLAY
56
REMOTE CONTROLLER
57
RECEIVER
58
CONTROLLER

FIG. 28

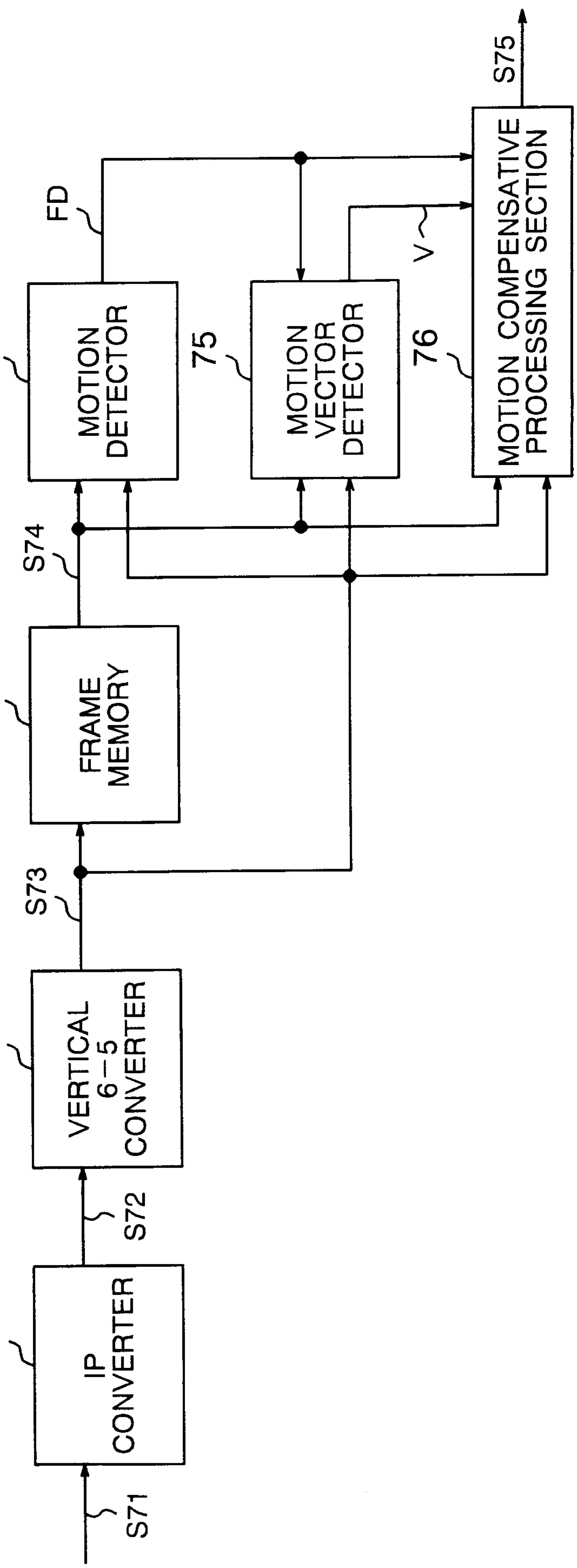

S71
71
IP CONVERTER
S72
72
VERTICAL 6−5 CONVERTER
S73
73
FRAME MEMORY
S74
74
MOTION DETECTOR
FD
75
MOTION VECTOR DETECTOR
V
76
MOTION COMPENSATIVE PROCESSING SECTION
S75

FIG. 29

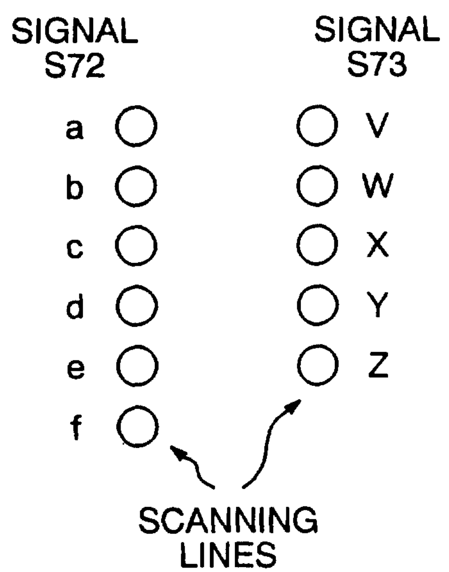


EXAMPLE OF INPUT/OUTPUT CHARACTERISTIC

$$\begin{pmatrix} V \\ W \\ X \\ Y \\ Z \end{pmatrix} = \begin{pmatrix} 1 & 0 & 0 & 0 & 0 & 0 \\ 0 & 4/5 & 1/5 & 0 & 0 & 0 \\ 0 & 0 & 3/5 & 2/5 & 0 & 0 \\ 0 & 0 & 0 & 2/5 & 3/5 & 0 \\ 0 & 0 & 0 & 0 & 1/5 & 4/5 \end{pmatrix} \begin{pmatrix} a \\ b \\ c \\ d \\ e \\ f \end{pmatrix}$$

FIG. 30

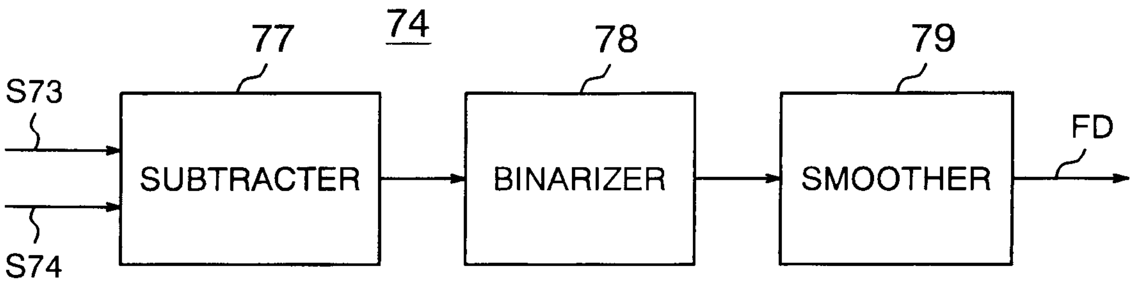
74
77
78
79
S73
S74
SUBTRACTER
BINARIZER
SMOOTHER
FD

FIG. 31

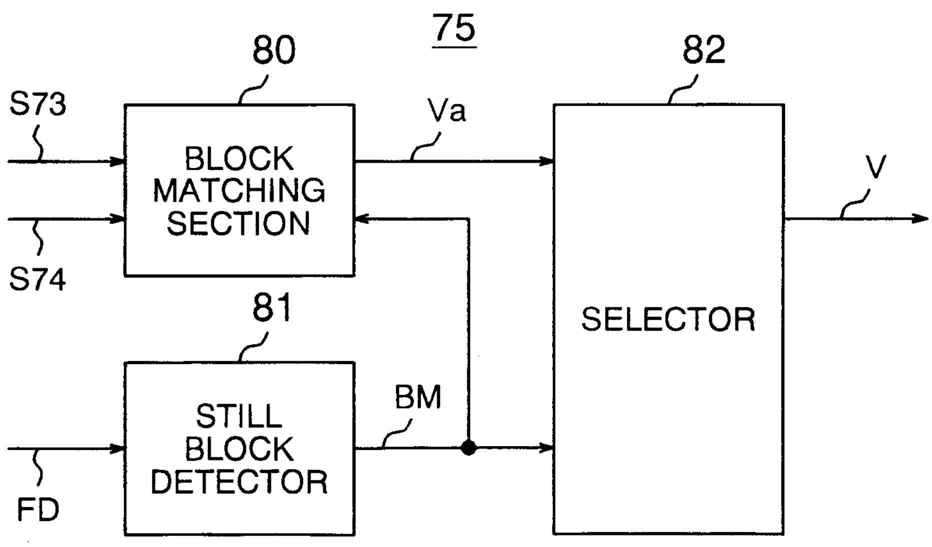
75
80
81
82
S73
S74
FD
BLOCK MATCHING SECTION
STILL BLOCK DETECTOR
SELECTOR
Va
BM
V

FIG. 32

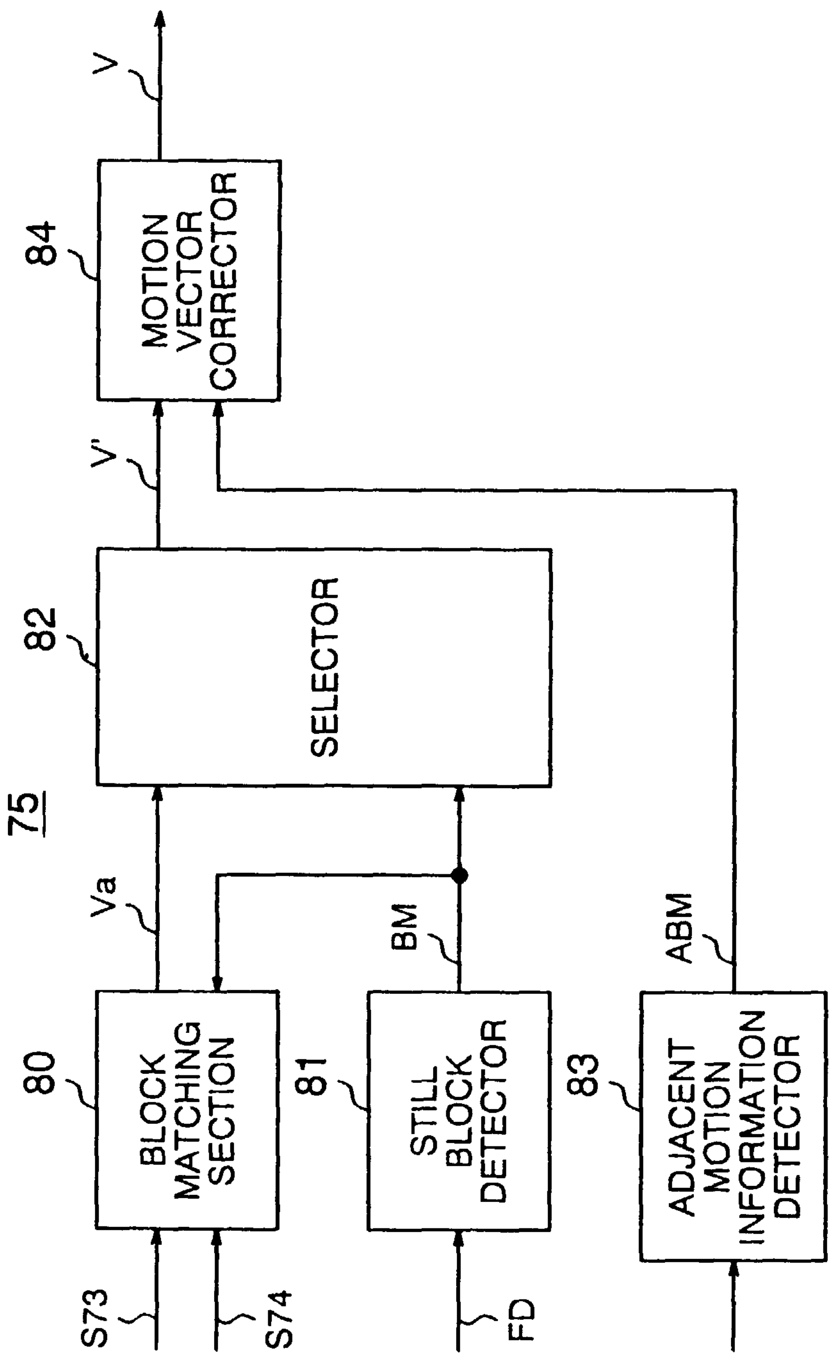
75
80
BLOCK MATCHING SECTION
81
STILL BLOCK DETECTOR
83
ADJACENT MOTION INFORMATION DETECTOR
82
SELECTOR
84
MOTION VECTOR CORRECTOR
S73
S74
FD
Va
BM
ABM
V'
V

# FIG. 33a

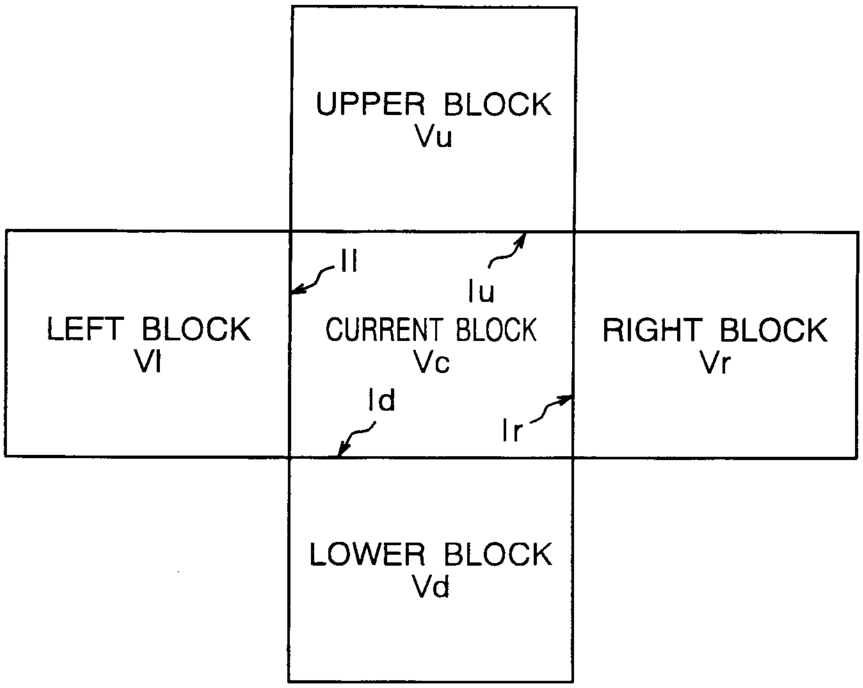


# FIG. 33b

| ADJACENT BLOCK MOTION INFORMATION ABM | CORRECTED VECTOR V |
|---|---|
| 1 ($Iu \neq 0$, $Ir = Id = Il = 0$) | $(Vc + Vu)/2$ |
| 2 ($Ir \neq 0$, $Iu = Id = Il = 0$) | $(Vc + Vr)/2$ |
| 3 ($Id \neq 0$, $Iu = Ir = Il = 0$) | $(Vc + Vd)/2$ |
| 4 ($Il \neq 0$, $Iu = Ir = Id = 0$) | $(Vc + Vl)/2$ |
| 5 ($Iu \neq 0$, $Ir \neq 0$, $Id = Il = 0$) | $(Vc + Vu + Vr)/3$ |
| 6 ($Ir \neq 0$, $Id \neq 0$, $Il = Iu = 0$) | $(Vc + Vr + Vd)/3$ |
| 7 ($Id \neq 0$, $Il \neq 0$, $Iu = Ir = 0$) | $(Vc + Vd + Vl)/3$ |
| 8 ($Il \neq 0$, $Iu \neq 0$, $Ir = Id = 0$) | $(Vc + Vl + Vu)/3$ |
| 9 | Vc |

FIG. 34

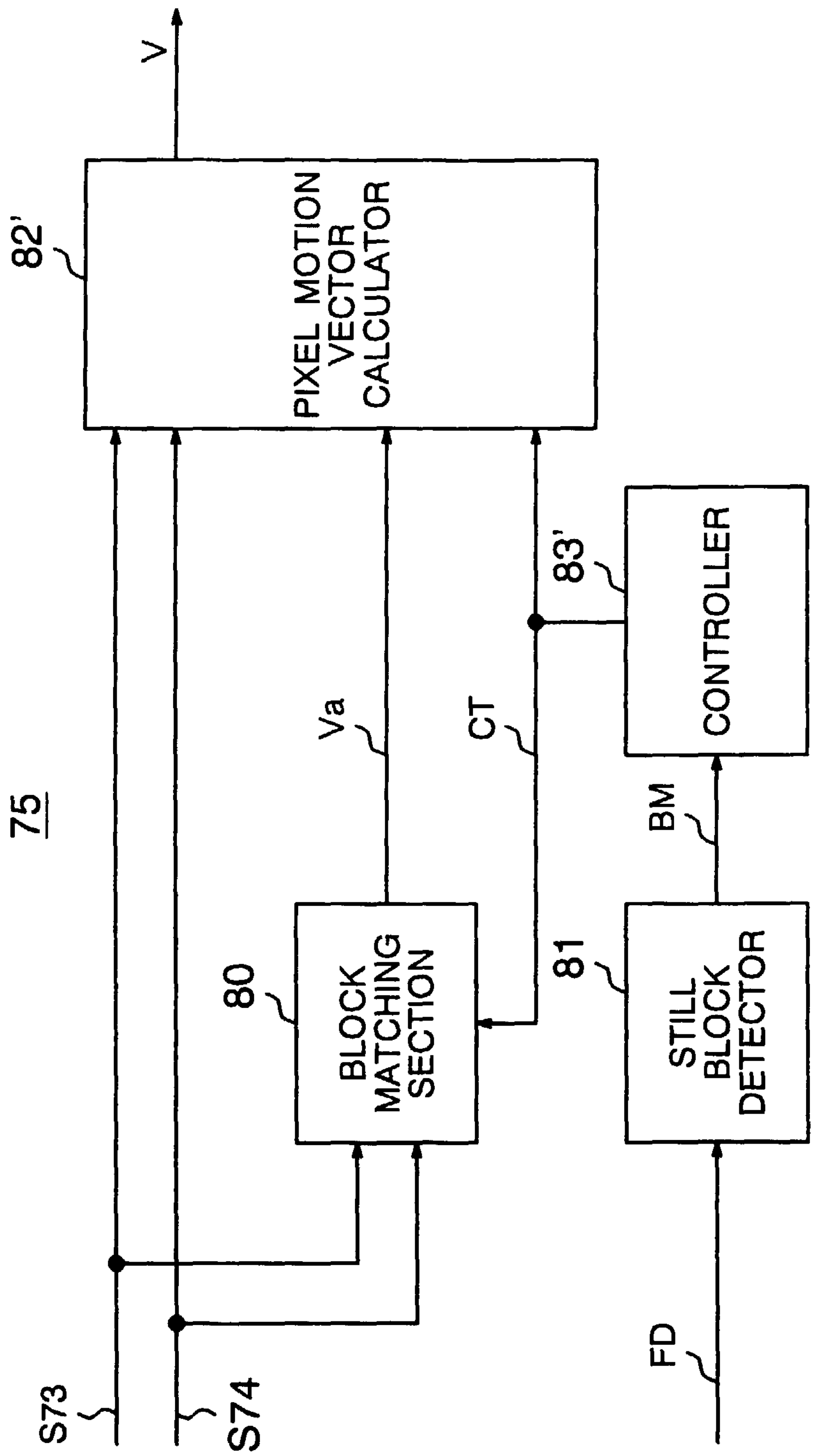
75
82'
PIXEL MOTION VECTOR CALCULATOR
V
80
BLOCK MATCHING SECTION
Va
CT
83'
CONTROLLER
81
STILL BLOCK DETECTOR
BM
S73
S74
FD

FIG. 35

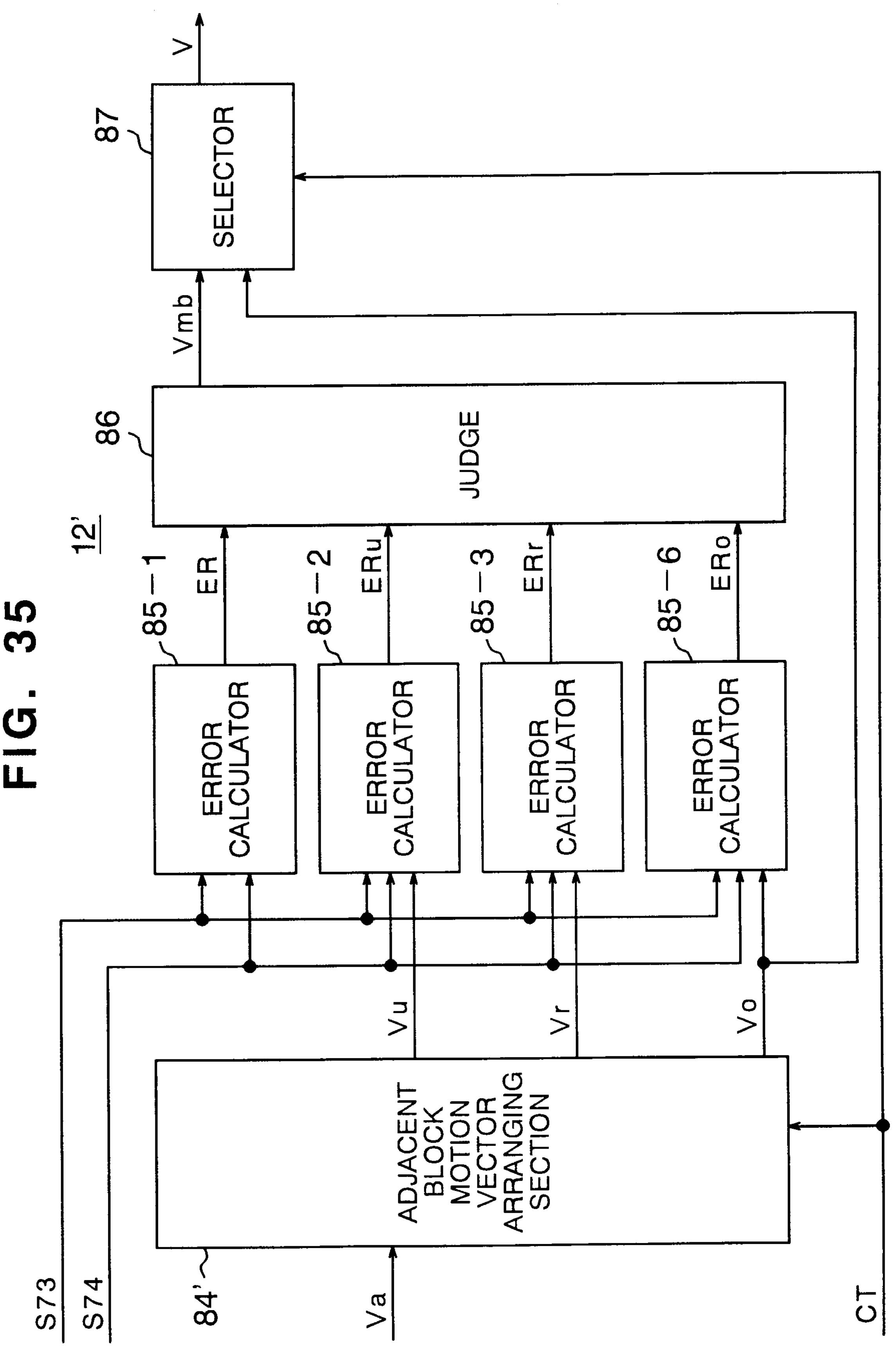
12'
87
SELECTOR
V
Vmb
86
JUDGE
85-1
85-2
85-3
85-6
ER
ERu
ERr
ERo
ERROR CALCULATOR
ERROR CALCULATOR
ERROR CALCULATOR
ERROR CALCULATOR
Vu
Vr
Vo
ADJACENT BLOCK MOTION VECTOR ARRANGING SECTION
84'
S73
S74
Va
CT

FIG. 36

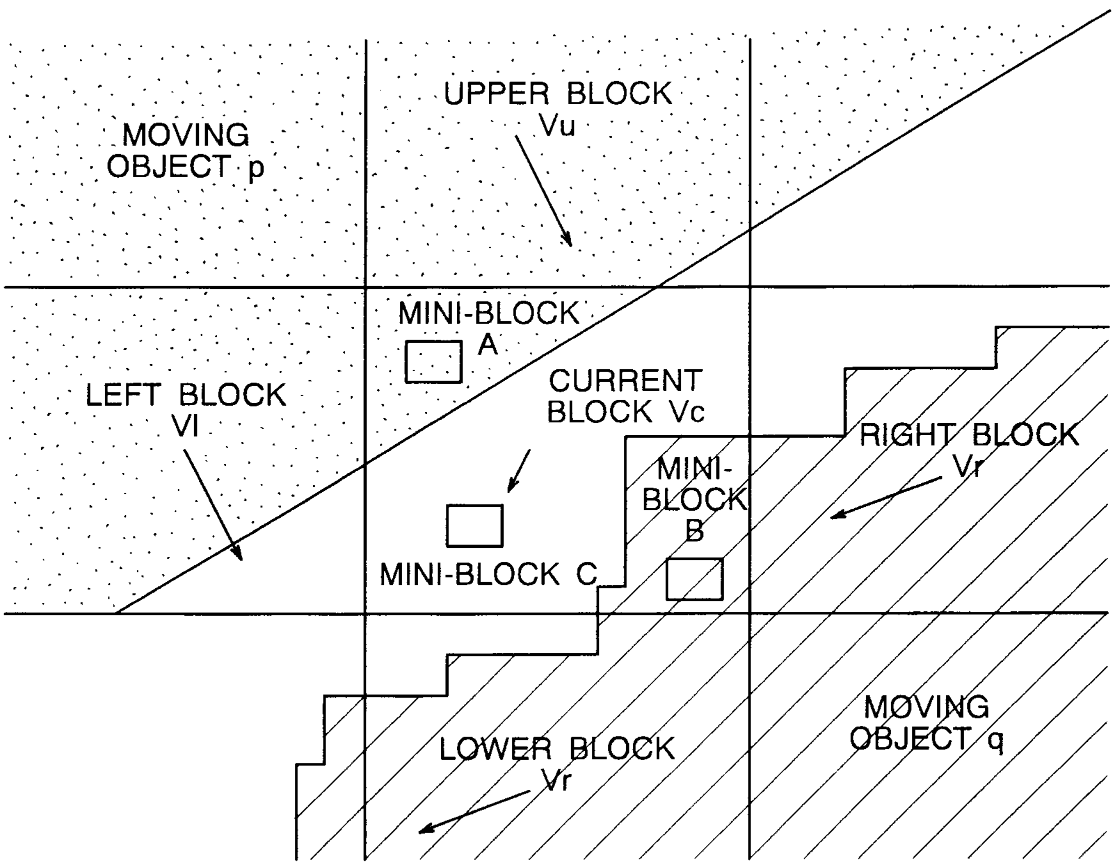


MINI-BLOCK A : ERu=fct − fpr (Vu) OR
ERl=fct − fpr (Vl) MINIMUM

MINI-BLOCK B : ERr=fct − fpr (Vr) OR
ERd=fct − fpr (Vd) MINIMUM

MINI-BLOCK C : ER=fct − fpr MINIMUM

FIG. 37

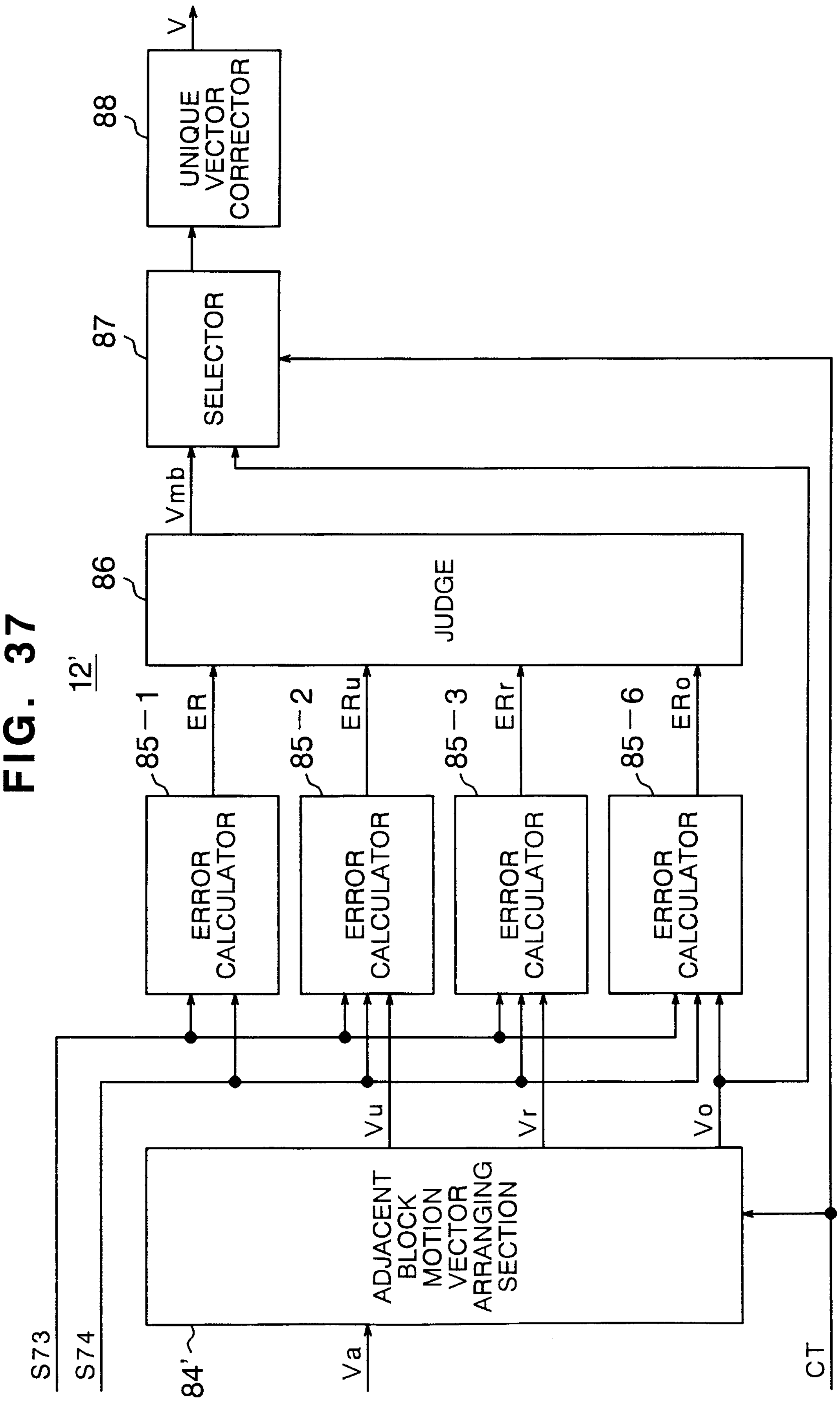
12'
S73
S74
84'
Va
CT
ADJACENT BLOCK MOTION VECTOR ARRANGING SECTION
Vu
Vr
Vo
85-1
85-2
85-3
85-6
ERROR CALCULATOR
ERROR CALCULATOR
ERROR CALCULATOR
ERROR CALCULATOR
ER
ERu
ERr
ERo
86
JUDGE
Vmb
87
SELECTOR
88
UNIQUE VECTOR CORRECTOR
V

FIG. 38

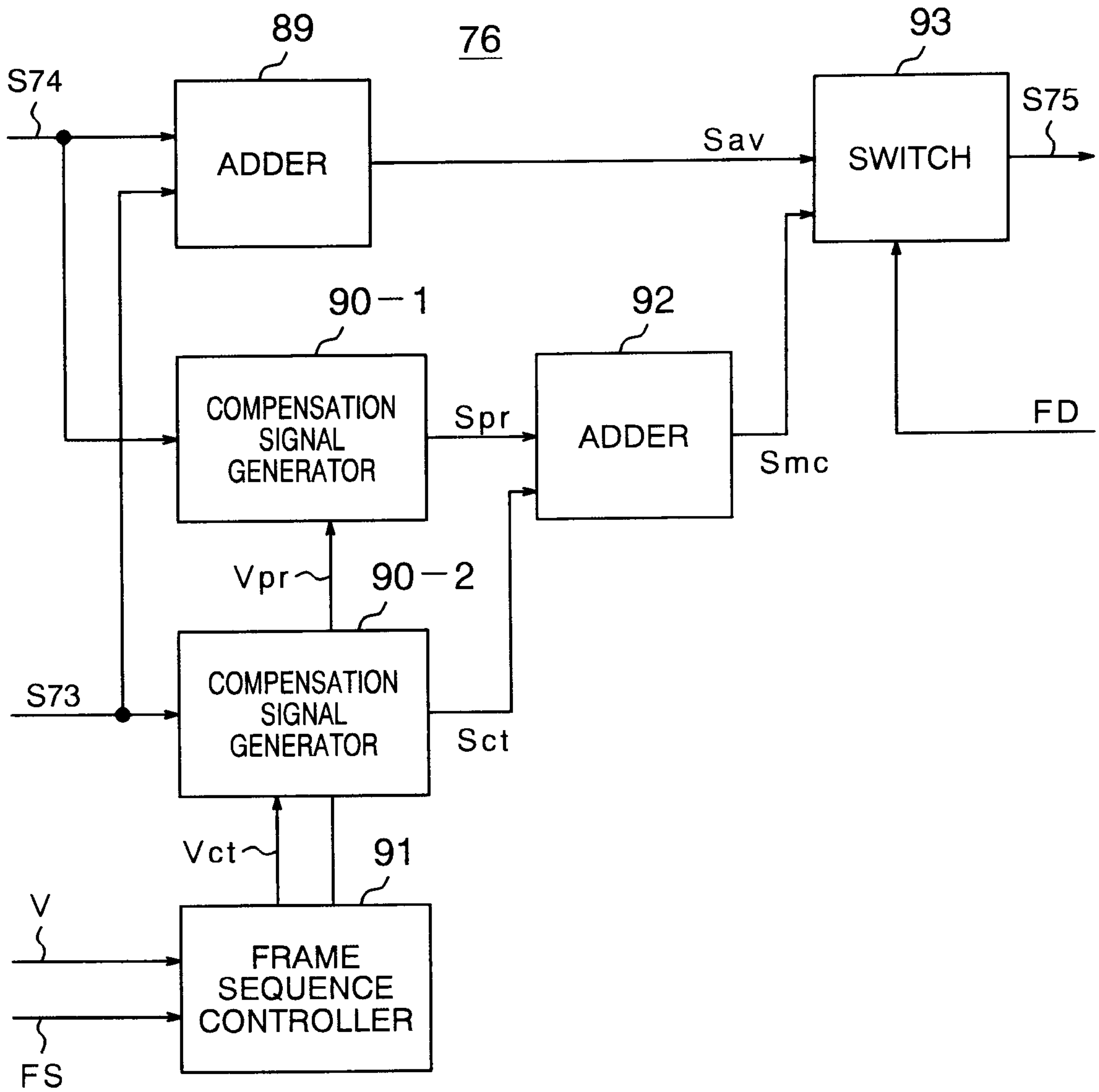

76
89
ADDER
S74
Sav
93
SWITCH
S75
90－1
COMPENSATION SIGNAL GENERATOR
Spr
92
ADDER
Smc
FD
Vpr
90－2
S73
COMPENSATION SIGNAL GENERATOR
Sct
Vct
91
V
FRAME SEQUENCE CONTROLLER
FS

FIG. 39

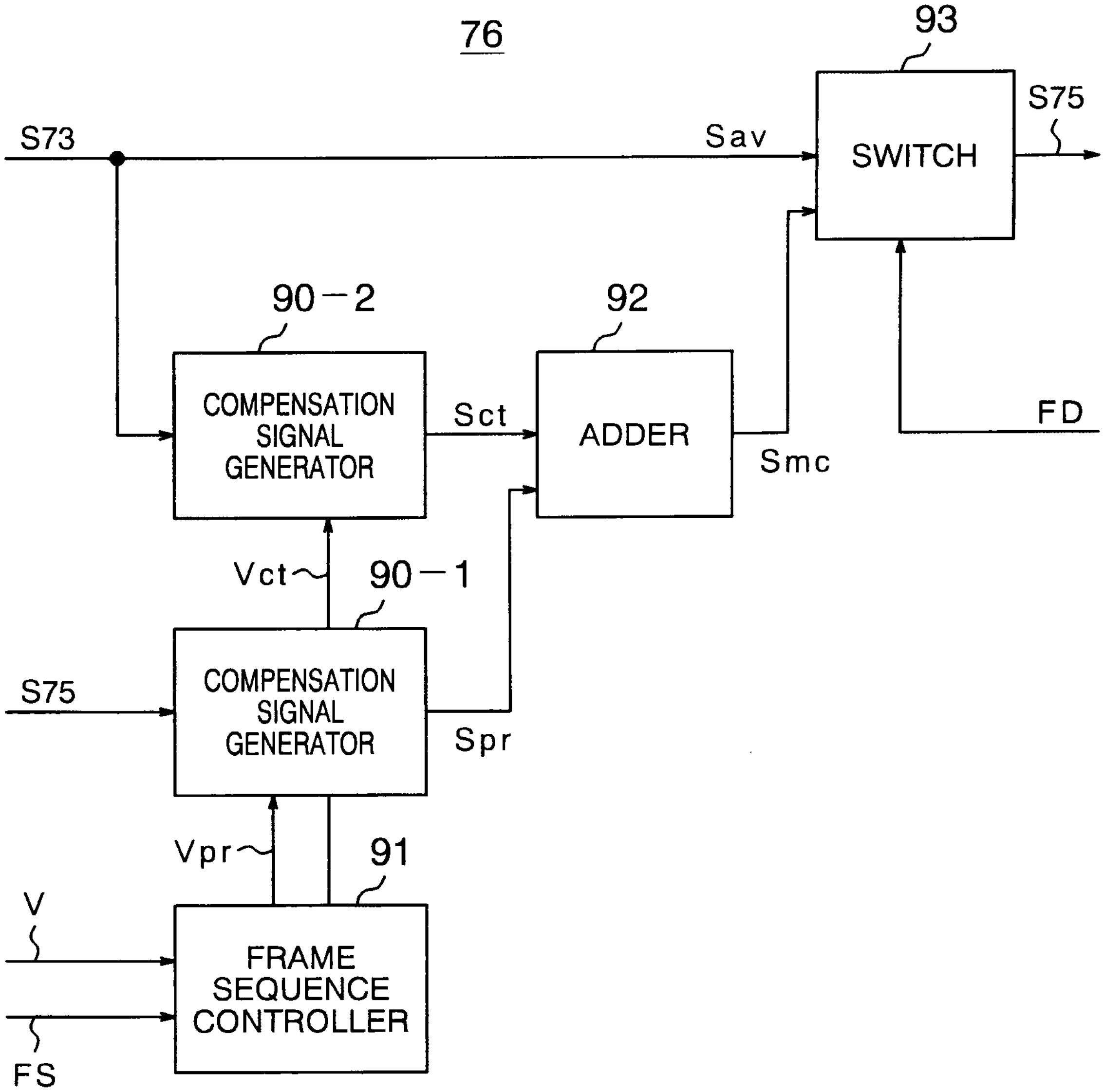
76
93
S73
Sav
SWITCH
S75
90-2
92
COMPENSATION SIGNAL GENERATOR
Sct
ADDER
FD
Smc
Vct
90-1
S75
COMPENSATION SIGNAL GENERATOR
Spr
Vpr
91
V
FRAME SEQUENCE CONTROLLER
FS

# FIG. 40a

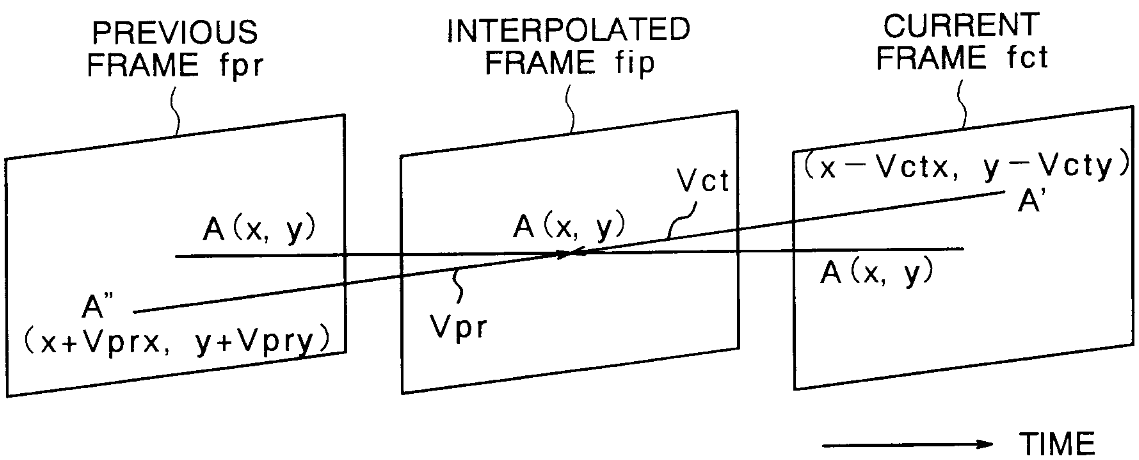


fip (x, y)=|fpr (x+Vprx, y+Vpry)+fct (x−Vctx, y−Vcty)|/2

# FIG. 40b

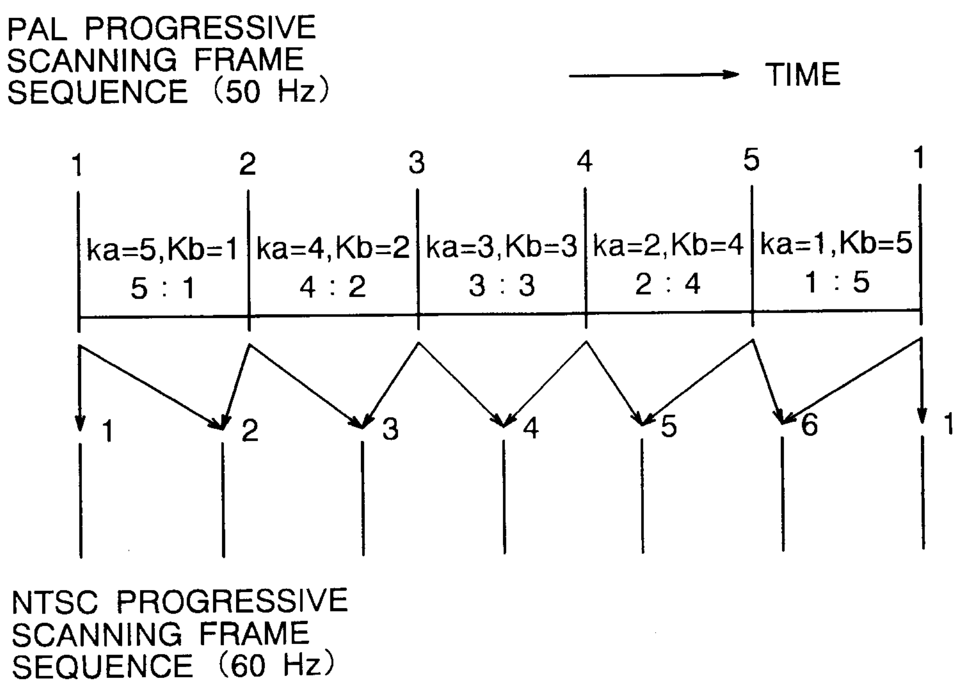

FIG. 41

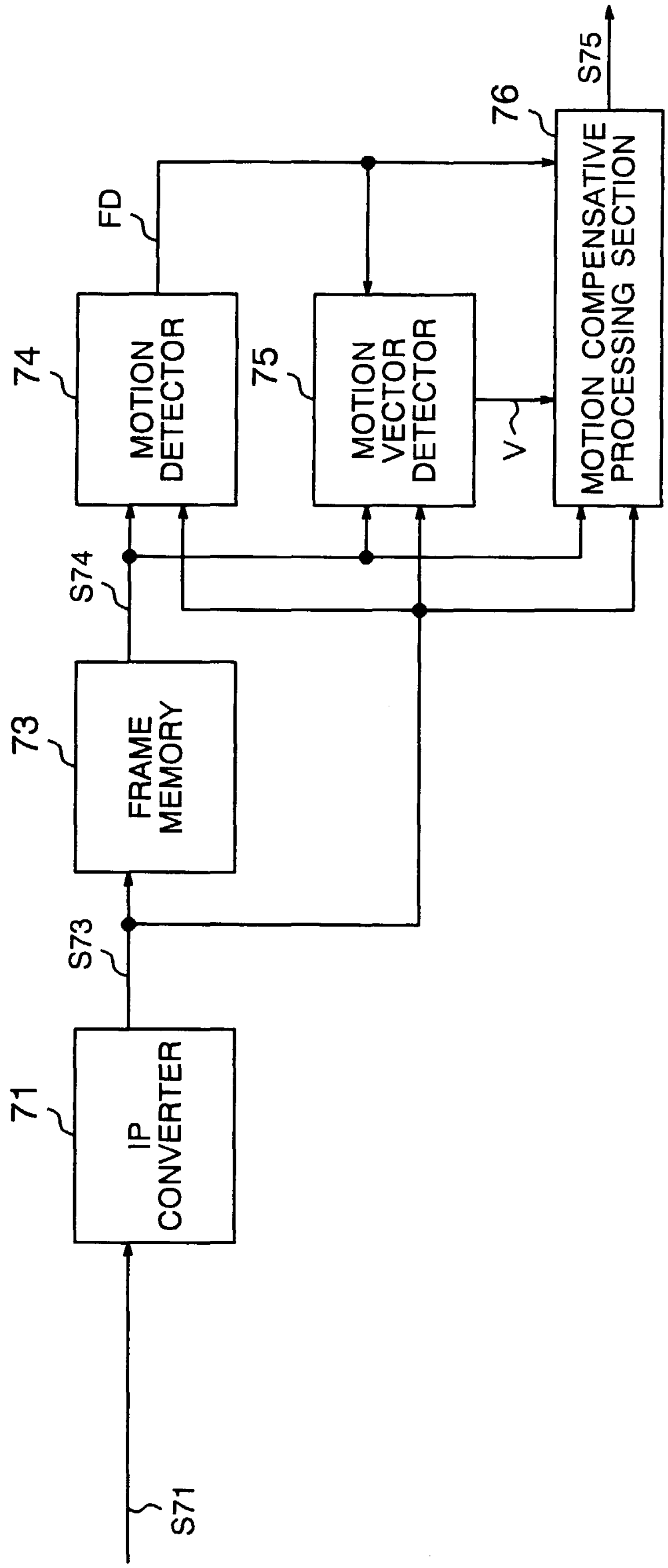
S71
71
IP CONVERTER
S73
73
FRAME MEMORY
S74
74
MOTION DETECTOR
FD
75
MOTION VECTOR DETECTOR
V
76
MOTION COMPENSATIVE PROCESSING SECTION
S75

FIG. 42

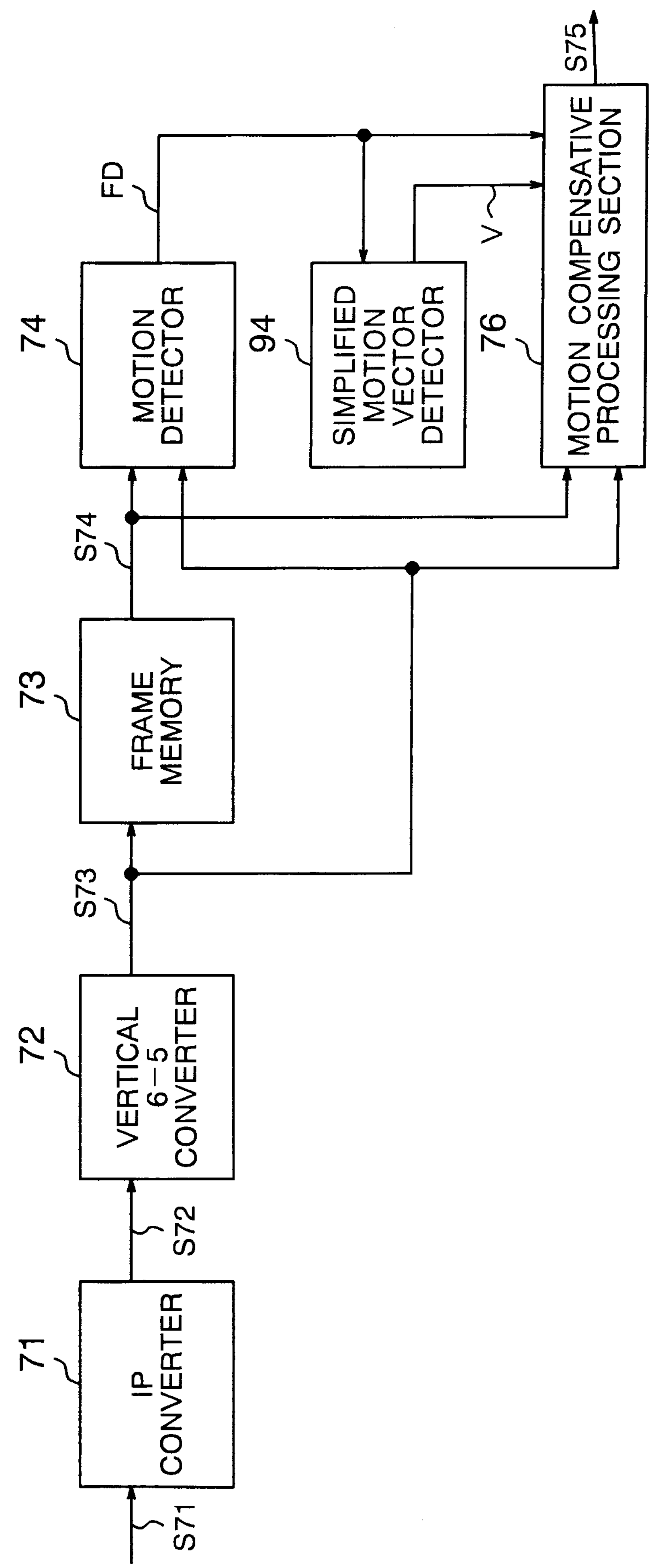

S71
71
IP CONVERTER
S72
72
VERTICAL 6−5 CONVERTER
S73
73
FRAME MEMORY
S74
74
MOTION DETECTOR
FD
94
SIMPLIFIED MOTION VECTOR DETECTOR
V
76
MOTION COMPENSATIVE PROCESSING SECTION
S75

FIG. 43

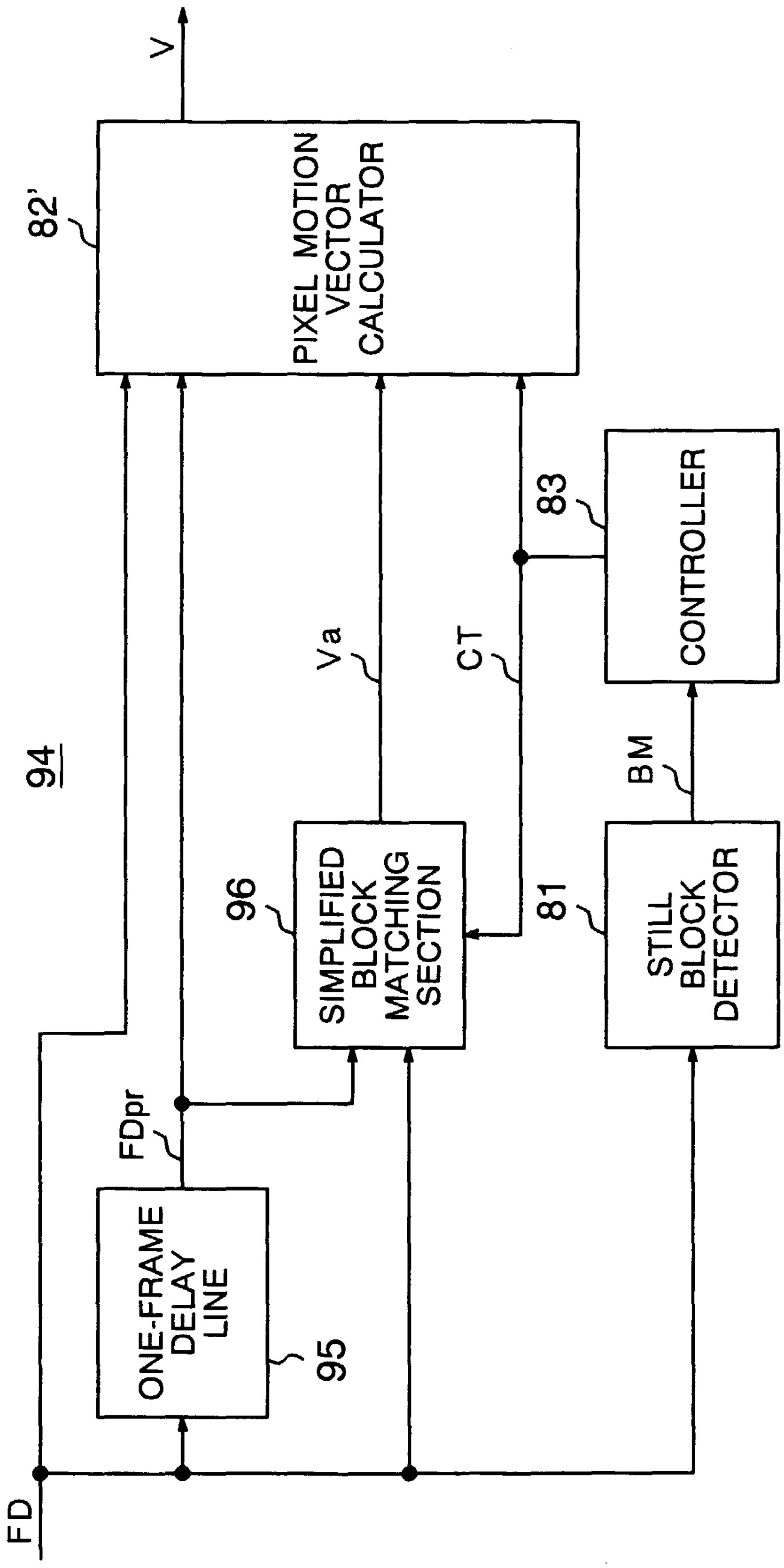
94
V
82'
PIXEL MOTION VECTOR CALCULATOR
83
CONTROLLER
Va
CT
BM
96
SIMPLIFIED BLOCK MATCHING SECTION
81
STILL BLOCK DETECTOR
FDpr
ONE-FRAME DELAY LINE
95
FD

FIG. 44

94

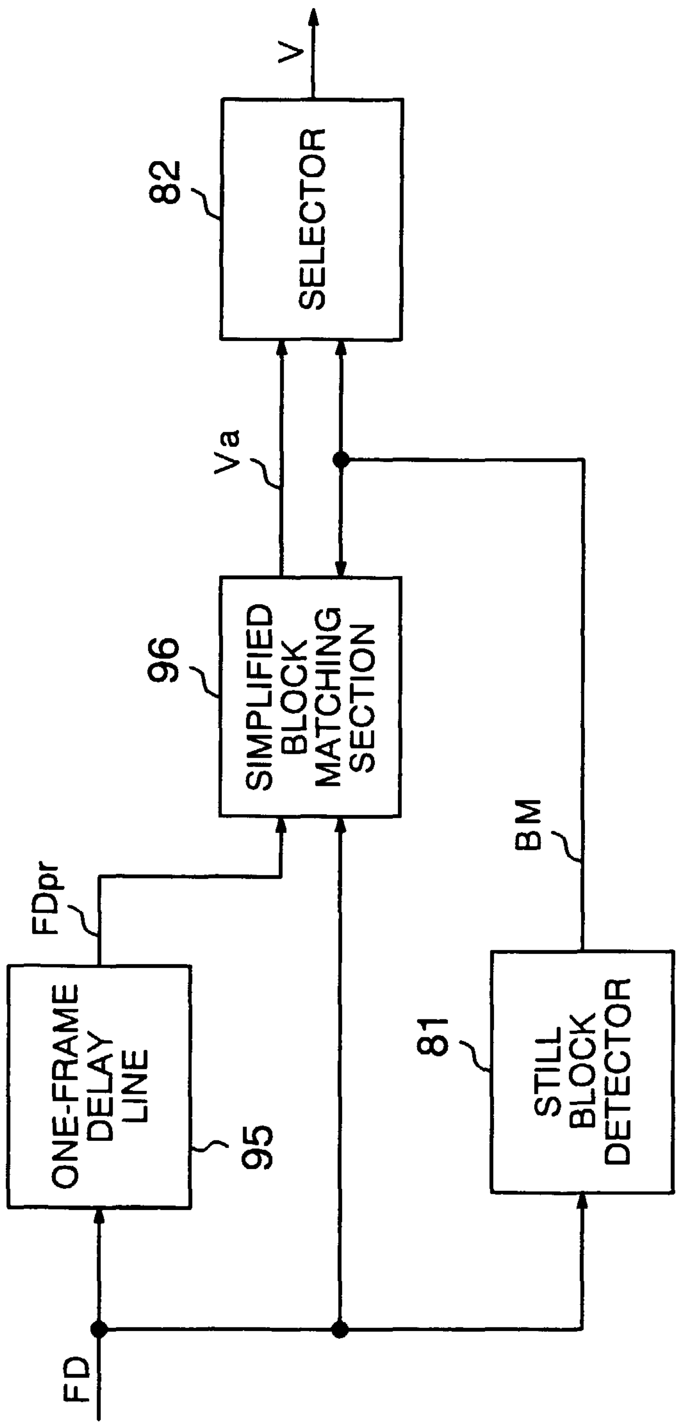
V
82
SELECTOR
Va
96
SIMPLIFIED BLOCK MATCHING SECTION
FDpr
BM
ONE-FRAME DELAY LINE
95
81
STILL BLOCK DETECTOR
FD

FIG. 45

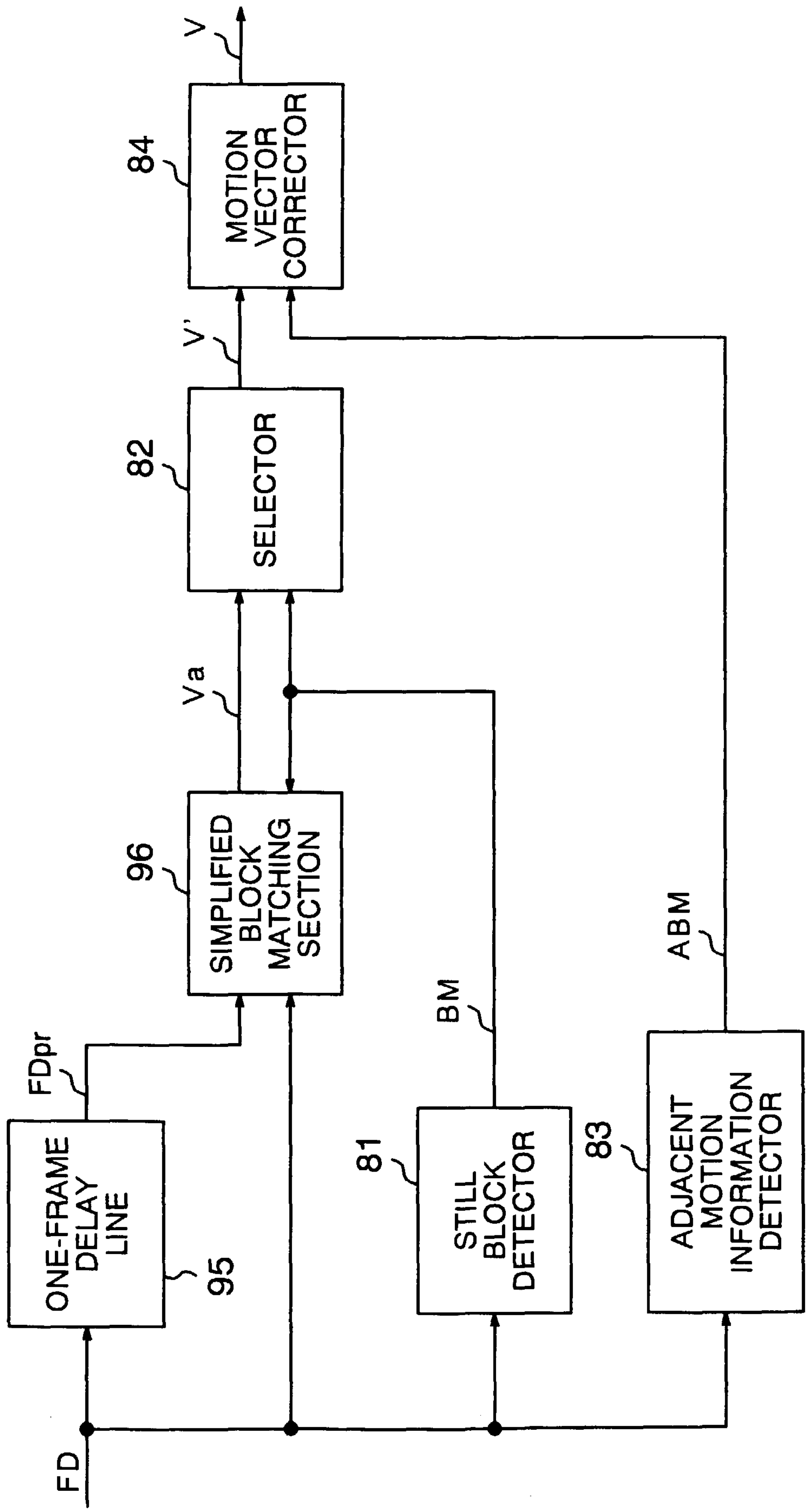
FD
ONE-FRAME DELAY LINE
95
FDpr
SIMPLIFIED BLOCK MATCHING SECTION
96
Va
SELECTOR
82
V'
MOTION VECTOR CORRECTOR
84
V
STILL BLOCK DETECTOR
81
BM
ADJACENT MOTION INFORMATION DETECTOR
83
ABM

FIG. 46

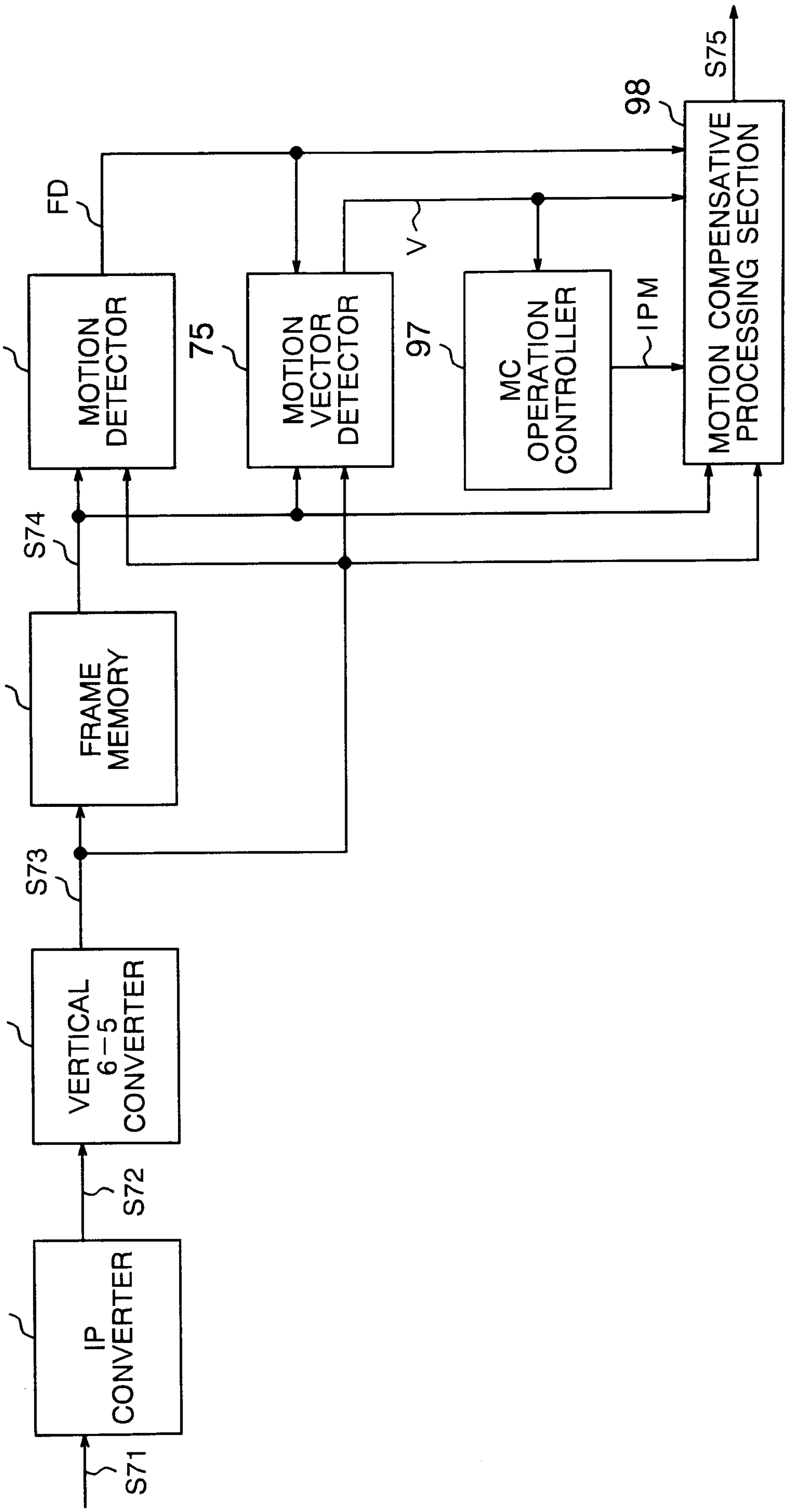
71
IP CONVERTER
S71
S72
72
VERTICAL 6−5 CONVERTER
S73
73
FRAME MEMORY
S74
74
MOTION DETECTOR
FD
75
MOTION VECTOR DETECTOR
V
97
MC OPERATION CONTROLLER
IPM
98
MOTION COMPENSATIVE PROCESSING SECTION
S75

FIG. 47

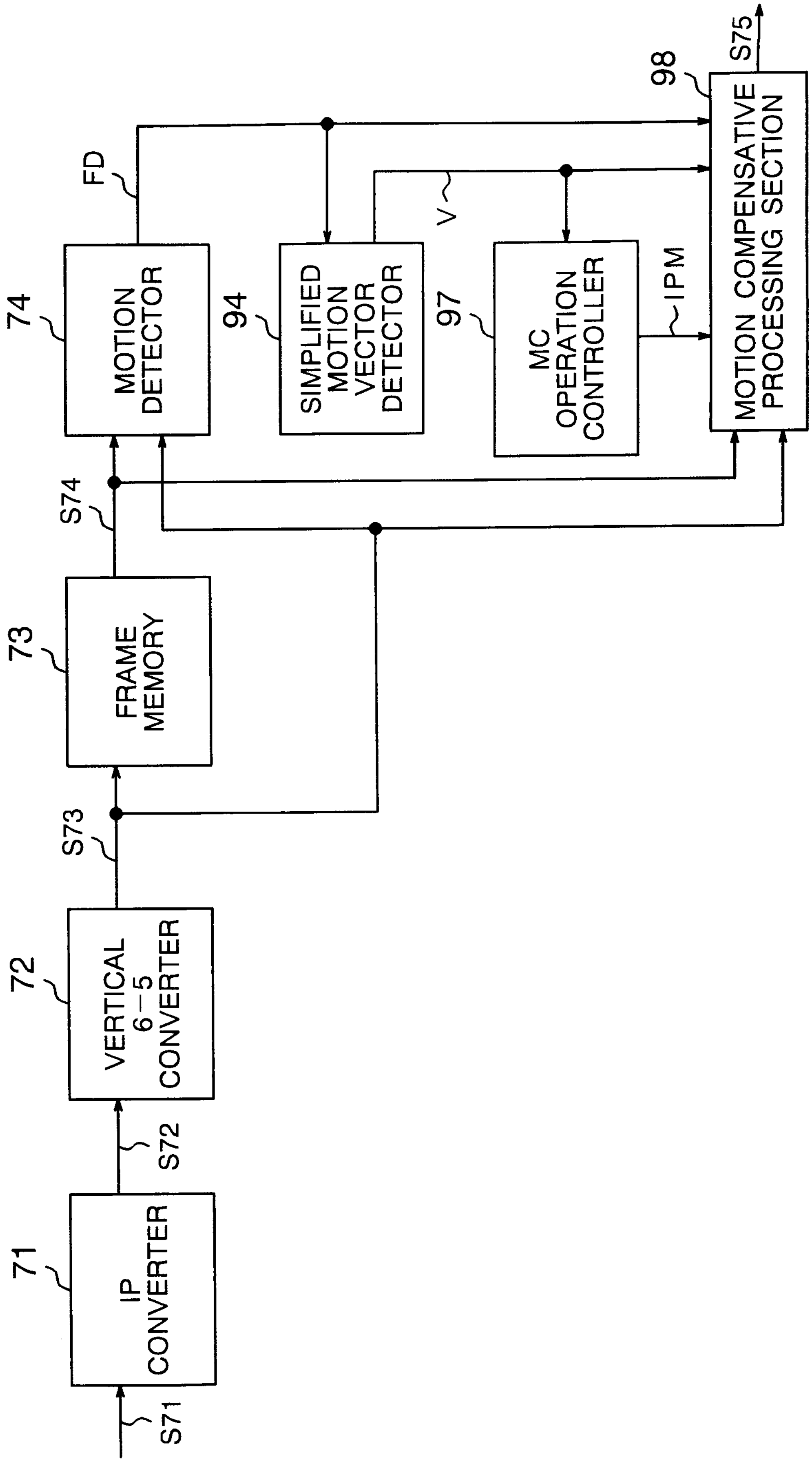

S71
71
IP CONVERTER
S72
72
VERTICAL 6−5 CONVERTER
S73
73
FRAME MEMORY
S74
74
MOTION DETECTOR
FD
94
SIMPLIFIED MOTION VECTOR DETECTOR
V
97
MC OPERATION CONTROLLER
IPM
98
MOTION COMPENSATIVE PROCESSING SECTION
S75

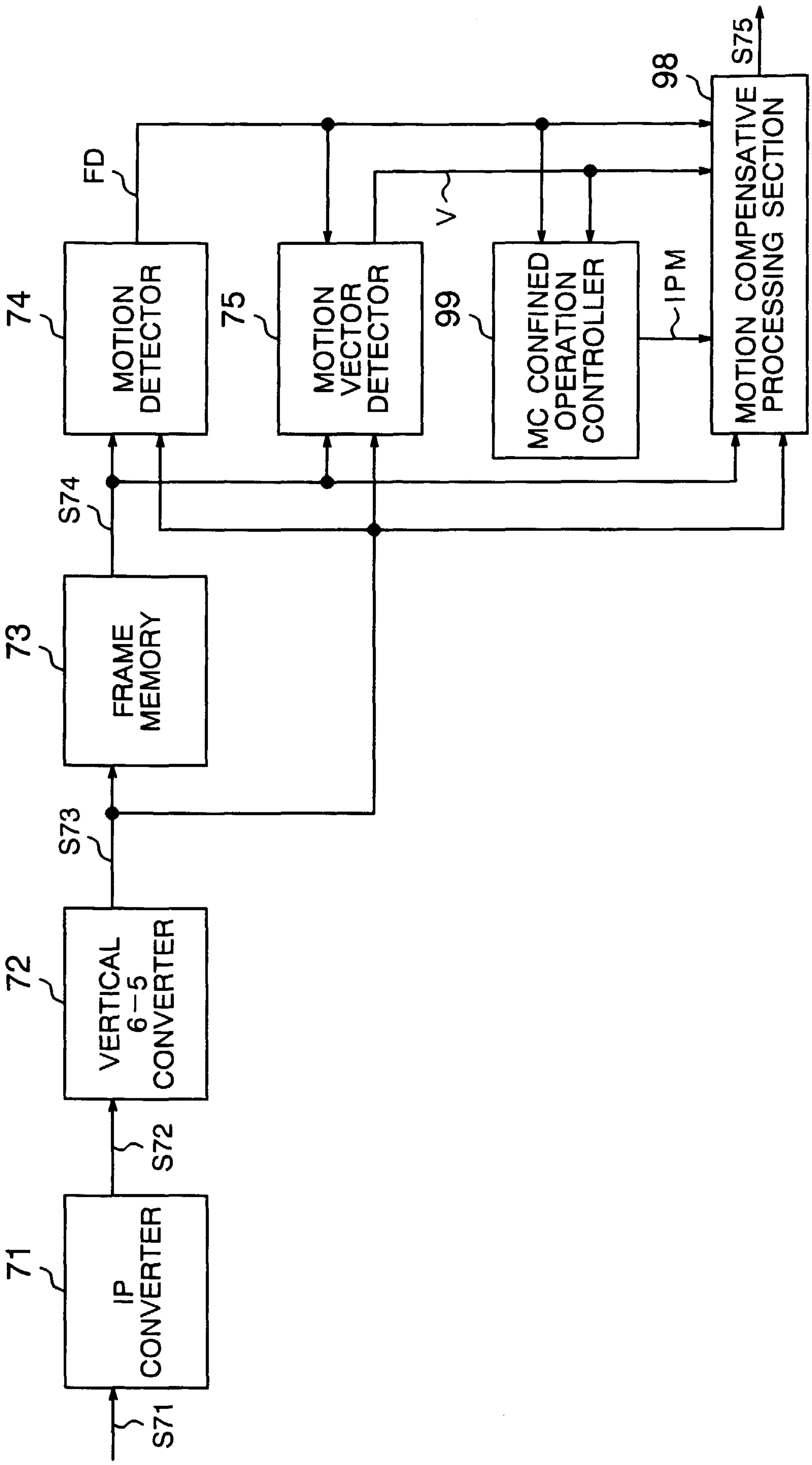
71
IP CONVERTER
S71
S72
72
VERTICAL 6−5 CONVERTER
S73
73
FRAME MEMORY
S74
74
MOTION DETECTOR
FD
75
MOTION VECTOR DETECTOR
V
99
MC CONFINED OPERATION CONTROLLER
IPM
98
MOTION COMPENSATIVE PROCESSING SECTION
S75

FIG. 48

FIG. 49

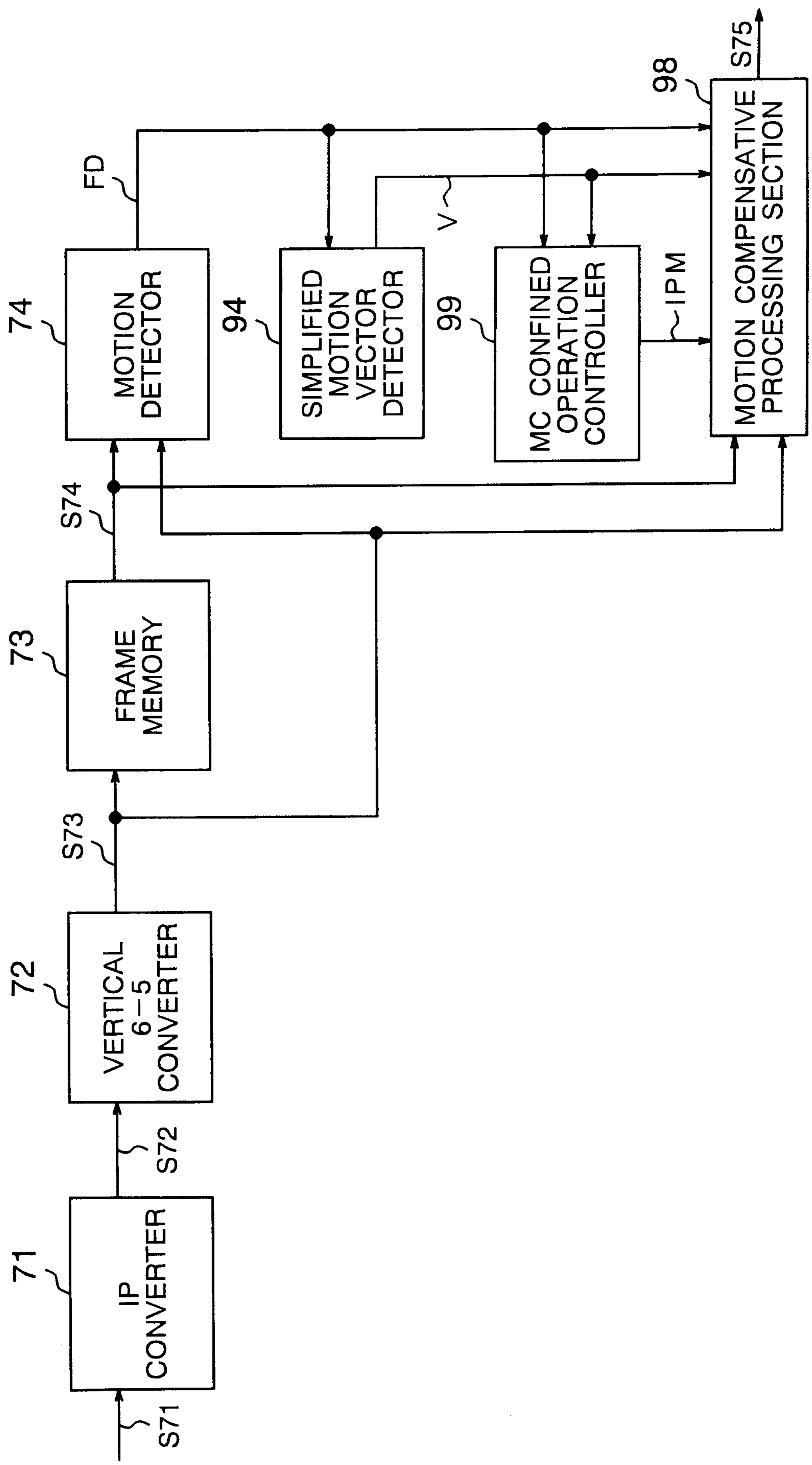

71
IP CONVERTER
S71
S72
72
VERTICAL 6−5 CONVERTER
S73
73
FRAME MEMORY
S74
74
MOTION DETECTOR
FD
94
SIMPLIFIED MOTION VECTOR DETECTOR
V
99
MC CONFINED OPERATION CONTROLLER
IPM
98
MOTION COMPENSATIVE PROCESSING SECTION
S75

FIG. 50

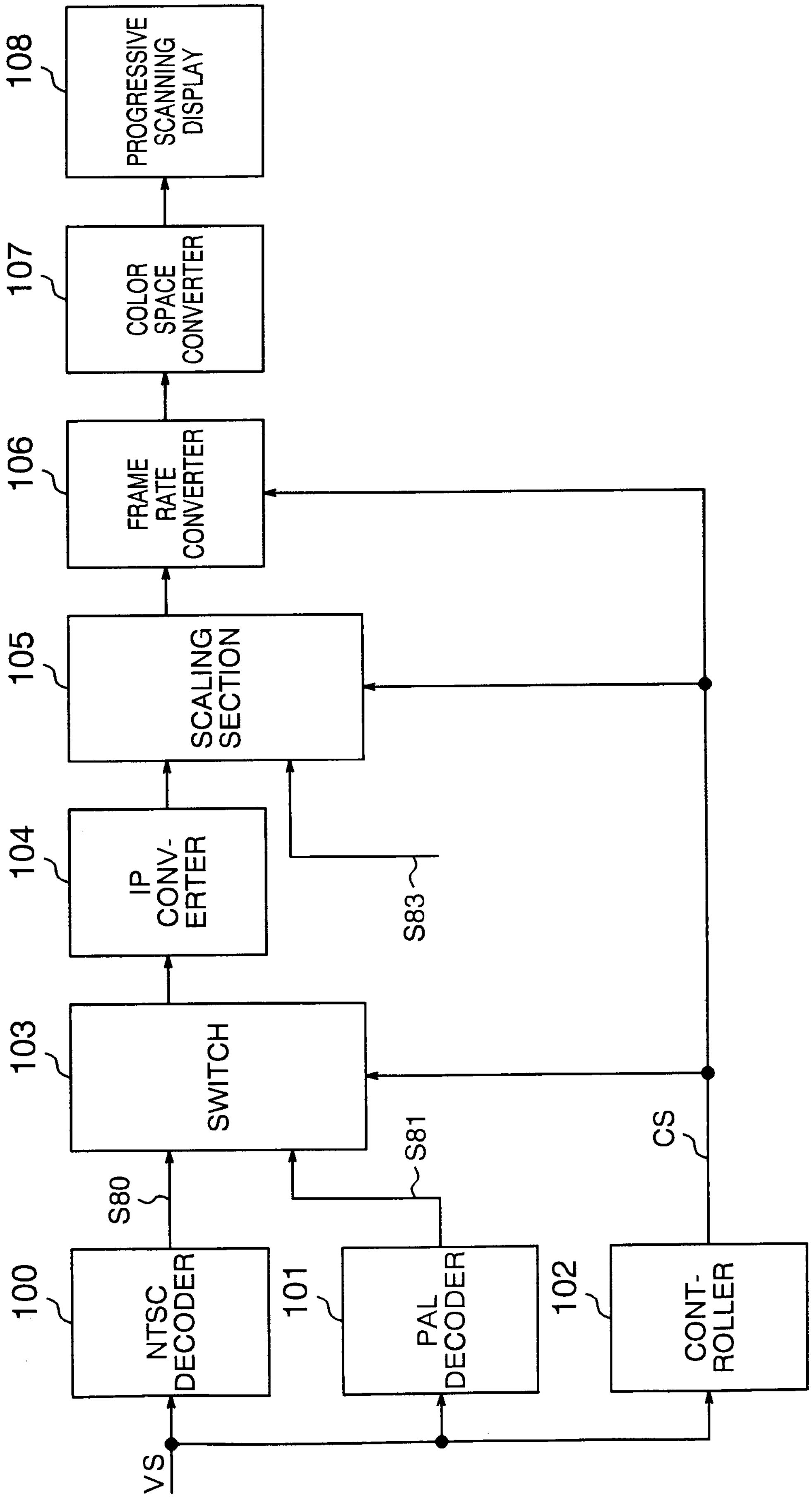
VS
100
NTSC DECODER
101
PAL DECODER
102
CONT-ROLLER
S80
S81
CS
103
SWITCH
104
IP CONV-ERTER
105
SCALING SECTION
S83
106
FRAME RATE CONVERTER
107
COLOR SPACE CONVERTER
108
PROGRESSIVE SCANNING DISPLAY

FIG. 51a

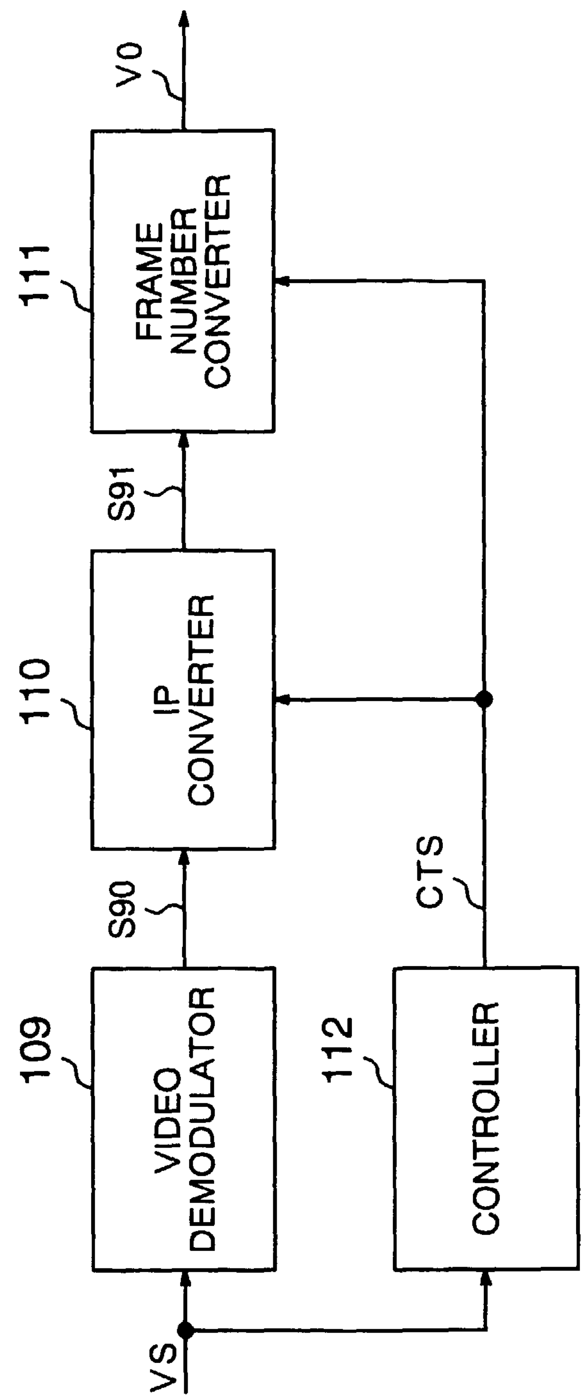
VIDEO DEMODULATOR
109
IP CONVERTER
110
FRAME NUMBER CONVERTER
111
CONTROLLER
112
VS
S90
S91
V0
CTS

# FIG. 51b

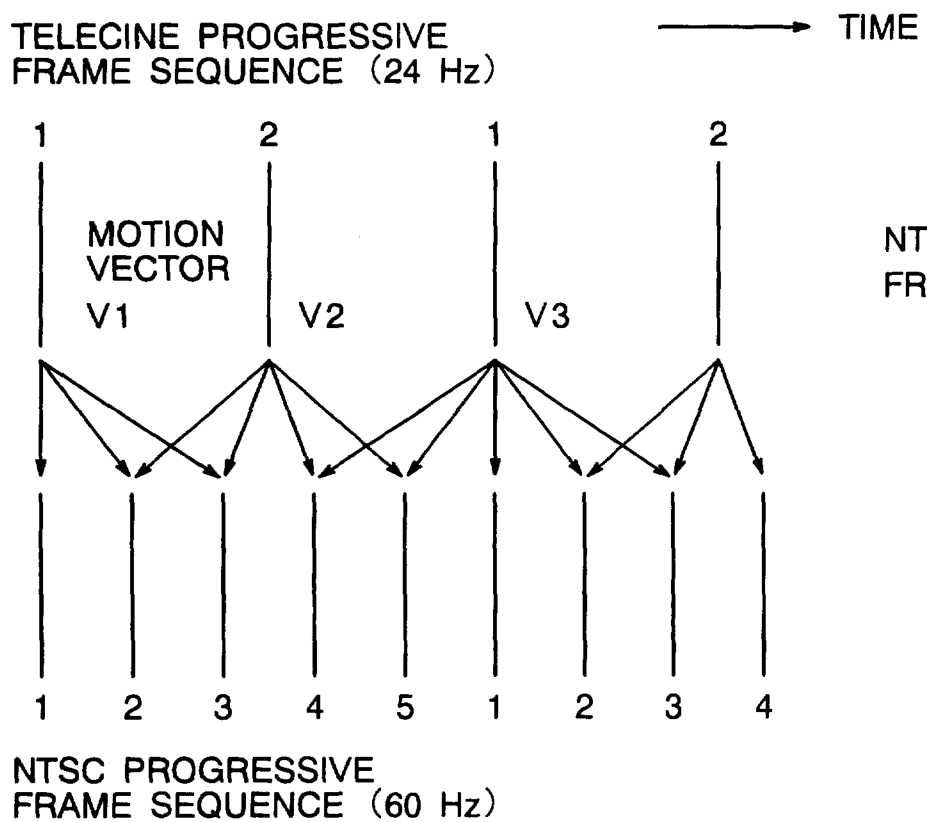


NTSC PROGRESSIVE FRAME GENERATION

| FRAME SEQUENCE | | |
|---|---|---|
| 1 | | |
| 2 | Vpr=2V1/5 | Vct=−3V1/5 |
| 3 | Vpr=4V1/5 | Vct=−V1/5 |
| 4 | Vpr=V2/5 | Vct=−4V2/5 |
| 5 | Vpr=3V1/5 | Vct=−2V1/5 |